(19) Europäisches Patentamt
European Patent Office
Office européen des brevets

(11) EP 1 632 948 A1

(12) EUROPEAN PATENT APPLICATION

(43) Date of publication:
08.03.2006 Bulletin 2006/10

(51) Int Cl.:
G11B 27/10 (2006.01)   G11B 27/30 (2006.01)

(21) Application number: 05107726.1

(22) Date of filing: 23.08.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 01.09.2004 JP 2004254900

(71) Applicant: KABUSHIKI KAISHA TOSHIBA
Tokyo 105-8001 (JP)

(72) Inventors:
• Kikuchi, Shinichi
  105-8001, Tokyo (JP)
• Nakashika, Masahiro
  105-8001, Toyko (JP)
• Tsumagari, Yasufumi
  105-8001, Tokyo (JP)
• Yoshida, Hitoshi
  105-8001, Tokyo (JP)

(74) Representative: Henkel, Feiler & Hänzel
Möhlstrasse 37
81675 München (DE)

(54) Information storage medium, information recording method, information playback method, information recording apparatus, and information playback apparatus

(57) This invention has as its object to be able to support stream recording/playback even when information associated with a reception time of a digital stream signal is not available. Management information of a storage medium is configured to include a flag bit (PATS_SS) indicating validity/invalidity of information (PATS) associated with a reception time of a digital stream signal.

FIG. 11

**Description**

The present invention relates to an information storage medium (or data structure), an information recording/playback method, and an information recording/playback apparatus, which are suited to record/play back a digital stream signal used in a digital TV broadcast or the like.

In recent years, TV broadcasting has entered the era of digital broadcasts having Hi-Vision programs (programs of high-definition AV information) as principal broadcast contents. The current digital broadcasting (and forthcoming terrestrial digital broadcast) adopts an MPEG2 transport stream (to be abbreviated as MPEG-TS hereinafter). In the field of digital broadcasting using moving pictures, MPEG-TS will be used as a standard format in the future. At the start of such digital TV broadcasting, market needs for a streamer that can directly record digital TV broadcast contents are increasing.

As an example of a streamer that utilizes an optical disc such as a DVD-RAM or the like, a recording/playback apparatus (Jpn. Pat. Appln. KOKAI Publication No. 2002-84479) is known.

Different digital broadcast schemes are adopted in respective countries: for example, DVB (Digital Video Broadcasting) in Europe; ATSC (Advanced Television Systems Committee) in U.S.A.; and ARIB (Association of Radio Industries and Businesses) in Japan.

In DVB, the video format is MPEG2, the resolutions are 1152*1440i, 1080*1920(i, p), 1035*1920, 720*1280, (576, 480)*(720, 544, 480, 352), and (288, 240)*352, the frame frequencies are 30 Hz and 25 Hz, the audio format includes MPEG-1 audio and MPEG-2 Audio, and the sampling frequencies are 32 kHz, 44.1 kHz, and 48 kHz.

In ATSC, the video format is MPEG2, the resolutions are 1080*1920(i, p), 720*1280p, 480*704(i, p), and 480*640(i, p), the frame frequencies are 23.976 Hz, 24 Hz, 29.97 Hz, 30 Hz, 59.94 Hz, and 60 Hz, the audio format includes MPEG1 Audio Layer 1 & 2 (DirecTV) and AC3 Layer 1 & 2 (Primstar), and the sampling frequencies are 48 kHz, 44.1 kHz, and 32 kHz.

In ARIB, the video format is MPEG2, the resolutions are 1080i, 720p, 480i, and 480p, the frame rates are 29.97 Hz and 59.94 Hz, the audio format includes AAC (MPEG-2 Advanced Audio Coding), and the sampling frequencies are 48 kHz, 44.1 kHz, 32 kHz, 24 kHz, 22.05 kHz, and 16 kHz.

In this manner, streams to be decoded by the apparatus side have many different variations for respective areas, and if all these variations are supported, the recording/playback apparatus (e.g., a DVD recorder) becomes considerably heavy (or complicated). As a result, the apparatus cost increases.

Also, the accuracy of information (PATS) associated with the reception time of a digital stream signal is determined, and a digital stream signal which has no PATS when it is input from, e.g., an I/F such as IEEE1394 or the like or which has 4-byte accuracy cannot be supported.

In case of stream recording, since the recorder itself does not encode, the position of a sequence header (SH) is unknown. Hence, upon making playback based on entry information (SOBU_ENT and the like), an SH is unlikely to be found.

It is one object of the present invention to provide an information storage medium (or data structure), an information recording/playback method, and an information recording/playback apparatus, which can support stream recording/playback even when no information associated with the reception time of a digital stream signal is available.

According to an embodiment of the present invention, management information of a storage medium is configured to include a flag bit (PATS_SS) indicating the validity/invalidity of information (PATS) associated with the reception time of a digital stream signal, information (ESOB_DCNI) associated with discontinuity of the digital stream signal, or information (SOBU_SH_EXIST_Flag) associated with the sequence header.

A playback process according to the accuracy of the information (PATS) associated with the reception time of a digital stream signal can be made. Also, even when a sequence header (SH) has been changed, playback is allowed.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a view for explaining the data structure according to an embodiment of the present invention;
FIG. 2 is a view for explaining the relationship among a playback management information layer, object management information layer, and object layer in the data structure according to the embodiment of the present invention;
FIG. 3 is a view for explaining the file structure according to the embodiment of the present invention;
FIG. 4 is a view for explaining an example of the configuration of a field (HDVR_MGI) of one management information (HDVR_MG) recorded on AV data management information recording area 130;
FIG. 5 is a view for explaining a practical example of DISC_RSM_MRKI;
FIG. 6 is a view for explaining a practical example of EX_DISC_REP_PICI;
FIG. 7 is a view for explaining a practical example of EX_PL_SRPT;

FIG. 8 is a view for explaining an example of the configuration of another field (EX_M_AVFIT) of one management information (HDVR_MG) in the data structure according to the embodiment of the present invention;

FIG. 9 is a view for explaining a practical example of EVOB_TMAP_GI;

FIG. 10 is a view for explaining an example of the configuration of an ESTR_FIT;

FIG. 11 is a view for explaining a practical example of HR_SFIxx.IFO;

FIG. 12 is a view for explaining an example of the configuration of ESOBI_GI;

FIG. 13 is a view for explaining various kinds of information included in the ESOSI_GI;

FIG. 14 is a view for explaining an example of the configuration of ESOB_ESI;

FIG. 15 is a view for explaining an example of the configuration of ESOB_V_ESI and an example of the configuration of video attribute V_ATTR included in this ESOB_V_ESI;

FIG. 16 is a view for explaining an example of the configuration of ESOB_A_ESI and an example of the configuration of audio attribute AUDIO_ATTR included in this ESOB_A_ESI;

FIG. 17 is a view for explaining an example of the configuration of ESOB_OTHER_ESI;

FIG. 18 is a view for explaining an example of the configuration of copy control information (copyright protection information) CP_CTL_INFO;

FIG. 19 is a view for explaining a practical example of ESOB_DCNI;

FIG. 20 is a view for explaining a practical example of ESOB_PATSI;

FIG. 21 is a view for explaining an example of the configuration of ESOB_GPI;

FIG. 22 is a view for explaining an example of the configuration of ESOB_GPI_GI, GPI_SRP#, and GPI#;

FIG. 23 is a view for explaining an example of the configuration of ESOB_TMAPI;

FIG. 24 is a view for explaining an example of the configuration of ESOB_TMAP;

FIG. 25 is a view for explaining an example of the configuration of HR_VTMAP.IFO and HR_STMAPx.IFO included in the DVD_HDVR directory;

FIG. 26 is a view for explaining an example of the configuration of EX_VTMAPTI, each EX_VTMAP_SRP#, and each EX_VTMAPI;

FIG. 27 is a view for explaining an example of the configuration of the contents of each EVOBU_ENT#;

FIG. 28 is a view for explaining an example of the configuration of various kinds of information included in STMAPT (type A);

FIG. 29 is a view for explaining an example of the configuration of various kinds of information included in STMAPT (type B);

FIG. 30 is a view for explaining an example of information stored in EIMAPI_GI and ES_TMAPI#;

FIG. 31 is a view for explaining an example (example 1 of type A) of the configuration of the contents of ESOBU_ENT#;

FIG. 32 is a view for explaining another example (example 2 of type A) of FIG. 31;

FIG. 33 is a view for explaining still another example (examples 1 and 2 of type B) of FIG. 31;

FIG. 34 is a view for explaining an example of the configuration of PGC information (EX_ORG_PGC information and EX_playlist information/EX_UD_PGC information) included in HDVR_VMG;

FIG. 35 is a view for explaining an example of the configuration of EX_PGC information;

FIG. 36 is a view for explaining a practical example of EX_CI;

FIG. 37 is a view for explaining a practical example of C_EPI;

FIG. 38 is a view for explaining an example of the configuration of a data unit (ESOBU) for a stream object;

FIG. 39 is a view for explaining a practical example of PKT_GRP_GI;

FIG. 40 is a view for explaining an example of the configuration of copy control information CCI# included in a packet group header;

FIG. 41 is a view for explaining a practical example of the configuration of First_PATS_EXT;

FIG. 42 is a view for explaining a practical example of MNI;

FIG. 43 is a block diagram for explaining an example of an apparatus for recording and playing back AV information (digital TV broadcast program and the like) on and from an information storage medium (optical disc, hard disc, or the like) using the data structure according to the embodiment of the present invention;

FIG. 44 is a flowchart (overall operation process flow) for explaining an example of the overall operation of the apparatus shown in FIG. 43;

FIG. 45 is a flowchart (edit operation process flow) for explaining an example of an edit process (ST28);

FIG. 46 is a flowchart for explaining an example of a video recording operation (part 1);

FIG. 47 is a flowchart for explaining an example of a video recording operation (part 2);

FIG. 48 is a flowchart (buffer fetch process flow) for explaining an example of a buffer fetch process (ST130);

FIG. 49 is a flowchart (buffer fetch process flow) for explaining another example of FIG. 48;

FIG. 50 is a flowchart (PKT_GRP_GI setting process flow) for explaining an example of a packet group general information setting process (ST1340);

FIG. 51 is a flowchart (ESI setting process flow) for explaining a stream information (ESI) generation process (ST120);

FIG. 52 is a flowchart for explaining an example of a stream file information (STR_FI) generation process in a video recording end process (ST150);

FIG. 53 is a flowchart for explaining an example GPI setting process ST1530;

FIG. 54 is a flowchart for explaining an example TMAP setting process ST1540;

FIG. 55 is a flowchart for explaining EVOB/ESOB structure setting process ST15400;

FIG. 56 is a flowchart for explaining CP_CTL_INFO generation process ST1220;

FIG. 57 is a flowchart (program setting process flow) for explaining an example of a program chain (PGC) generation process (including a program setting process) in the video recording end process (ST150);

FIG. 58 is a flowchart (overall playback operation flow) for explaining an example of a playback operation;

FIG. 59 is a flowchart for explaining decoder setting process ST217;

FIG. 60 is a flowchart for explaining an example of a process upon cell playback;

FIG. 61 is a flowchart for explaining an example of a data transfer process from a buffer RAM to a decoder;

FIG. 62 is a flowchart for explaining an example of a GP switching setting process;

FIG. 63 is a flowchart for explaining an example of a discontinuity process;

FIG. 64 is a flowchart for explaining an example of a skip process; and

FIG. 65 is a view for explaining the contents of an ESOBU (type A).

Various embodiments of the present invention will be described hereinafter with reference to the accompanying drawings. An MPEG-TS scheme as a basic format common to broadcast schemes which broadcast (distribute) compressed moving picture data such as digital TV broadcast, broadcast that uses a wired network such as the Internet or the like, and so on is divided into a packet management data field and payload.

The payload includes data to be played back in a scrambled state. According to ARIB, a PAT (Program Association Table), PMT (Program Map Table), and SI (Service Information) are not scrambled. Also, various kinds of management information are generated using the PMT and SI (SDT: Service Description Table, EIT: Event Information Table, BAT: Bouquet Association Table).

The contents to be played back include MPEG video data, Dolby AC3 audio data, MPEG audio data, data broadcast data, and the like. Also, the contents include information required upon playback (e.g., PAT, PMT, SI, and the like) although they are not directly related to the contents to be played back. The PAT includes the PID (Packet Identification) of the FMT for each program, and the PMT records the PIDs of video data and audio data.

A normal playback sequence of an STB is as follows. That is, when the user determines a program based on EPG information, the PAT is loaded at the start time of the target program. The PID of a PMT, which belongs to the desired program, is determined on the basis of that data, and the target PMT is read out in accordance with that PID. Then, the PIDs of video and audio packets to be played back, which are included in the PMT, are determined. Video and audio attributes are read out based on the PMT and SI and are set in respective decoders. The video and audio data are extracted and played back in accordance with their PIDs. Note that the PAT, PMT, SI, and the like are transmitted at intervals of several 100 ms since they are also used during playback.

Different digital broadcast schemes are adopted in respective countries: for example, DVB (Digital Video Broadcasting) in Europe; ATSC (Advanced Television Systems Committee) in U.S.A.; and ARIB (Association of Radio Industries and Businesses) in Japan.

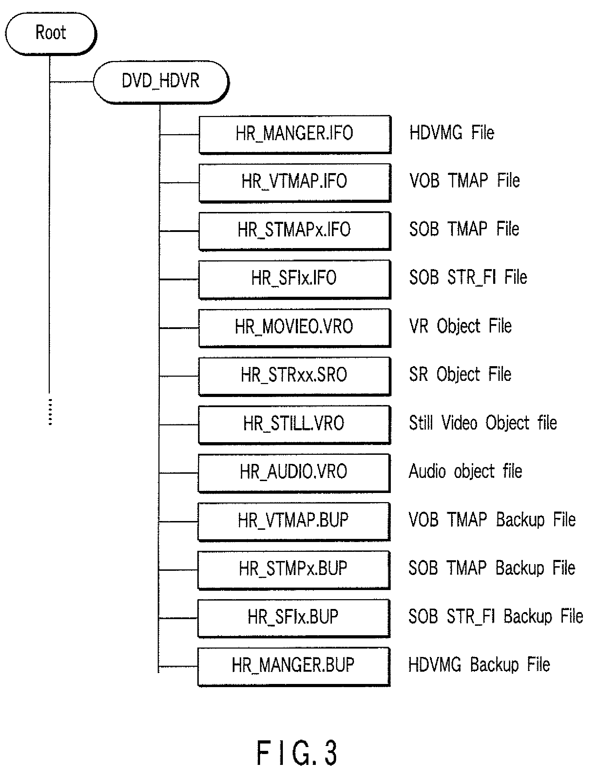

In this manner, digital broadcast schemes are different in different countries, and may be different for respective broadcast stations. For this reason, a recorder must record objects as files in accordance with each individual scheme to be used. For this reason, files to be added to the existing VR file configuration are HR_SFIx.IFO and HR_SFIx.bup, as shown in FIG. 3, whose "x" indicates to allow the presence of a plurality of files. Hence, such files are added for respective broadcast schemes. When "x" = 00, these files are used when the broadcast scheme is unknown or the recorder does not support that broadcast scheme. In this case, a stream is saved as a stream (SOB_STRB) of TYPE B.

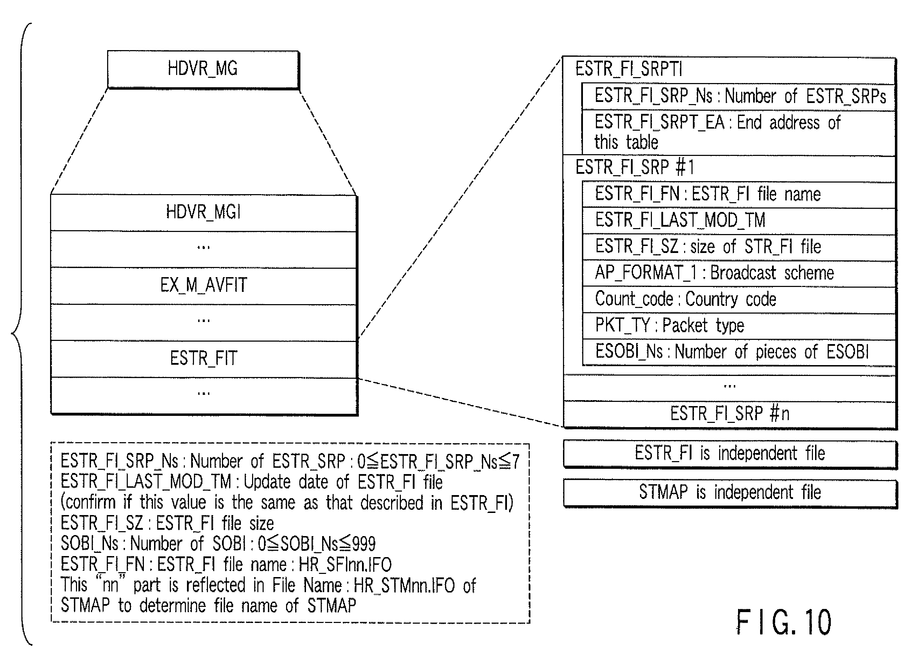

Hence, since ESTR_FI as management information for a digital broadcast is changed for each broadcast station (or each broadcast scheme), a plurality of pieces of ESTR_FI exist. In order to designate an ESTR_FI file to be used, ESTR_FI_SRP information exists, and its structure is a file name of ESTR_FI: ESTR_FI_FN, update date information of the ESTR_FI file: ESTR_FI_LAST_MOD_TM, an ESTR_FI file size: ESTR_FI_SZ, AP_FORMAT_1 as broadcast scheme information, country code, packet type, and the number of pieces of SOBI, as shown in FIG. 10. Note that the update date information is also set in the ESTR_FI file. When ESTR_FI is changed upon editing, that value is updated. Upon playback, the updated value is compared with the value in the ESTR_FI file. If the two values are the same, playback is permitted. The number of pieces of ESTR_FI is seven or less, and the number of pieces of S08I is 999 or less. A part "nn" of ESTR_FI file name: HR_SFInn.IFO is reflected in File Name: HR_STMnn.IFO of an STMAP, thus determining the file name of the STMAP.

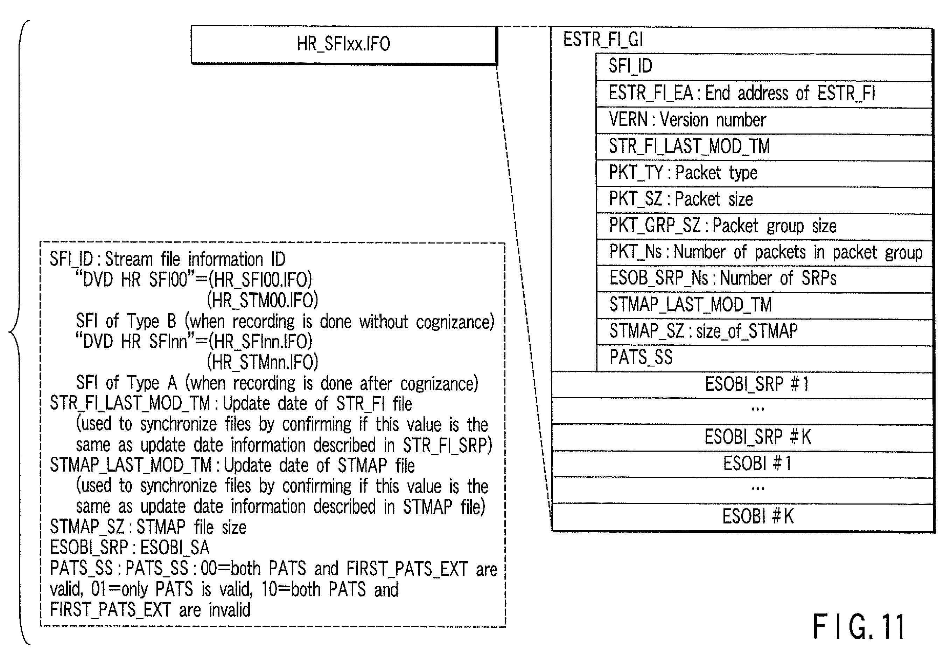

As shown in FIG. 11, the ESTR_FI file (HR_SFIxx.IFO) has the same configuration as that of normal ESTR_FI. Furthermore, in case of a cognizable stream (TYPE A: STRA), a TMAP can be generated on the PTM base. However, in case of a non-cognizable stream (when data cannot be descrambled or when data of a scheme different from the assumed broadcast station is input) (TYPE B: STRB), the TMAP may be generated on a reception time (PATS) base in place of PTM base. However, since the PATS is not a playback time, special playback or the like cannot be accurately made, but it can be roughly made.

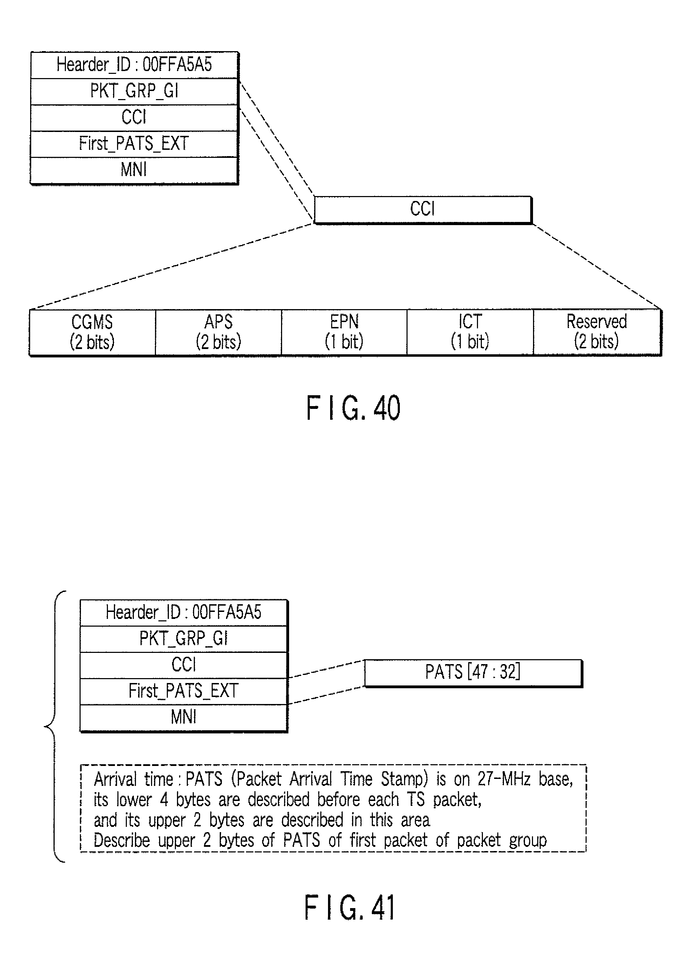

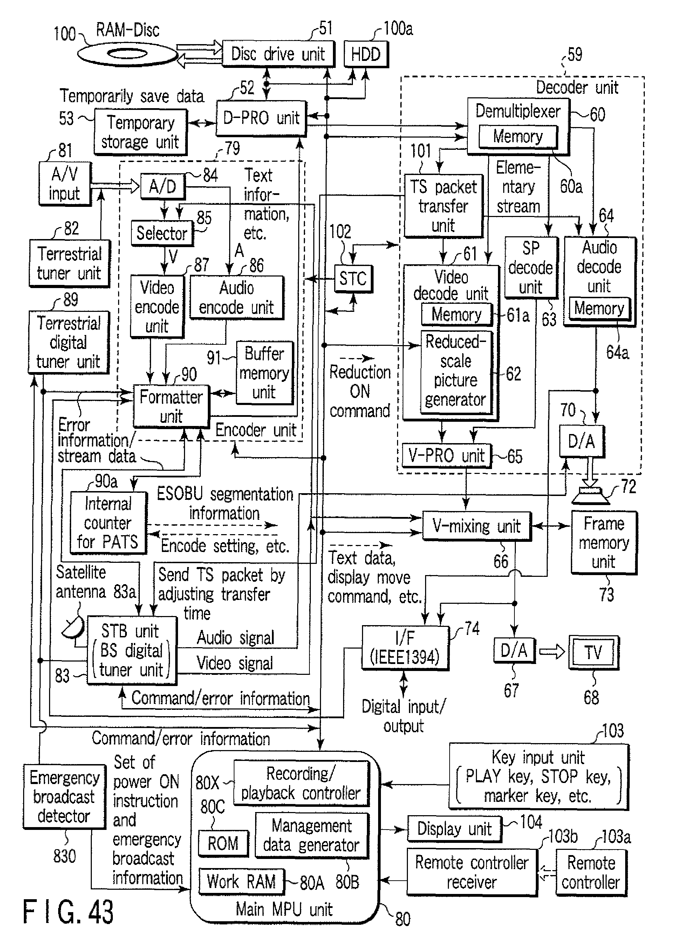

In FIG. 11, PATS_SS includes a value indicating the accuracy of the PATS. For example, when an apparatus shown in FIG. 43 to be described later fetches data itself of a network, IEEE1394, or the like, the PATS includes 4 bytes or is a dummy in some cases. In order to cope with such case, PATS_SS values "00 = both PATS and FIRST_PATS_EXT (see FIG. 41) are valid: accuracy 6 bytes)", "01 = only PATS is valid: accuracy 4 bytes", and "10 = both PATS and FIRST_PATS_EXT are invalid: no accuracy" are prepared.

As one feature of digital broadcasting, for example, multi-view broadcasting is known. In multi-view broadcasting, a plurality of video data are broadcasted at the same time (by time sharing), and the user can play back one of these video data of his or her choice. In this manner, the user can select one of a plurality of contents according to his or her desire. For example, when a recorder receives, as one TS, streams X, Y, and Z as multi-view broadcast and stream U as rain attenuation broadcast, the control must be made to allow the user to select and play back a required stream upon playback, and to freely switch among streams using a key. To cope with this, grouping information (GPI) is added to achieve this object.

Furthermore, a DVD recorder normally has TMAPI as EVOB management information. This information is used to divide EVOB/ESOB for each EVOBU/ESOBU and to implement playback, special playback, and the like for that unit, and a maximum of one information is required per 0.5s. For this reason, if the disc size increases in the future or a compression method with high compression efficiency is adopted, the number of pieces of TMAPI increases, and complicated management is required when an edit process or the like is made. If TMAPI is stored in IFO, management data in other non-related fields must be moved or rewritten every time TMAPI is changed, resulting in poor efficiency. In order to improve such situation, TMAPI is recorded in an independent field.

Moreover, a video recorder may have unique functions which are not described in the DVD format depending on the manufacturers and models, and may be differentiated from other manufacturers. In this case, manufacturer unique information must be embedded in object data. Hence, in the embodiment of the present invention, MNFI (Manufacturer's Information) is assured in a packet group header as its field.

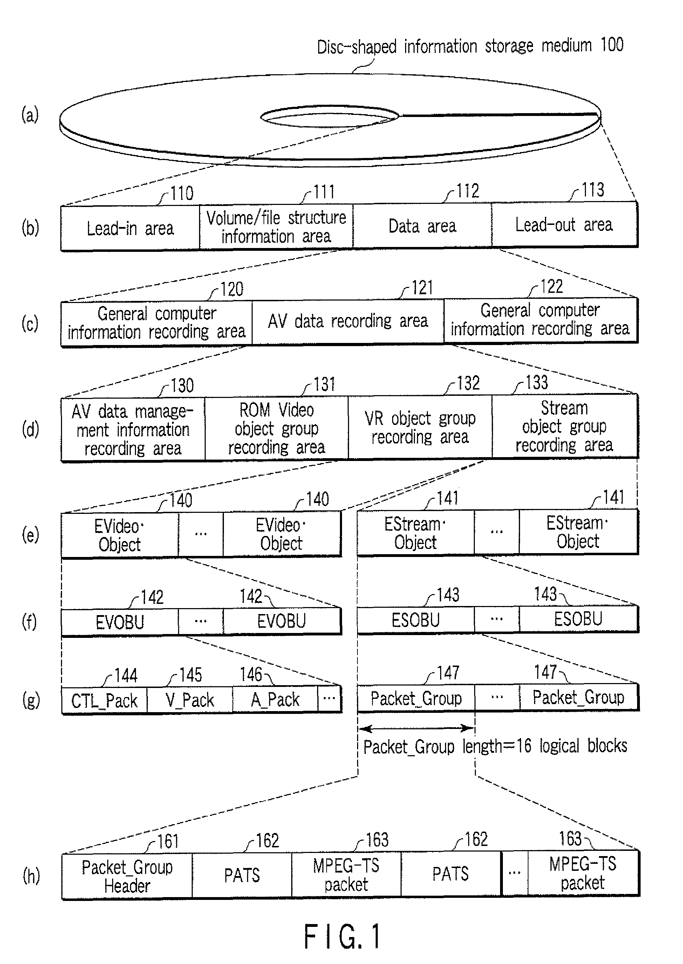

As shown in FIG. 1, data in a DVD disc include a volume/file structure information area that stores a file system, and a data area that actually records data files. The file system includes information indicating the recording locations of files. The data area is divided into areas that record general computer data, and an area that records AV data. The AV data recording area includes an AV data management information area that stores a VMG file used to manage AV data, a VR object group recording area that records object data (EVOBS) files (VRO files) complying with the video recording standard, and a recording area that records stream object data (ESOBS: Extended Stream Object Set) files (SRO files) which record objects (ESOBS) compatible to digital broadcast. Note that different directories are prepared in correspondence with formats (e.g., VIDEO-TS for DVD-Video (ROM Video) and DVD-RTAV for DVD-RTR (recordable/reproducible DVD), and the digital broadcast compatible DVD standard to be described below is recorded in, e.g., a DVD_HDVR directory.

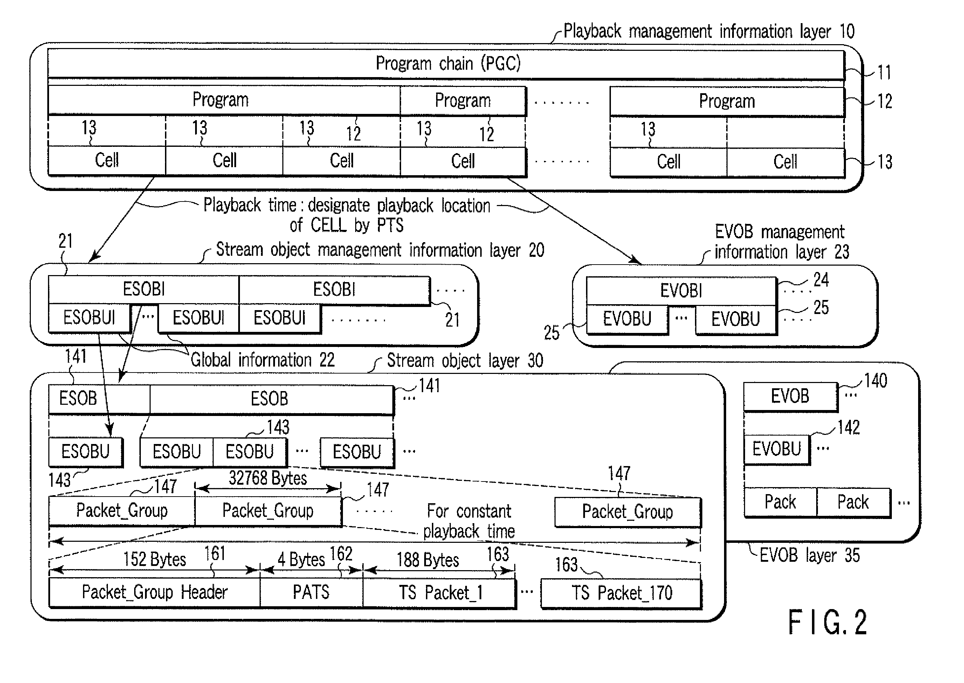

That is, as shown in FIG. 3, a DVD_HDVR directory records a VMG file used to manage data, VRO files as object files for analog recording of analog broadcast data, line-in data, and the like, and an SRO file as a digital broadcast object. The SRO file records an SOBS (Stream Object Set). As shown in FIG. 2, management data is recorded in the VMG file common to VR, and undergoes control common to VR. The management data is linked for each cell, and the playback location is designated for each playback time. This management data is called VR_MANEGER.IFO. When a TMAPT is recorded as an independent file, HR_VTMAP. IFO and HR_STMAP. IFO, and HR_VTMAP. BUP and HR_STMAP. BUP as their backup files are added, as shown in FIG. 3.

The structure of each ESOBU includes one or more ESOB data. Each ESOB corresponds to, e.g., one program. The ESOB includes one or more ESOBUs (Extended Stream object units), each of which corresponds to object data for a given time interval (which changes depending on the value of ESOBU_PB_TM_RNG) or one or more GOP data. When the transfer rate is low, one GOP data cannot often be sent within 1s (1 second) (VR can freely set the data unit configuration since it adopts internal encoding, but digital broadcast cannot specify the next incoming data since encoding is done by a broadcast station). On the other hand, the transfer rate may be high, and I-picture data may be sent frequently. In such case, the ESOBU is delimited frequently, and ESOBU management information increases accordingly, thus ballooning the whole management information. For this reason, it is appropriate to delimit ESOBUs by a given time interval (a minimum limitation is to delimit ESOBUs by picture data except for the last ESOBU of the ESOB: the delimitation unit corresponds to a picture unit (e.g., for each sec)) determined by a total video recording time or by one or more GOP data. When management information is formed on the PATS base in case of a non-cognizable stream, the ESOBUs are delimited at time intervals indicated by SOBU_PATS_TM_RNG. There are two types of SOBU_PATS_TM_RNG: designated in seconds or by a 27-MHz count value.

In this embodiment, one ESOBU includes one or more packet groups, each of which corresponds to 16 logical blocks (1 LB = 2048 bytes; 16 LBs = 32640 bytes). Each packet group includes a packet group header and (170) TS packets. The arrival time of each TS packet can be expressed by a PAT (Packet Arrival Time: 4 bytes) which is allocated before each TS packet.

The arrival times of TS packets must be linearly counted up until a video recording end time to have a video recording start time as 0 (or a predetermined value). For this reason, when a plurality of programs are recorded all at once during video recording or in case of an edited program or the like, a system time counter suffers discontinuity (STC discontinuity). In this case, STC adjustment is required. Even in such case, the transfer time must be linearly increased. In order to meet such requirement, a method of executing processes using an internal counter (90a in an embodiment shown in FIG. 43) which is free from STC transfer (changeover), and a method of dividing an ESOB upon changeover are available. However, in case of linear counting, the count interval of the internal counter must be synchronized with that of the STC which corresponds to the interval between neighboring PCR fetch timings in a playback synchronized state.

Upon dividing an ESOB, the discontinue timing must be accurately detected. However, a packet group can include a maximum of two ESOBs. That is, packet groups need not be aligned for respective ESOBs.

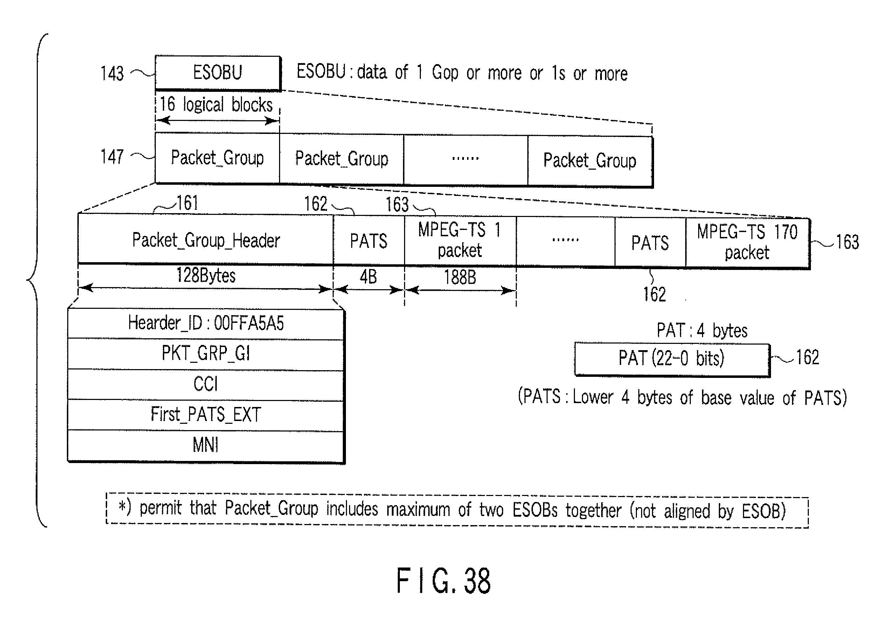

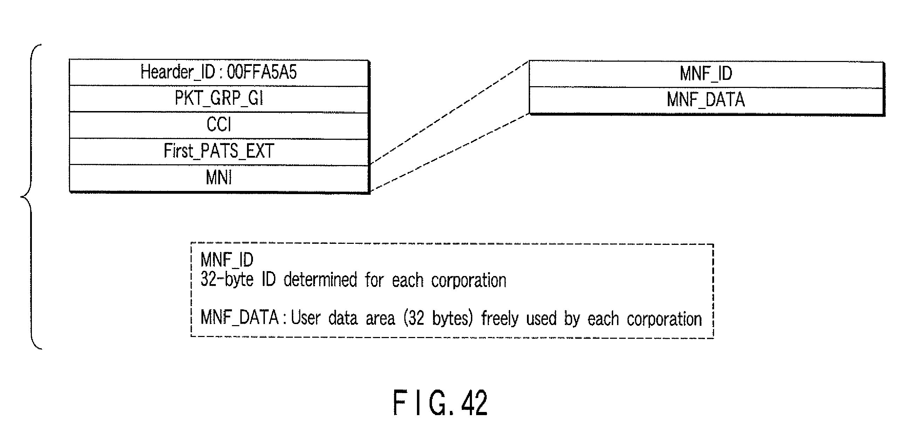

As shown in FIGS. 38 to 42, a packet group header sets a sync pattern at the head of a packet group, and includes PKT_GRP_GI, copy management information CCI (Copy Control Information), FIRST_PATS_EXT, and MNI (manufacturer's information).

The PKT_GRP_GI includes PKT_GRP_TY: a packet group type (1: MPEG-TS), VERSION: a DVD BOOK version number, PKT_GRP_SS: status information of the packet group, Valid_PKT_Ns: the number of valid packets in the packet group, and FIRST_PATS_EXT: the upper 2 bytes of the PATS for the first packet.

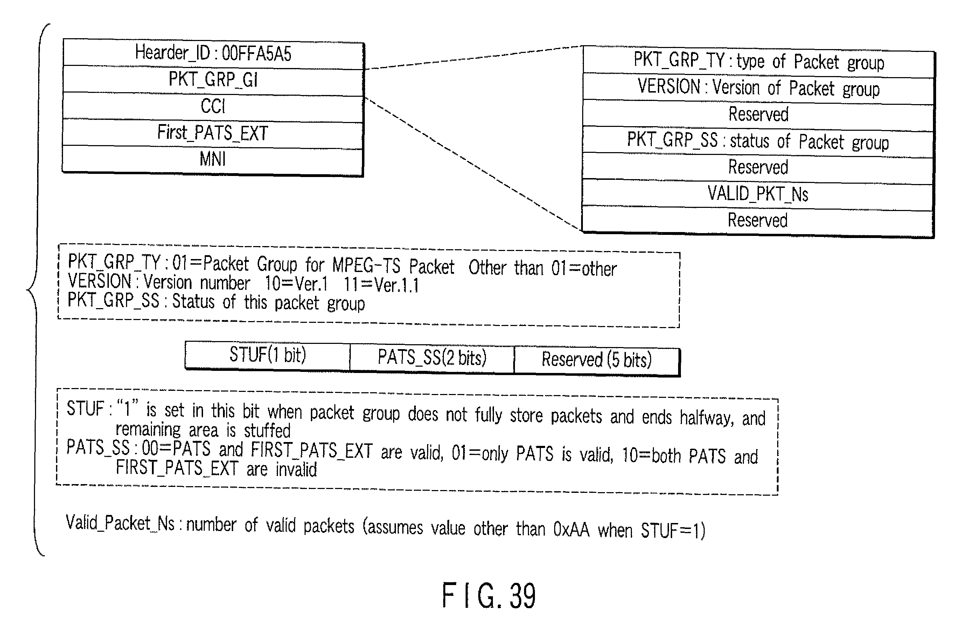

Furthermore, PKT_GRP_SS (FIG. 39) includes STUF: a bit indicating if stuffing is done (if this bit is set, it indicates that Valid_PKT_Ns assumes a value other than 0xAA), and PATS_SS (see FIG. 11): a value indicating the accuracy of the PATS (00 = both PATS and FIRST_PATS_EXT are valid: accuracy 6 bytes), 01 = only PATS is valid: accuracy 4 bytes, and 10 = both PATS and FIRST_PATS_EXT are invalid: no accuracy).

CCI (FIG. 40) may store digital copy control (00 = copy never, 01 = copy once, 11 = copy free), analog copy control (00 = no APS, 01 = APS type 1, 10 = APS type 2, 11 = APS type 3), EPN (0 = contents protection, 1 = no contents protection), and ICT (0 = analog video output resolution constraint, 1 = no constraint). Note that APS is an abbreviation for "Analog Protection System", and the embodiment of the present invention assumes Macrovision.

The MNFI includes MNF_ID and MNF_DATA. The MNF_ID is a value representing each manufacturer. The MNF_DATA after the MNF_ID is a data field which can be freely set for each corporation. FIRST_PATS_EXT (FIG. 41) corresponds to the upper 2 bytes of the arrival time of the packet at the head of the packet group, and the remaining 4 bytes are assigned before each packet. In this manner, the playback process with an accurate time is allowed.

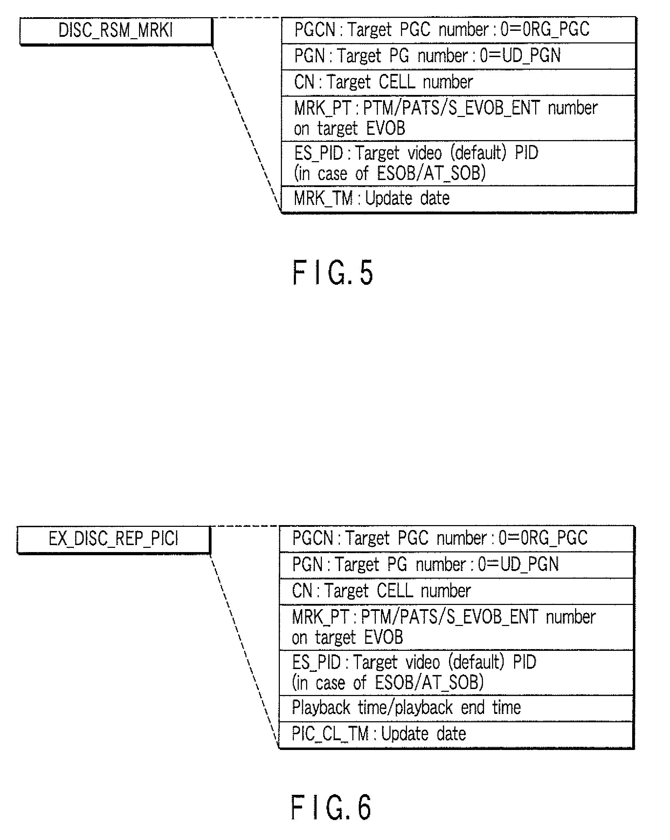

FIG. 5 is a view for explaining a practical example of resume mark information (DISC_RSM_MRKI) in disc 100 shown in FIG. 1. In this example, DISC_RSM_MRKI is configured to include, as resume information, program chain number PCGN, program number PGN, cell number CN, mark information MRK_PT, the PID of target video data to be resumed, resume mark update date MRK_TM, and the like.

FIG. 6 is a view for explaining a practical example of extended disc representative picture information (EX_DISC_REP_PICI). In this example, EX_DISC_REP_PICI is configured to include, as disc representative picture information, program chain number PCGN, program number PGN, cell number CN, representative picture information PIC_PT, the PID of target video data, the playback time and/or playback end time of the representative picture, representative picture update (creation) date information PIC_CL_TM, and the like.

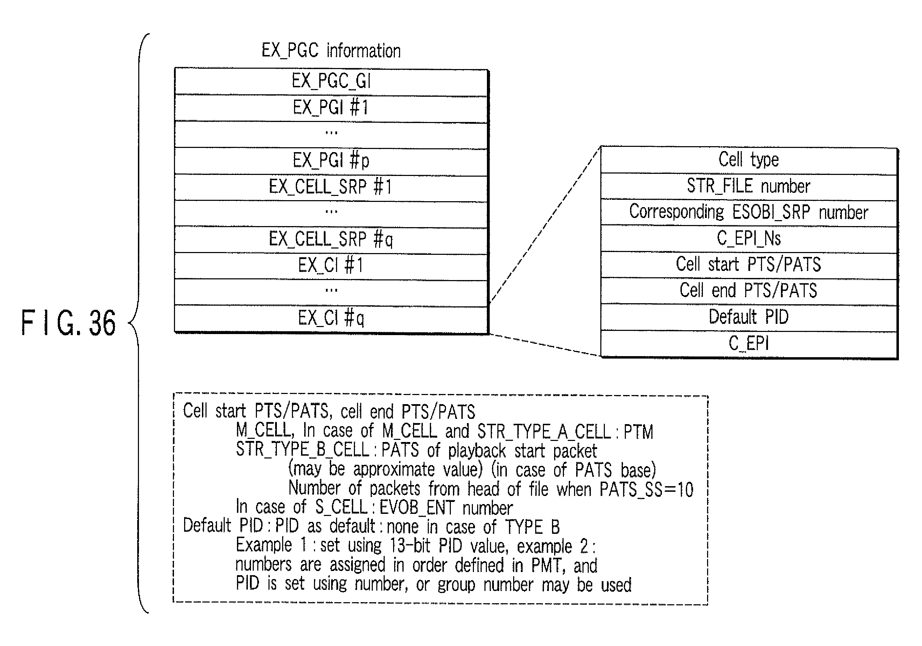

The management information will be described below with reference to FIGS. 3 to 37.

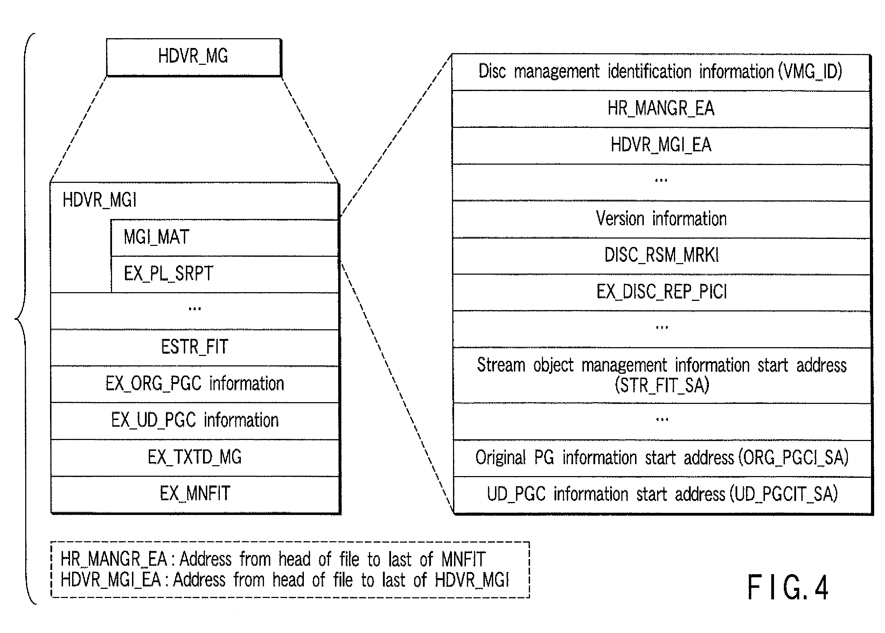

As shown in FIG. 3, the HDVR directory stores HR_MANGER.IFO as a DVD management information file, VRO files as analog video object files, and an SRO file that supports digital broadcast. As shown in FIG. 4, in the VMG file as the management information, an ESTR_FIT (Extended Stream File Information table) is added to the management information of the conventional DVD-VR standard.

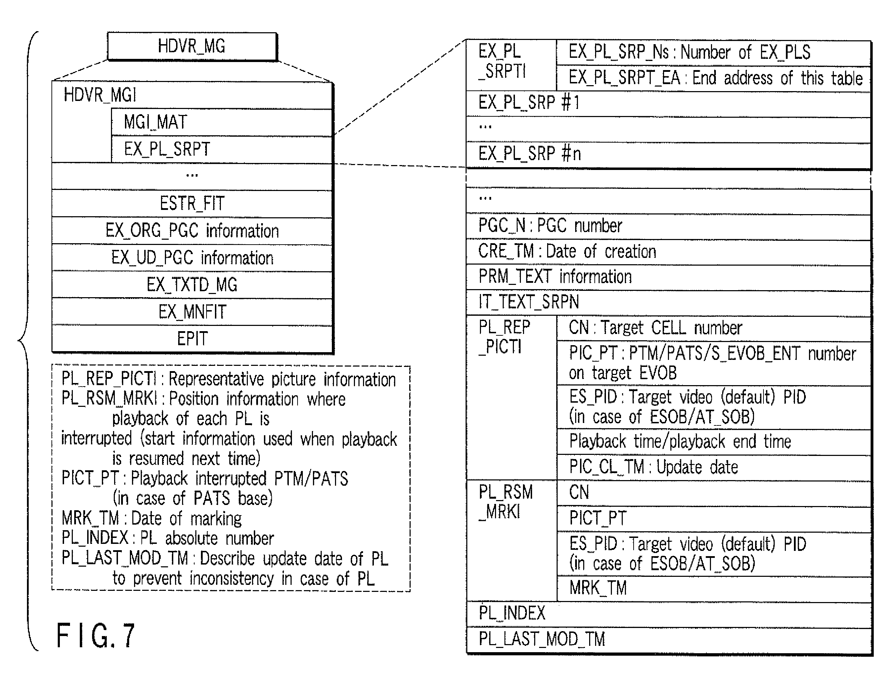

EX_PL_SPRT (FIG. 7) is a search pointer to each playlist, and also includes PL_RSM_MRKI, which is set with a resume marker (marker indicating the playback location upon pausing playback) for each playlist. As information used to restart playback, this PL_RSM_MRKI is set to include a cell number, playback start PTM, and date information of MRK_TM indicating the date of creation of that marker.

Furthermore, update date information of a VTMAPT as a TMAP (Time Map) for Video Recording (VR) for self recording/playback and that of an STMAPT as a TMAP for Stream Recording (SR) for digital broadcast recording are described. This value is compared with update date information described in each TMAPT file. If these values match, it is determined that they have consistency, and the processing is executed. Management information of stream data is saved in the VMG file, as shown in FIG. 3, and stream data are managed on the same level as VR data.

Stream management information is saved in the ESTR_FIT (Extended Stream File Information table). The ESTR_FIT includes ESTR_FITI (ESTR_FIT information), one or more ESTR_FI_SRPs, and one or more pieces of ESTR_FI (Extended Stream File Information) indicated by these SRPs. The ESTR_FITI includes the total number of pieces of ESTR_FI, and the end address of this table. Each ESTR_FI includes ESTR_FI_GI (ESTR_FI General Information), one or more ESOBI_SRPs (Extended Stream Object Information Search Pointers), and one or more pieces of ESOBI (ESOB Information) which are as many as the SRPs and are indicated by their values.

The ESTR_FI_GI includes the file name/file number of an object managed by the ESTR_FI of interest, the number of ESOBI_SRPs in the ESTR_FI of interest, the type (AP_FORMAT_1) of digital broadcast as a source of the recorded contents, the recording country code: Country code (JPN = Japan), PKT_TY (1 = MPEG-TS), PKT_GP_SZ (fixed to 16 logical blocks), and PKT_Ns (0xAA: fixed to 170 TS packets).

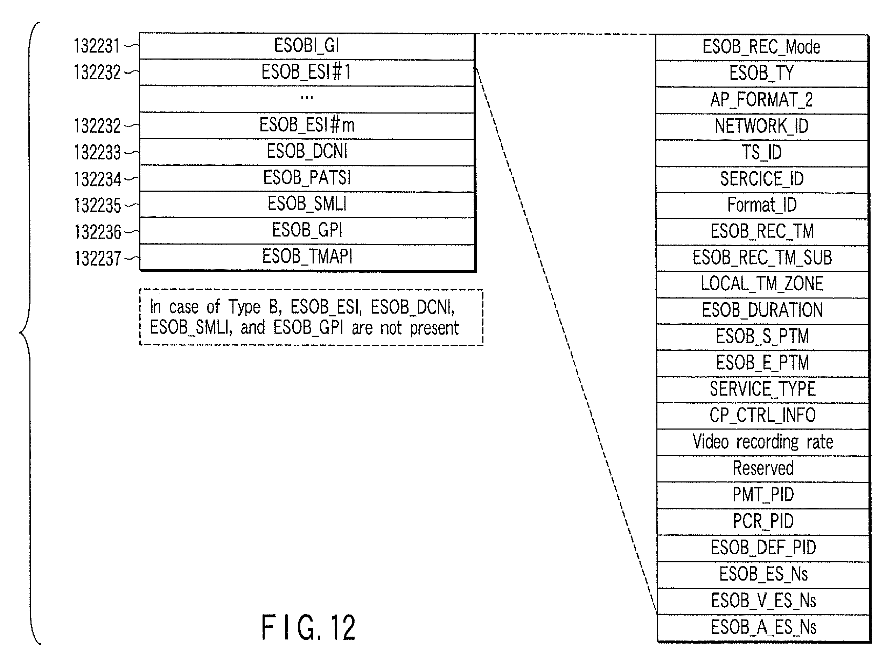

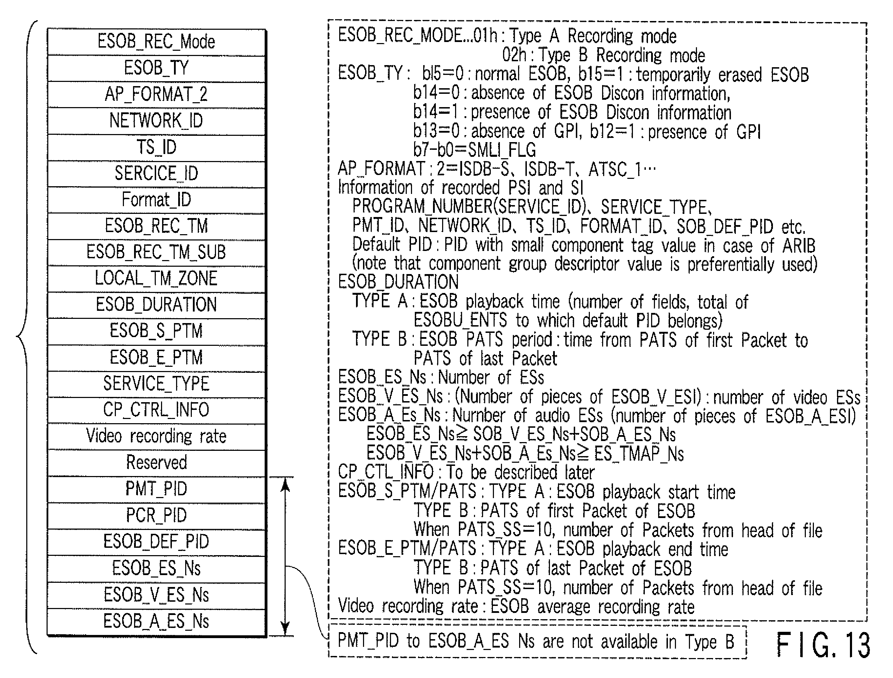

FIG. 12 is a view for explaining an example of the configuration of ESOBI_GI included in the ESOBI shown in FIG. 11. The ESOBI_GI includes various kinds of information shown in FIG. 12 in the order listed in FIG. 12. FIG. 13 shows the contents of various kinds of information shown in FIG. 12.

That is, the ESOBI (FIG. 12) includes ESOBI_GI, ESOBI_ESI# corresponding to ESOB_V_ESI (Extended Video Elementary Information) and/or ESOB_A_ESI (Extended Audio Elementary Information), ESOB_DCNI (Discontinuity Information), ESOB_PASTI (Packet Arrival Time Information), ESOB_SMLI (Extended Seamless Information), ESOB_AGAPI (ESOB Audio GAP Information), ESOB_TMAP (ESOB Time Map), and ESOB_ES_GPI (ESOB_ES Group Information).

The ESOBI_GI (FIG. 13) includes AP_FORMAT (1 = ISDB-S: BS/CS broadcast, 2 = ISDB-T: terrestrial digital broadcast), video recording start time, video recording time, start PTM, and end PTM. Furthermore, the ESOBI_GI includes PROGRAM_NUMBER (SERVICE_ID), PTM_PID, NETWORK_ID, TS_ID, and FORMAT_ID on the basis of the values of PSI (Program Specific Information) and SI (Service Information), and ESOB_ES_Ns (the number of ESs selected for video recording), ESOB_V_ES_Ns (the number of ESs for which TMAP data are generated of recorded video ESs), ESOB_A_ES_Ns (the number of ESs for which TMAP data are generated of recorded audio ESs), CP_CTL_IFO (corresponding to copy control information CCI), a video recording rate, and the like on the basis of data to be recorded. Bits b15 and b14 of ESOB_TY emulate the types of the TMAP: 0 = PTM base, and 1 = PATS base.

Note that ESOB_ES_Ns, ESOB_V_ES_Ns, ESOB_A_ES_Ns, and ES_TMAP_Ns have the following relations:

$$ESOB\_ES\_Ns \geq ESOB\_V\_ES\_Ns + ESOB\_A\_ES\_Ns$$

$$ESOB\_V\_ES\_Ns + ESOB\_A\_ES\_Ns \geq ES\_TMAP\_Ns$$

A region number indicates Japan (ARIB) when it is 00; U.S.A. (ATSC) when it is 01; and Europe (DVB) when it is 02. Of the recorded contents, data of a region corresponding to the region number can be played back.

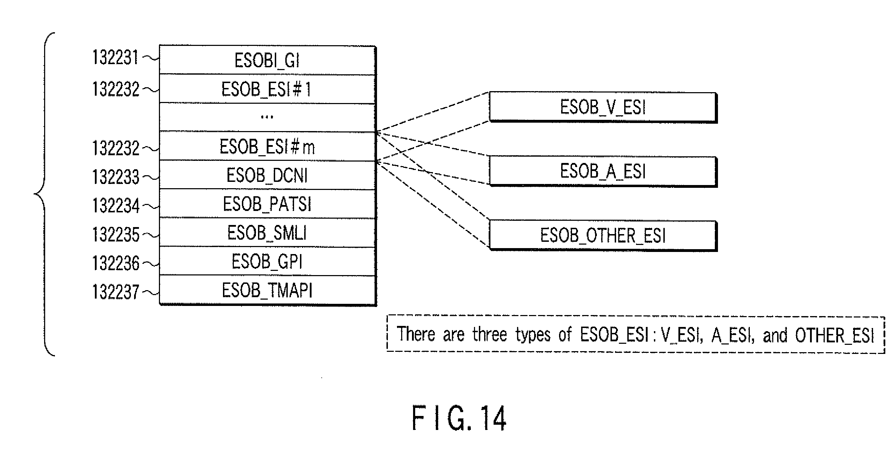

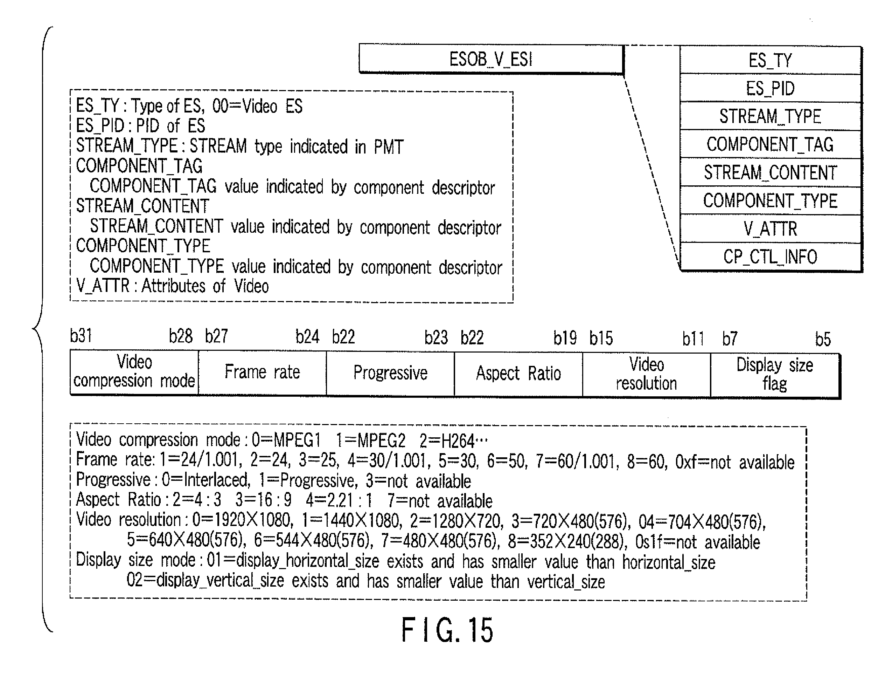

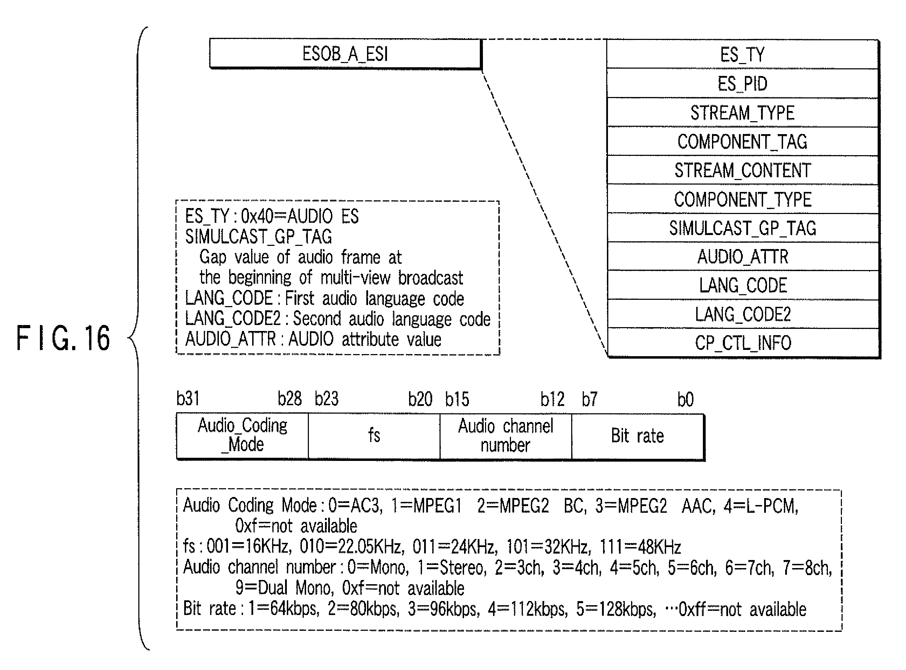

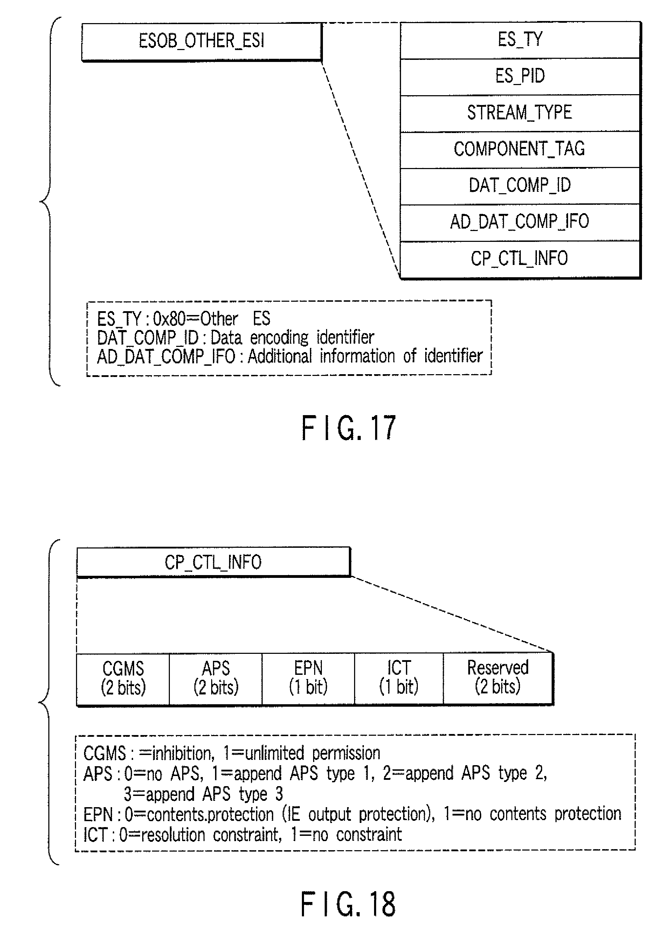

As shown in FIG. 14, ESOB_ESI is classified into three types (ESOB_V_EST in FIG. 15, ESOB_A_ESI in FIG. 16, and ESOB_OTHER_ESI in FIG. 17). ESOB_ES_PID (the PID of an ES), STREAM_TYPE (STREAM type indicated in the PMT), STREAM_CONTENT (STREAM_CONTENT value indicated by the component descriptor), COMPONENT_TYPE (the value of COMPONENT_TYPE indicated by the component descriptor), COMPONENT_TAG (the value of COMPONENT_TAG indicated by the component descriptor), and CP_CTL_INFO are common to these three different types of ESOB_ESI. Furthermore, V_ATTR is added to V_ESI (FIG. 15). The V_ATTR is set to include an Application flag (0 = designate an Aspect ratio by the V_ATTR of interest, 1 = the V_ATTR of interest may designate an Aspect ratio; the actual Aspect ratio is recorded in a stream), Aspect Ratio (0 = 4 : 3, 1 = 16 : 9), Horizontal resolution (00 = 1920, 01 = 1440, 02 = 1280, 03 = 720, 04 = 544, 05 = 480), and Vertical resolution (00 = 1080, 01 = 720, 02 = 480).

The A_ESI (FIG. 16) further includes SIMULCAST_GP_TAG (a gap value of audio frames at the beginning of multi-view broadcast), AUDIO_ATTR (audio attribute values), LANG_CODE (first audio language code), and LANG_CODE2 (second audio language code). The OTHER_ESI further includes DAT_COMP_ID (data contents encoding identifier) and AD_DAT_COMP_IFO (Additional data Component Info).

Furthermore, the AUDIO_ATTR includes Simulcast_GP_tg (0 = not simulcast, 1 = simulcast), Multi__lng (1 = Dual mono, 0 = other), Main_Comp (1 = main audio, 0 = other), Quality_Indicator (indicating sound quality), and Sampling_Rate (001 = 16 kHz, 010 = 22.05 kHz, 011 = 24 kHz, 101 = 32 kHz, 111 = 48 kHz). These values are set based on the values of an audio component descriptor.

The CP_CTL_INFO (FIG. 18) is stored in CPI of ESOBI_GI, ESOB_V_ESI, ESOB_A_ESI, and a Packet Group Header. The CPI of ESOBI_GI makes the overall copy control, that of ESI makes copy control of each ES, and copy control of each Packet Group is made based on CPI of the Packet Group Header. The CPI values of the ESI are used in preference to those of ESOBI_GI, and the CPI of the Packet Header Group is assigned top priority. These CPI values are set based on a digital copy control descriptor, content-use descriptor, and the like. The contents of the CP_CTL_INFO are: CGMS (0 = copy never; 1 = copy free); APS (0 = no APS, 1 = append APS type 1, 2 = append APS type 2, 3 = append APS type 3); EPN (0 = contents protection (Internet output protection), 1 = no contents protection); and ICT (0 = resolution constraint, 1 = no constraint).

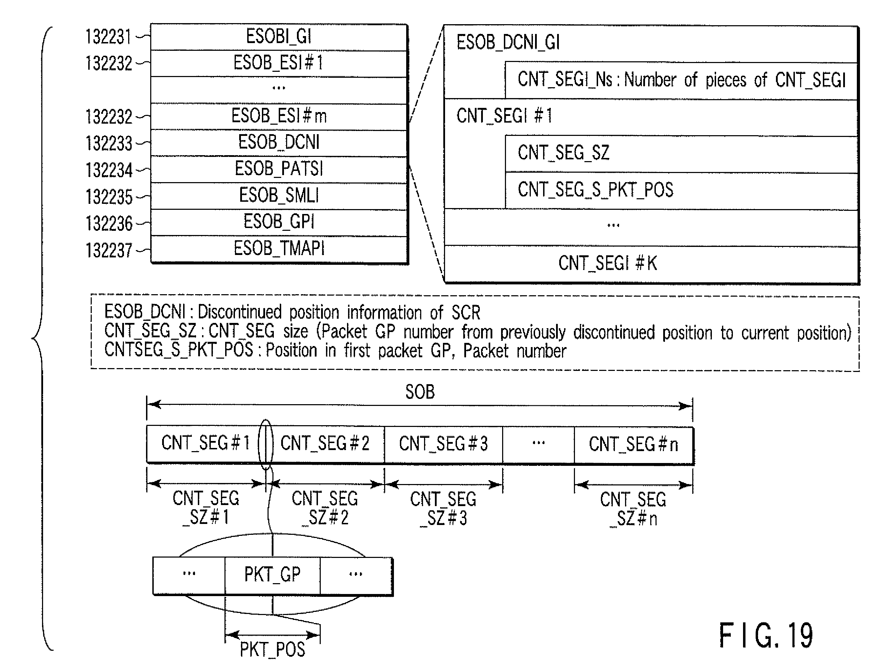

The ESOB_DCNI (Discontinue Information) in FIG. 19 includes DCNI_GI and CNT_SEGI#1 to CNT_SEGI#n.

The DCNI_GI includes information indicating the number of pieces of CNT_SEGI. Each CNT_SEGI includes CNT_SEG_SZ (CNT_SEG size: the number of packet groups), and CNT_SEG_PKT_POS (the number of packets of the first CNT_SEG in a packet group). These pieces of information indicate the SCR disconnect positions.

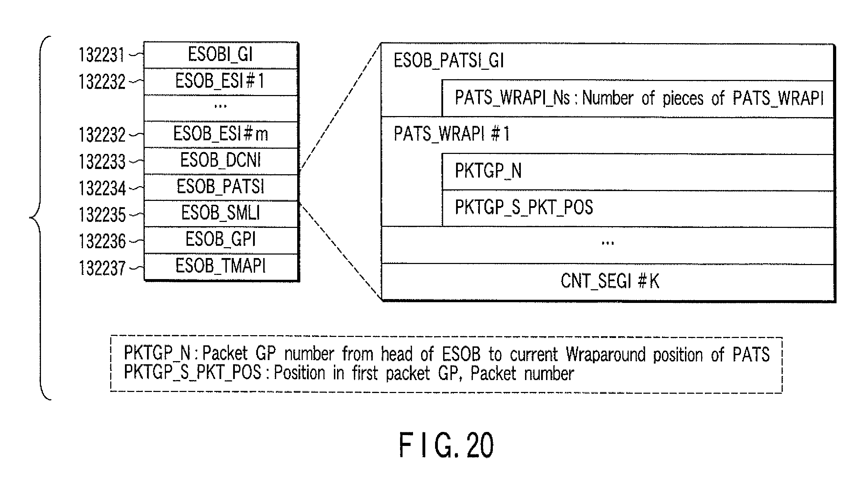

ESOB_PATSI (FIG. 20) includes ESOB_PATSI_GI and PATS_WRAPI#1 to PATS_WRAPI#K. The ESOB_PATSI_GI includes information indicating the number of pieces of PATS_WRAPI. Each PATS_WRAPI indicates the wrap-around position information of the PATS, and includes a packet group number and a packet number in the packet group.

The ESOB_TMAP includes ESOB_TMAP_GI and one or more pieces of ES_TMAPI. The ESOB_TMAP_GI includes TMAP_TY (= 0: PTM base, = 1: PATS base), ADR_OFS (a packet group number (or LB address) from the head of a file to the head of an ESOB), ESOBU_PB_TM_RNG (ESOBU playback time range: 1 = 0.4s to 1.2s, 2 = 1s to 2s, 3 = 2s to 3s), ESOB_S_PKT_POS (the start position of the head of an ESOB in a packet group: $1 \leq$ ESOB_S_PKT_POS $\leq$ 170), and ESOB_E_PKT_POS (the end position of the head of an ESOB in a packet group: $1 \leq$ ESOB_E_PKT_POS $\leq$ 170) (in case of the PTM base).

ES_TMAPI includes ES_PID (the PID of a target ES of this TMAP: there are two description methods of the PID: a method of describing the PID using 13-bit real data, and a method of describing the order in the PMT), ADR_OFS (logical address from the head of an ESOB file to the head of this ES), ES_S_PTM (start PTM), ES_E_PTM (end PTM), ES_ESOBU_ENT_Ns (the number of ESOBU_ENTs), LAST_ESOBU_E_PKT_POS (position of the last ESOBU in a packet group), and STMAP_N (the number of a TMAP in the STMAPT, which belongs to this ES: this number may be omitted when the STMAPTs are recorded in independent areas for each STR_FI or when STMAPs are recorded in turn). An STMAPT is recorded in an independent area (independent file). The STMAPT includes STMAPTI, one or more STMAPI_SRPs, and as many pieces of STMAPI as the number of STMAPI_SRPs.

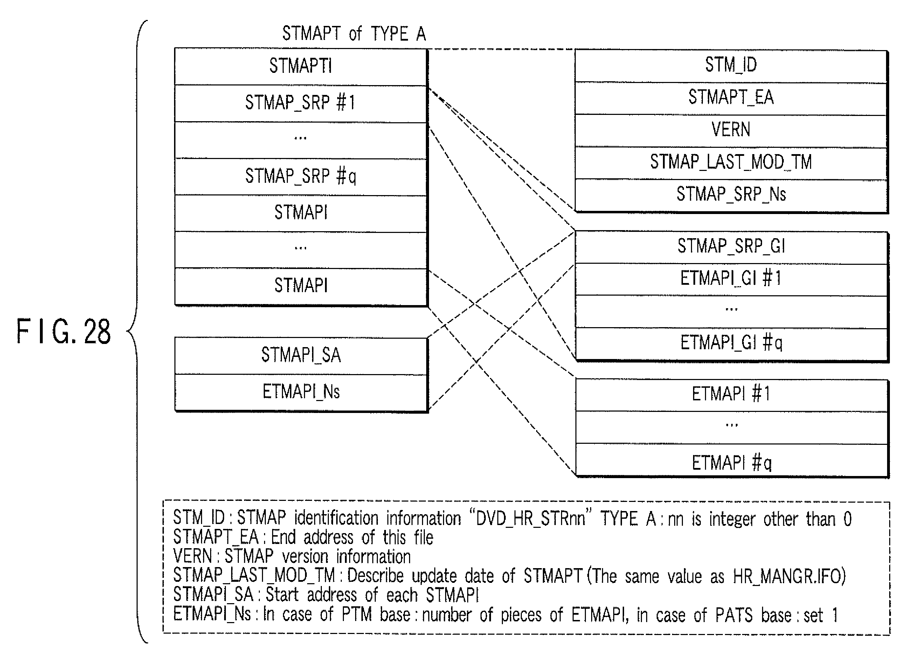

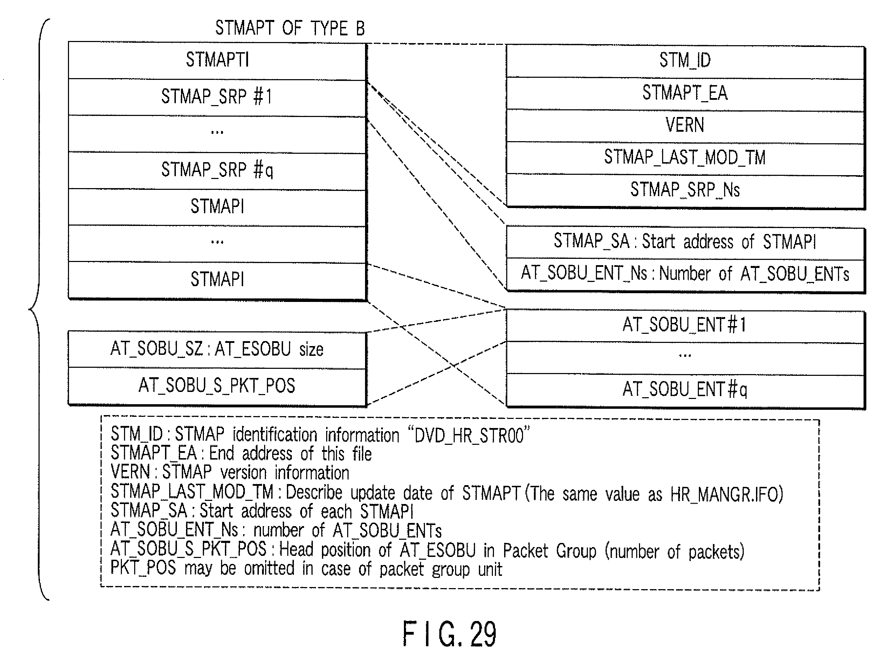

The STMAPTI (FIG. 28 or 29) includes end address information of the STMAPT, version information of the TMAP of interest, STMAP_SRP_Ns (the number of pieces of TMAP_SRPI = the number of pieces of TMAPI), and update date information of the STMAP (the same value as that of VMGI), and the like. Each STMAP_SRP includes address information of STMAPI as an element of each STMAPT, and each STMAPI includes a required number of pieces of ETMAPI_GI and a required number of ESOBU_ENTs. The ETMAPI_GI includes ESOBU_ENT_Ns (the number of entries). Note that garbage data may be inserted among ESOBU_ENTs.

In case of the PATS base, the STMAPTI includes ESOBU_PATS_TM_RNG (ESOBU arrival time interval: 1 = 0.5s, 2 = 1s, or the count value in case of 27 MHz), ESOB_S_PATS/ESOB_E_PATS (arrival times of the first/last packet), and TM_OFS (a difference time from the TM range of the first ESOBU; not available in some cases). In this case, the edit process is made for respective ESOBUs, and adjustment is made using the PATS start/end time (CELLI).

Note that TMAPI information can be prevented from becoming extremely large by setting ESOBU/ EVOBU_PB_TM_RNG even when a video recording time increases. However, since the time interval between neighboring entries is broadened, it is more likely to disturb smooth double-speed playback and the like.

As for the ESOBU/EVOBU intervals, when the TM_RNG value is available, a time interval indicated by this value is set as a maximum interval, and when a GOP division exists ahead of this time interval, ESOBUs can be delimited there. On the other hand, if a sequence header (SH) and I-PIC exist, ESOBUs can be delimited at the head of the SH.

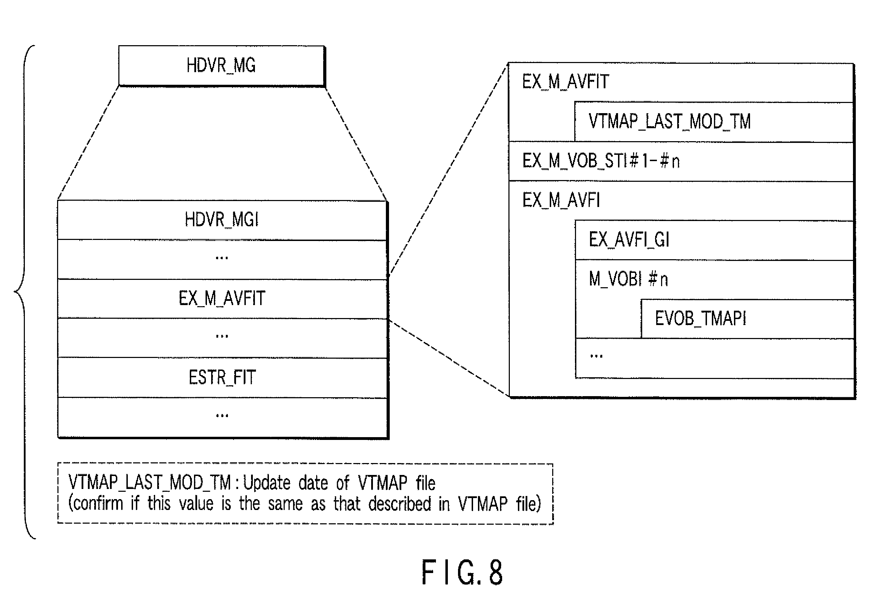

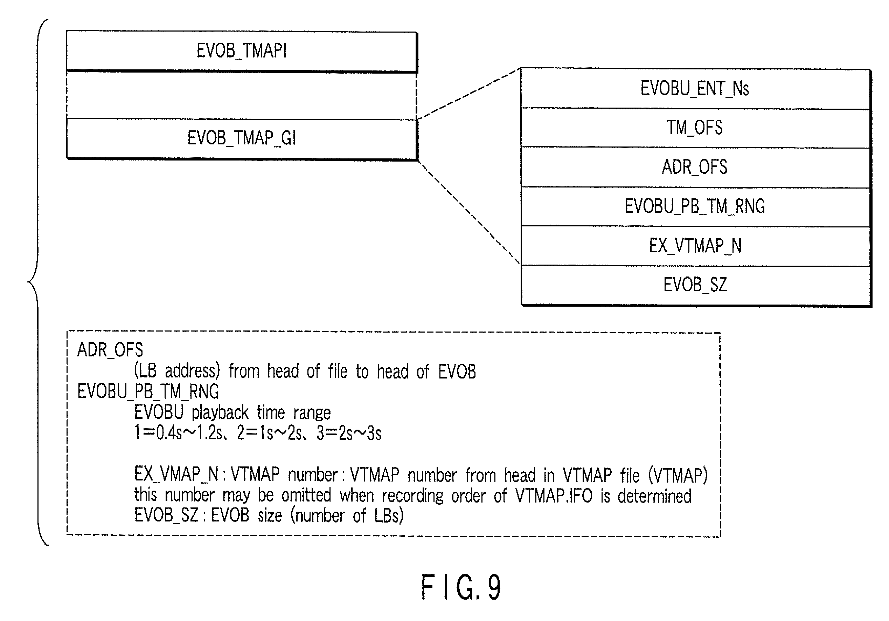

EX_M_AVFIT includes EX_M_AVFI, which includes a plurality of pieces of EVOBI as management information for respective EVOBs as many as the number of EVOBs. The EVOBI includes EVOB_TMAPI used to manage the TMAP of the EVOB, as shown in FIG. 8. As shown in FIG. 9, the EVOB_TMAPI stores EVOB_TMAP_GI. The EVOB_TMAP_GI records general information used to manage the VTMAPT as an independent file. The EVOB_TMAP_GI includes the total number (EVOBU_ENT_Ns) of entries (EVOBU_ENT) stored in the EVOBU of interest, an offset value (TM_OFS) of the time of the head of the EVOBU of interest, the start address (ADR_OFS) of the EVOBU of interest, EVOBL_PB_TM_RNG that determines the time interval of entries of the EVOBU of interest, the TMAP number (EX_VTMAP_N: which may be omitted if the TMAP number is determined to have one-to-one correspondence from the head of the EVOB) in the VTMAP file, the size (EVOB_SZ) of the EVOB of interest, and the like. The EVOB_TMAP_GI allows to recognize information of the EVOB without reading out the TMAP file, since the TMAPs are stored in independent files. Especially, the start address (ADR_OFS), EVOB_SZ, and EVOBU_ENT_Ns allow to determine the data size to be read out from disc 100, the work RAM size to be assured, and the like before loading the TMAP file main body, thus facilitating the read preparation.

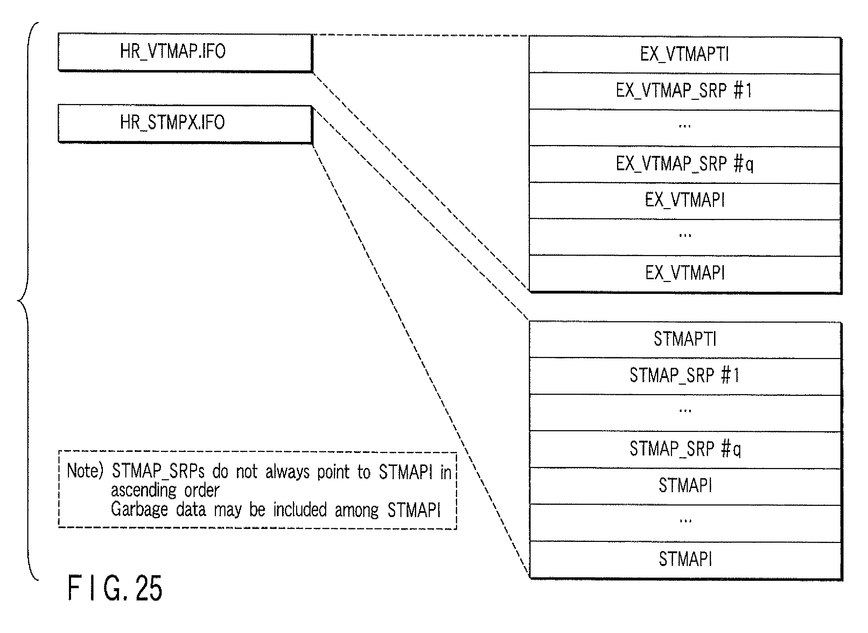

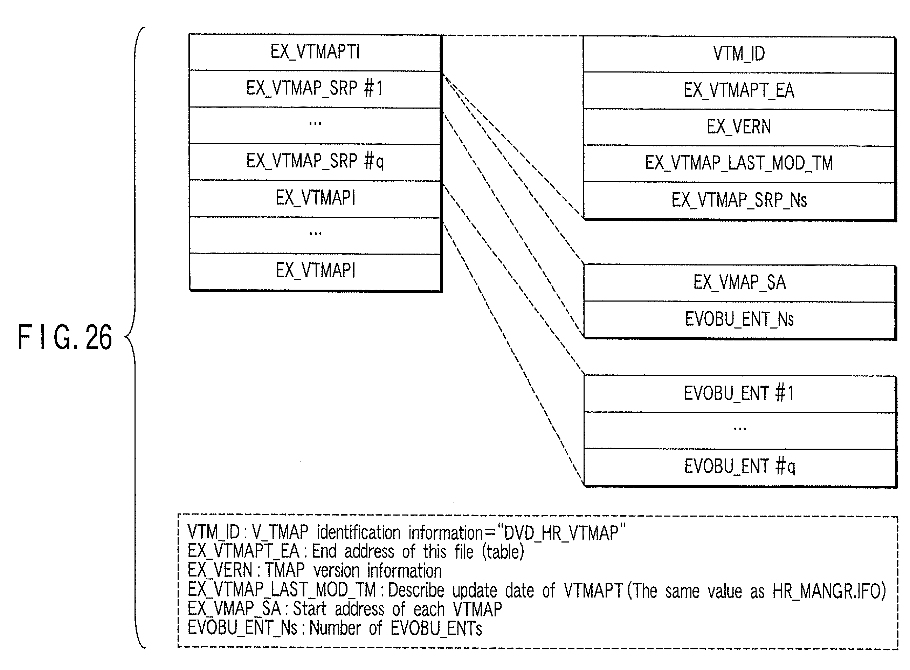

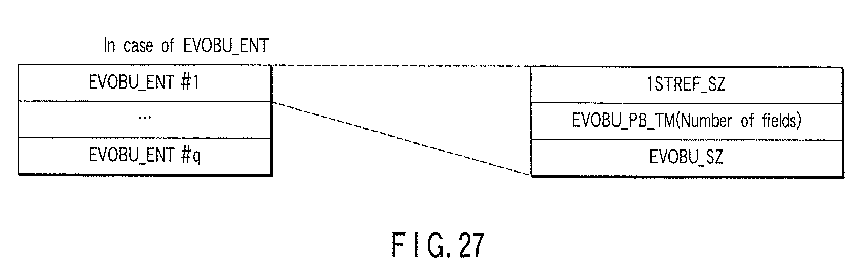

The VTMAPT (FIG. 25) includes VTMAPTI, VTMAP_SRPT, and VTMAP#1 to VTMAP#n. The VTMAPTI (FIG. 26) includes VMG_ID (the same value as VMG_ID located at the head of VMGI), VTMAPT_EA (the end address of the VTMAP), VERN (version information of the TMAP), IFO_LAST_MOD_TM (update date information of the TMAPT; the same value as HR_MANGR.IFO), and VTMAP_SRPNs (the total number of pieces of search information). The VTMAP_SRPT includes one or more VTMAP_SRPs (search information of each VTMAP). Furthermore, each VTMAP_SRP includes VTMAP_SA (the start address of the VTMAP) and EVOBU_ENT__Ns (the total number of EVOBU_ENTs). The VTMAP includes one or more EVOBU_ENTs (corresponding to the EVOBU_ENT# in FIG. 27).

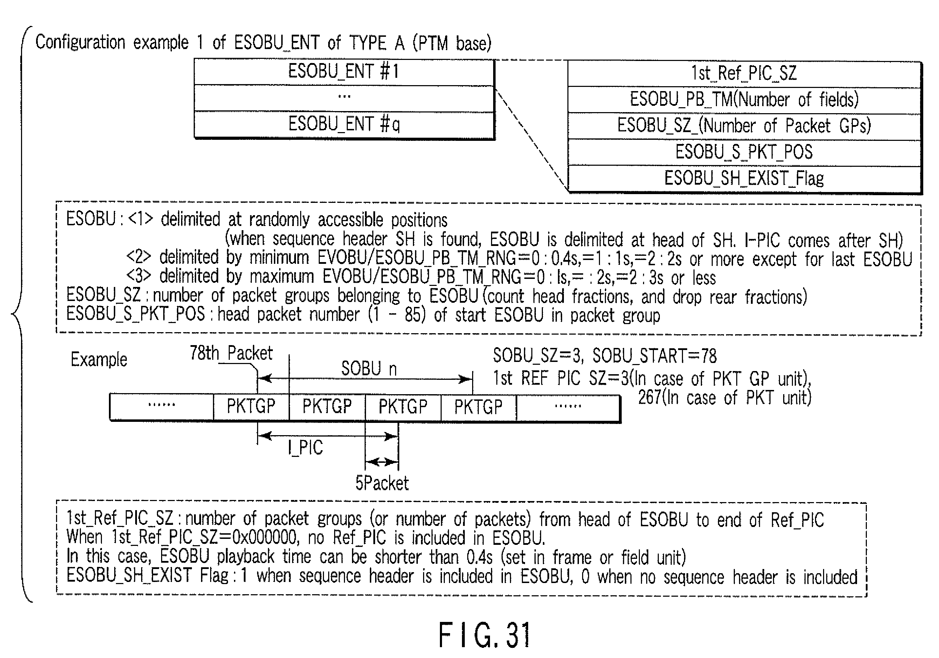

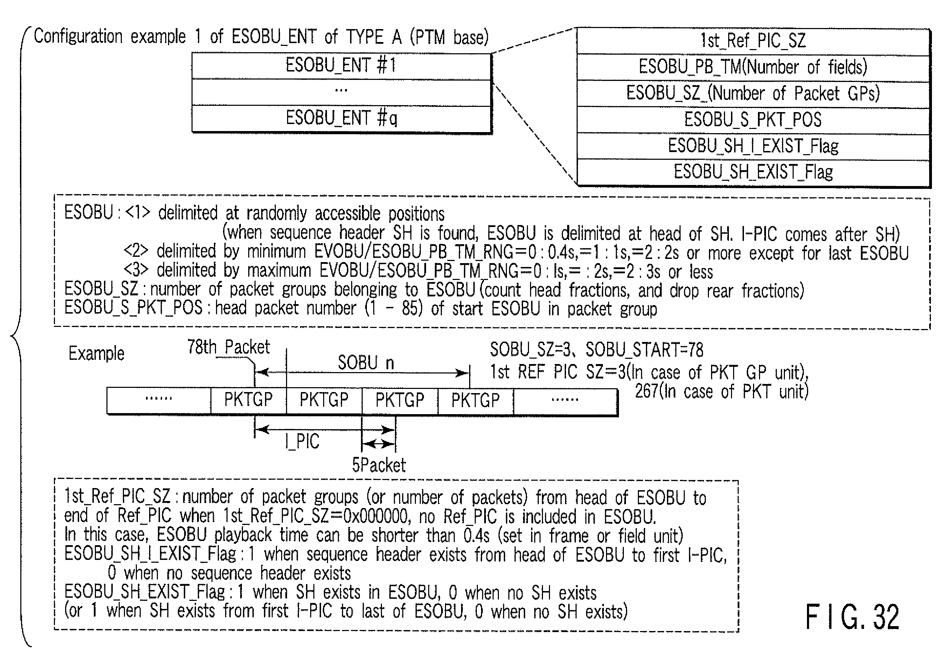

As shown in FIGS. 31 and 32, in case of a PTM base, the ESOBU_ENT includes 1st_Ref_PIC_SZ (end address information of the first reference picture (I-picture or the like) in the entry from the head of the ESOBU, which is expressed by LBs), ESOBU_PB_TM (the playback time of the ESOBU indicated by the number of fields), ESOBU_SZ (ESOBU size expressed by the number of packet groups that belong to the ESOBU), ESOBU_S_PKT_POS (the position of a packet which is expressed by the number of packets from the head of a packet group and stores the first packet of the ESOBU), ESOBU_SH_EXIST_Flag (sequence header (SH) information), and the like.

There are two types of SH information. The first type of SH information corresponds to a case wherein flag ESOBU_SH_EXIST_FLAG indicating the existence of an SH in the ESOBU is available, as shown in FIG. 31. The second type of SH information corresponds to a case wherein flag ESOB_SH_I_EXIST_FLAG indicating the existence of an SH between the head of the ESOBU and I-PIC, and flag ESOBU_SH_EXIST_FLAG indicating the existence of an SH in the ESOBU (or the existence of an SH between I-PIC to the end of ESOBU) are available, as shown in FIG. 32.

The first type of SH information is adopted when the SH is constant in a program (in the ESOB) or when the ESOBU is delimited so that the ESOBU always starts from the SH. In this way, playback can be made using the SH in the ESOBU.

The second type of SH information is adopted when the SH changes frequently, or when the SH is not always located at the head of the ESOBU. By adopting the second type of SH information, if no SH is available from the head of the ESOBU to 1-PIC, an SH can be set by reading out the previous ESOBU (normally, the immediately preceding ESOBU; however, in some cases, an ESOBU two or more ahead of the current ESOBU may be used) including the SH, thus allowing playback.

In the case of time search, an ESOBU corresponding to a target time is calculated by accumulating PB_TM data, and the playback start PTM is converted into the number of fields from the head of that ESOBU. Note that the address is given by:

$$A = ESOB\_ADR\_OFS + ES\_ADR\_OFS \text{ of target ES}$$
$$+ \sum_{N=1}^{k-1} ESOBU\_SZ(N) \times 16 + 1$$

where K is the target ESOBU, and A is the target address. Furthermore, the first packet becomes a packet corresponding to the value of ESOBU_S_PKT_POS, and this address is accessed.

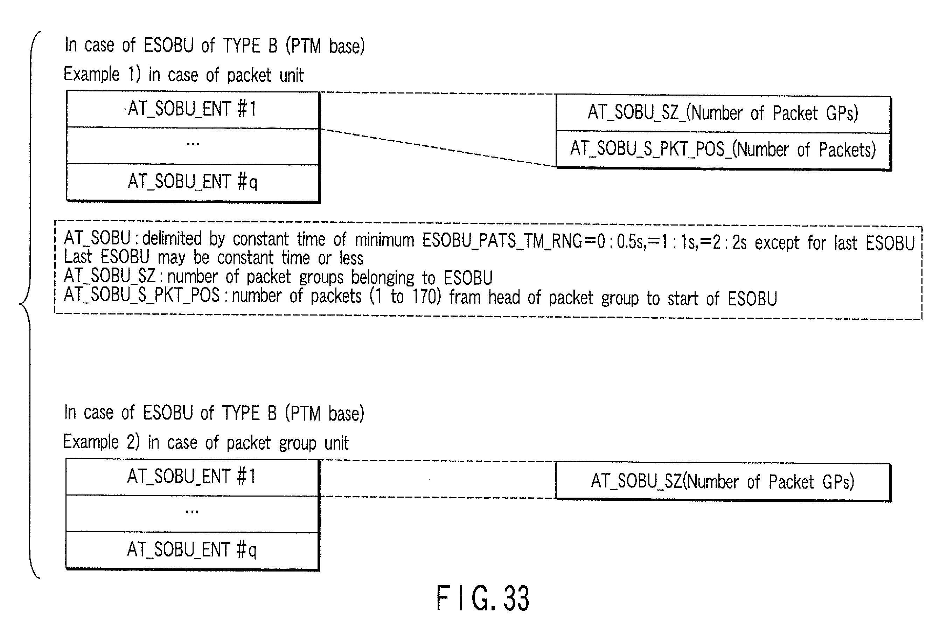

There are two types of ESOBU_ENTs on the PATS base, i.e., that in a packet unit and that in a packet group unit. In case of the packet unit, accurate addresses can be obtained, but the number of ESOBU_ENT data increases. On the other hand, in the case of the packet group unit, the number of ESOBU_ENT data is small, but addresses can only specify packet groups. In the case of the packet unit, each ESOBU_ENT (example 1 of FIG. 33) on the PATS base can be configured by AT_ESOBU_SZ and AT_ESOBU_S_PKT_POS. The AT_ESOBU_S_PKT_POS indicates the first packet position of the ESOBU by the number of packets.

On the other hand, in case of the packet group unit, each ESOBU_ENT (example 2 of FIG. 33) on the PATS base can be configured by AT_ESOBU_SZ. In this case, AT_ESOBU_S_PKT_POS and AT_ESOBU_E_PKT_POS are fixed to zero.

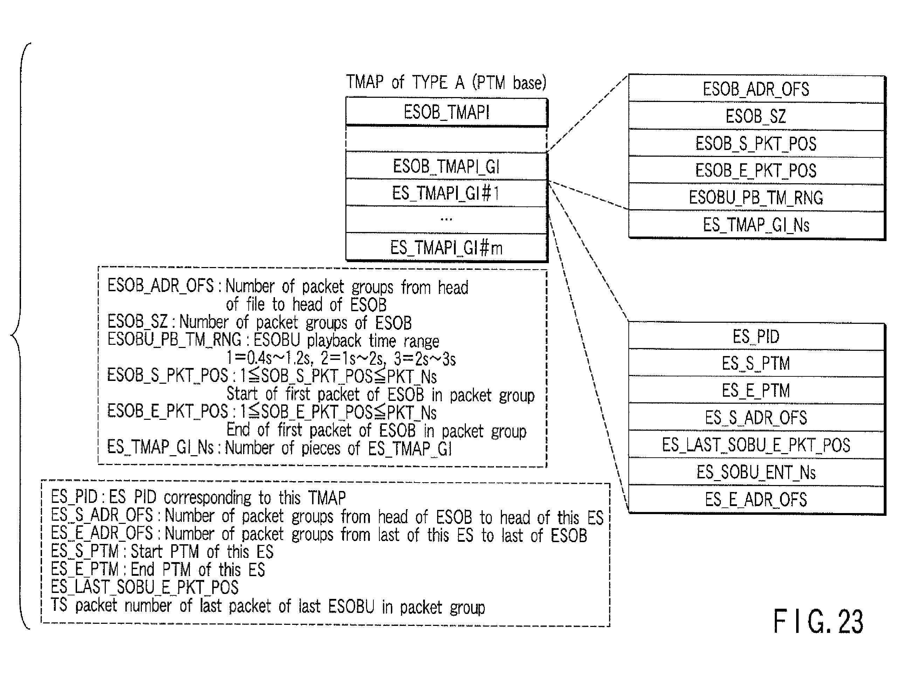

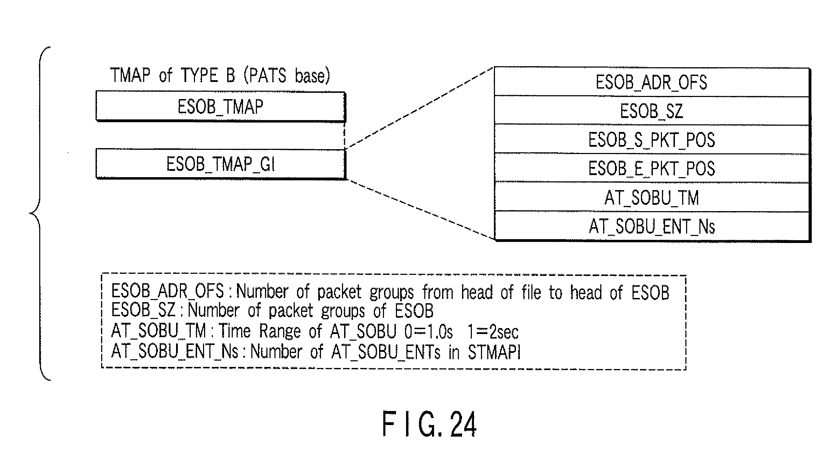

ESOB_TMAP_GI (FIG. 24) describes ADR_OFS, ESOB_SZ, and ESOB_E_PKT_POS as values associated with those of the entire ESOB. As TMAPI for each ES, ES_TMAPI (FIG. 23) describes ES_S_ADR_OFS (an address value (the number of packet groups) from the head of an ESOB to the first ESOBU of the ES of interest), ES_S_ADR_OFS (an address value (the number of packet groups) from the last ESOBU of the ES of interest to the end of the ESOBU), ES_LAST_SOBU_PKT_POS (the number of packets up to the last packet in a packet group of the last ESOBU), ES_ESOBU_ENT_Ns (the total number of ESOBU_ENTs), the default PID of the ES of interest (there are two description methods of the PID: a method of describing the PID using 13-bit real data, and a method of describing the order in the PMT), and the like, as the values of the entire ES_TMAP.

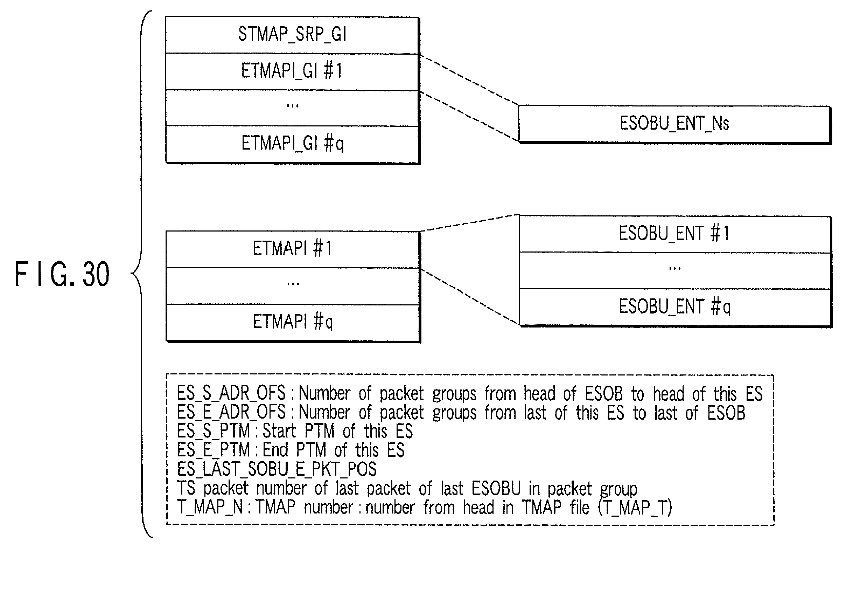

The ESOBU_ENT (FIGS. 30 to 33) in each STMAPI describes ESOBU_S_PKT_POS (or AT_ESOBU_S_PKT_POS) and ESOBU_SZ (or AT_ESOBU_SZ) as values which belong to the ESOBU.

Furthermore, when ESOB_SZ is available, either ES_S_ADR_OFS or ES_E_ADR_OFS (FIG. 23) need only be present since the ES_E_ADR_OFS is given by:

$$ES\_E\_ADR\_OFS$$
$$= ESOB\_SZ - (ES\_S\_ADR\_OFS + \sum_{N=1}^{k-1} ESOBU\_SZ(N)$$
$$+ 1)$$

Note that inequalities ESOB_SZ > ES_S_ADR_OFS, ESOB_SZ > ESOBU_SZ, and the like hold.

FIGS. 24 and 33 show the actual structures of the TMAP and ESOBU on the PATS base.

In case of the packet unit, the ESOB_SZ (FIG. 24) indicates the number of packet groups from a packet group to which the first packet of the ESOB belongs to a packet group to which the last packet of the ESOB belongs. The AT_ESOBU_SZ (FIG. 33) is the number of packet groups from the first packet group of the ESOBU to the last packet group of the ESOBU. Also, the AT_ESOBU_S_PKT_POS (FIG. 33) represents the difference between the divisions of the ESOBU and packet group using the number of packets.

Note that the time information is expressed by PATs to have ESOB_S_PATS as the ESOB start time, and ESOB_E_PATS as the end time, since it is on the PATS base. However, the ESOB_E_PATS is the PATS (arrival start time) of the last packet of the last packet group, but is not the last reception end time. The edit process is done for respective ESOBUs, and the playback start time (CELL_S_PATS of CELLI) is designated. Since the edit process is done for respective ESOBUs, each ESOB_S_PATS always matches the head of the ESOBU. Note that the accuracy of the PATS is indicated by PATS_SS.

TM_OFS represents an actual difference between the first PATS of an ESOB and a TM (time) range designated by TM_RNG using a 27-MHz count value. Note that an example without this value may be available.

When the processing is performed in the packet group unit, since the division of each ESOBU matches that of each packet group, the ESOBU_S_PKT_POS can be omitted. Also, ESOBU_S_PKT_POS and ESOBU_E_PKT_POS are fixed to zero.

Furthermore, the ESOB stores ESOB_ES_GPI (Group Information) to support multi-view broadcasting, rain attenuation broadcasting, and multi-program simultaneous video recording.

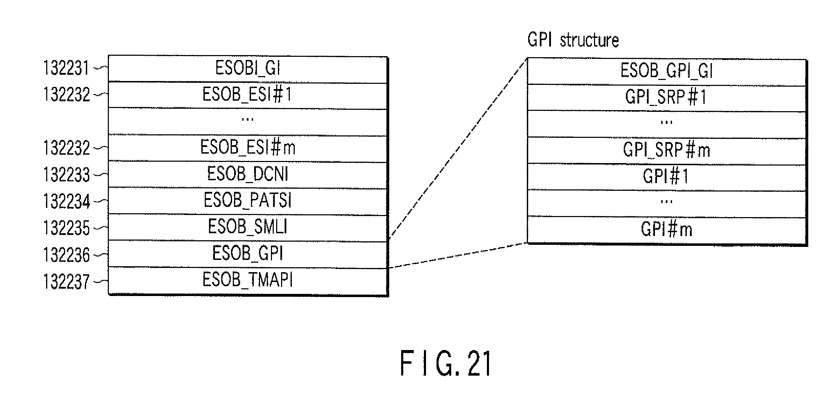

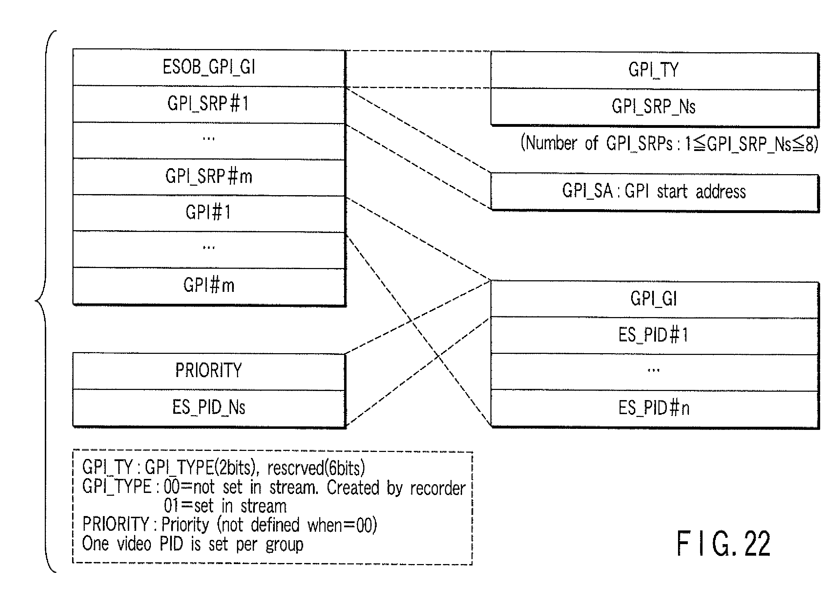

That GPI (FIG. 21) includes ESOB_GPI_GI, GPI_SRPs, and GPI. The ESOB_GPI_GI (FIG. 22) stores GPI_TY (0 = created within the recorder, 1 = defined upon broadcast), and GPI_SRP_Ns (the number of ES_GPI_SRPs). Each GPI_SRP stores GPI_SA (the start address of the GPI). Each GPI includes CPI_GI and ES_PISs. The GPI_GI includes PRIORITY (priority: 0 if it is not designated, 1 = top priority), and ES_PID_Ns (the number of ESs in the group of interest). If the video PID is stored, it does not belong to an identical GP.

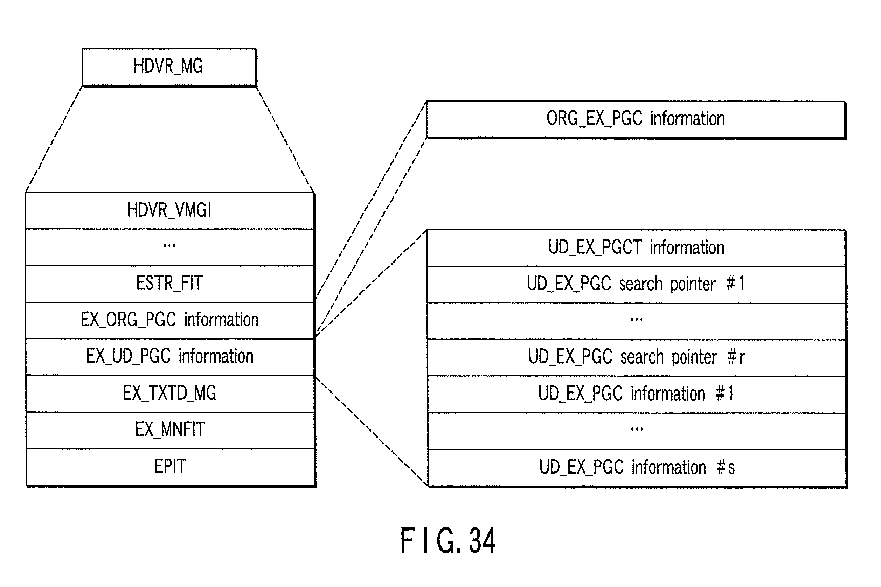

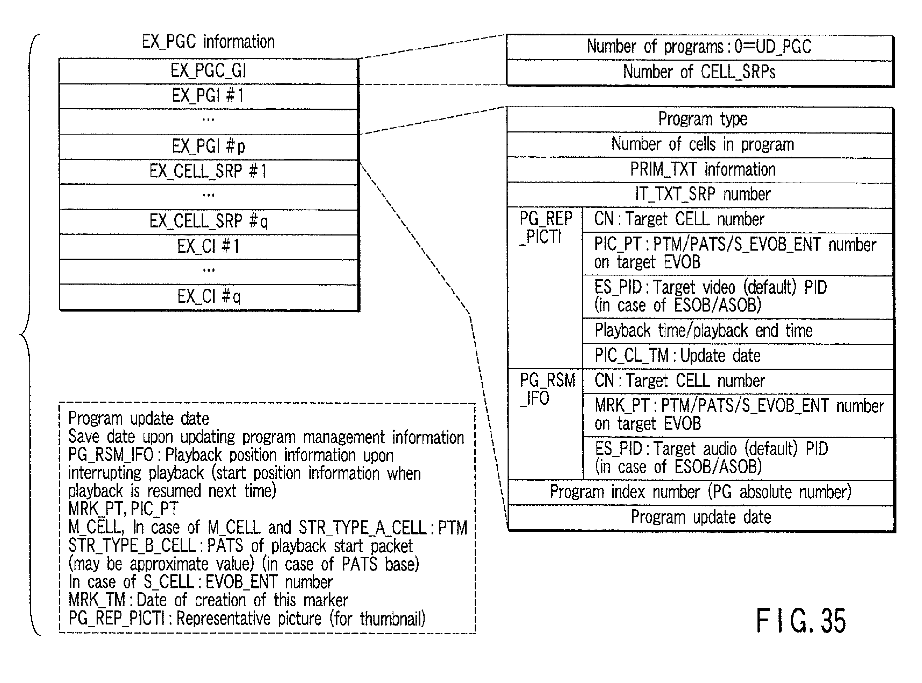

EX_PGC information (FIG. 34) as playback information has the same format as a normal VR format, and ORG_EX_PGC information is automatically generated by an apparatus upon video recording and is set in the order of video recording. UD_EX_PGC information is generated according to a playback order which is freely added by the user, and is called a playlist. These two formats have a common format in EX_PGC level, and FIGS. 35 to 37 show that EX_PGC format.

Note that EX_PG information (FIG. 35) saves update date information of this EX_PG. This information can identify when this EX_PG was edited. A program name as text information uses PRM_TXT, and an IT_TXT field saves other kinds of information (director name, leading actor name,...) to save other kinds of text information. This EX_PGI is set with an SRP number of the IT_TXT field which saves these kinds of information to establish a link. Furthermore, a PG number is set in IT_TXT data. Note that the EX_PG number is an absolute number from the beginning of recording on this disc, and is an index number which remains unchanged even after other EX_PGs are deleted.

Furthermore, the EX_PG includes RSM_MRKI to provide a resume marker (a marker indicating the playback position upon interrupting playback) for each program. As information used to restart playback, an EX_CELL number, playback start PTM, and date information indicating the date of creation of that marker are set. This information is used as title resume.

In order to utilize MNFI provided to implement functions unique to the manufacturer, the EX_PGI is set with the SRP number of MNFI, and an EX_PG number can also be set in the MNFI information. In this way, links can be set with data in the MNFI information.

Furthermore, when PG update date information is set in both the MNFI and IT_TXT, whether or not the edit process has been made by an apparatus of another manufacturer can be verified by checking if these times match upon menu display.

In EX_CELL information, an ESOB type (STRA_CELL, STRB_CELL) is added to the conventional VR cell type, and an ESOB number, start time, end time, and GP number to be played back can be designated. The start and end times can be expressed by either the playback time (in case of PTM base) or PATS time (in case of PATS base).

When time is designated by a playback time: real time upon playback, the same access method as in the conventional VR is allowed. Since the user can designate using a playback time, a user's desire can be perfectly reflected. However, this method can be adopted only when the stream contents can be sufficiently cognizable. If the contents cannot be sufficiently cognizable, a time must be designated using a transfer time unit.

If designation is made using a playback time, playback cannot always be started from the head of I-picture data. If a frame at the playback start position is not that of I-picture, decoding starts from the immediately preceding I-picture, and display starts when the target frame is decoded. In this way, a picture can be presented to the user as if playback were started from the designated frame.

As for a reference ID, a method of setting the PID (there are two description methods of the PID: a method of describing the PID using 13-bit real data, and a method of describing the order in the PMT; or the PID may be a component tag value) of a representative one of streams to be played back, and a method of setting the ID of a component group in case of multi-view TV or the like are available. Also, unique ID numbers are assigned to EX_PG and EX_CELL data, so that EX_PG and EX_CELL data can be designated using numbers which remain unchanged even when middle EX_PG and EX_CELL data are deleted.

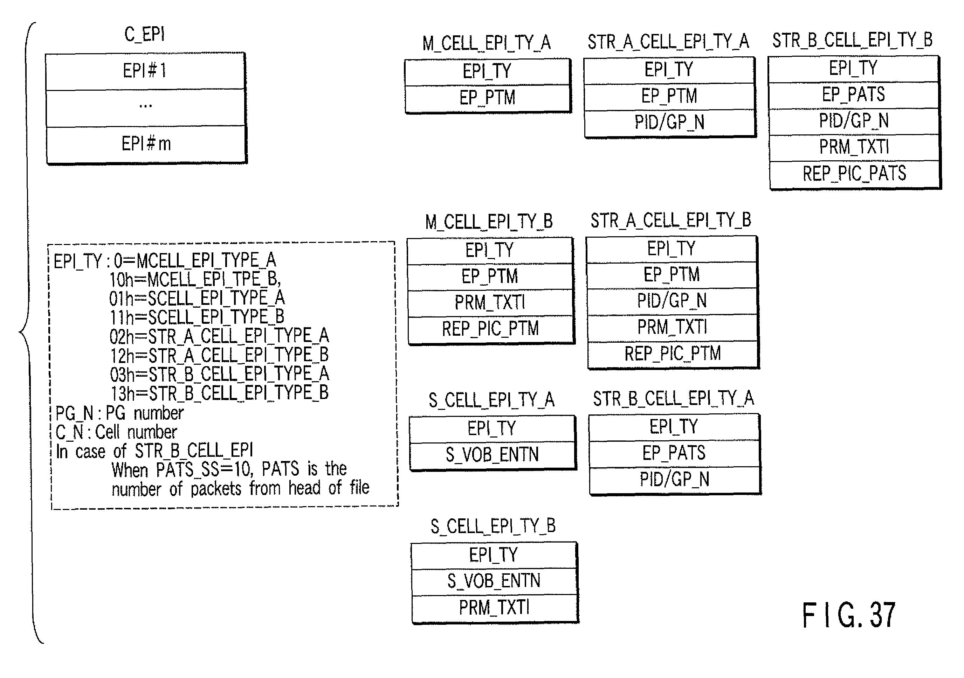

The EX_CELL is set with the ESTR_FILE number and ESOB_SRP number. Furthermore, the EX_CELL includes EPI (Entry Point Information) corresponding to each chapter (FIG. 37). There are two types of EPI for each cell type, i.e., a total of eight types of EPI.

M_CELL_EPI_TY_A includes EPI_TY (EPI type information), and a PTM to which an EP is assigned. M_CELL_EPI_TY_B also includes PRM_TXTI (text information) and REP_PIC_PTM (thumbnail pointer). S_CELL_EPI_TY_A includes EPI_TY (EPI type information), and an S_EVOB_ENT number to which an EP is assigned. S_CELL_EPI_TY_B also includes PRM_TXTI (text information).

STR_A_CELL_EPI_TY_A (ESOB TYPE A) includes EPI_TY (EPI type information), a PTM to which an EP is assigned, and a PID (or group number) of an ES. STR_A_CELL_EPI_TY_B also includes PRM_TXTI (text information) and REP_PIC_PTM (thumbnail pointer). STR_B_CELL_EPI_TY_A (ESOB TYPE B) includes EPI_TY (EPI type information), a PATS to which an EP is assigned, and a PID to which that ES is assigned. STR_B_CELL_EPI_TY_B also includes PRM_TXTI (text information) and REP_PIC_PTM (thumbnail pointer).

FIG. 43 is a block diagram for explaining an example of the apparatus which records and plays back AV information (digital TV broadcast program or the like) on an information storage medium (optical disc, hard disc, or the like) using the data structure according to the embodiment of the present invention.

As shown in FIG. 43, the recorder/player according to this embodiment comprises an MPU unit, display unit, decoder unit, encoder unit, TV tuner unit, STC (System Time Counter) unit, D-PRO unit, temporary storage unit, disc drive unit, key input unit, V-mixing unit, frame memory unit, TV D/A unit, terrestrial digital tuner unit, 1394 I/F unit, Ethernet I/F unit, remote controller receiver, STB unit (BS digital tuner or the like), emergency broadcast detection unit, and HDD unit. This arrangement is configured by adding the functions of a streamer to a recordable/reproducible DVD recorder.

The encoder unit includes an A/D unit, video encode unit, audio encode unit, SP encode unit, formatter unit, and buffer memory unit. The decoder unit includes a demultiplexer, video decode unit, SP decode unit, audio decode unit, TS packet transfer unit, V-PRO unit, and audio D/A unit. Furthermore, an antenna for receiving digital broadcasts is connected to the STB unit. Note that the STC unit is configured to count on a 27-MHz base.

The flow of signals upon recording is as follows. That is, TS packet data received by the STB unit (or terrestrial digital tuner) are packed into packet groups by the formatter unit and the packet groups are saved on a work area. When the saved packet groups reach a predetermined size, they are recorded on the disc. PATS internal counter 90a is connected to this formatter unit 90. The arrival time of each TS packet is counted by PATS counter 90a, and that count value is appended to the head of each TS packet when the packet is buffered. This counter 90a can perform fine adjustment of count intervals by SCR values, but never loads the SCR values unlike STC 102. As the operations to be executed at that time, upon reception of TS packets, a group is formed every 170 packets, and a packet group header is generated.

In this case, only the upper 2 bytes of the PATS of the first packet of the packet group are stored in the header, and only the lower 4 bytes of each of other PATS data are saved together with the TS packet (before the TS packet). An analog signal input from the terrestrial tuner or line input is converted into a digital signal by the A/D unit. That digital signal is input to respective encoder units. That is, a video signal is input to the video encode unit, an audio signal is input to the audio encode unit, and text data of, e.g., teletext broadcasting is input to an SP encode unit. The video signal is compressed by MPEG, the audio signal is compressed by AC3 or MPEG audio, and the text data is compressed by runlength coding.

Each encoder unit (for VR) packs compressed data to form 2048-byte packets and inputs them to the formatter unit. The formatter unit packs and multiplexes the packets as a program stream, and sends it to the D-PRO unit.

The D-PRO unit forms ECC blocks for every 16 logical blocks, appends error correction data to them, and records the ECC packets on the disc via the disc drive unit.

When the disc drive unit is busy due to seek, track jump, and the like, data are stored in an HDD buffer unit, and wait until the disc drive unit is ready. Furthermore, the formatter unit generates each segmentation information during video recording, and periodically sends it to the MPU unit (GOP head interrupt or the like). The segmentation information includes the number of packs of an EVOBU (ESOBU), the end address of 1-picture data from the head of the EVOBU (ESOBU), the playback time of the EVOBU (ESOBU), and the like.

In the flow of signals upon playback, data are read out from the disc by the disc drive unit, undergo error correction by the D-PRO unit, and are then input to the decode unit. The MPU unit determines the type of input data (i.e., VR or SR data) (based on Cell TYPE), and sets that type in the decoder unit before playback. In case of SR data, the MPU unit determines the PID to be played back based on EX_CELLI to be played back, determines the PIDs of items (video, audio, and the like) to be played back based on a PMT, and sets them in the decoder unit. In the decoder unit, the demultiplexer sends TS packets to the respective decode units based on the PIDs. Furthermore, the TS packets are sent to the TS packet transfer unit, and are transmitted to the STB unit (1394 I/F unit) in the form of TS packets in accordance with the arrival time. The respective decode units execute decoding, and decoded data are converted into an analog signal by the D/A unit, thus displaying data on the TV. In case of VR data, the demultiplexer sends data to the respective decode units according to the fixed IDs. The respective decode units execute decoding, and decoded data are converted into an analog signal by the D/A unit, thus displaying data on the TV.

The features of medium 100 (100a) used in the apparatus of FIG. 43 will be briefly summarized below. That is, this medium has management area 130 and data area 131. Data is separately recorded on the data area as a plurality of object data (ESOB), and each object data includes a group of data units (ESOBU). One data unit (ESOBU) includes packet groups each of which is formed by converting an MPEG-TS compatible digital broadcast signal into TS packets and packing a plurality of packets (see FIGS. 1 and 33). On the other hand, management area 130 has EX_PGC information (EX_PGCI) as information used to manage the playback sequence. This EX_PGC information includes EX_CELL information (EX_CI). Furthermore, management area 130 has information used to manage object data (ESOB).

The apparatus shown in FIG. 43 can make stream recording on medium 100 (100a) with the above data structure in addition to video recording. In this case, in order to extract program map table PMT and service information SI from a TS packet stream, MPU unit 80 has a service information extraction unit (not shown; firmware that forms management data generation unit 80B). Also, MPU unit 80 has an attribute information generation unit (not shown; firmware that forms management data generation unit 80B) that generates attribute information (PCR pack number, PCR_LB count number, and the like) on the basis of information extracted by this service information extraction unit.

In the apparatus shown in FIG. 43, the flow of signals upon recording are, for example, as follows. That is, TS packet data received by the STB unit (or terrestrial digital tuner) are packed into packet groups by the formatter unit and the packet groups are saved on a work area (buffer memory unit 91). When the saved packet groups reach a predetermined size (when they are saved for one or an integer multiple of CDA size), they are recorded on the disc. As the operations to be executed at that time, upon reception of TS packets, a group is formed every 170 packets, and a packet group header is generated.

On the other hand, an analog signal input from the terrestrial tuner or line input is converted into a digital signal by the A/D unit. That digital signal is input to respective encoder units. That is, a video signal is input to the video encode unit, an audio signal is input to the audio encode unit, and text data of, e.g., teletext broadcasting is input to an SP encode unit (not shown). The video signal is compressed by MPEG, the audio signal is compressed by AC3 or MPEG audio, and the text data is compressed by runlength coding.

Each encoder unit packs compressed data (or segments into blocks) to form 2048-byte packets (or blocks) and inputs them to the formatter unit. The formatter unit multiplexes the packets (or blocks), and sends them to the D-PRO unit. The D-PRO unit forms ECC blocks for every 16 or 32 packets (16 or 32 blocks), appends error correction data to them, and records the packets (or blocks) on the disc via the disc drive unit.

When the disc drive unit is busy due to seek, track jump, and the like, data are stored in an HDD buffer unit until the disc drive unit is ready. Furthermore, the formatter unit generates segmentation information during video recording, and periodically sends it to the MPU unit (GOP head interrupt or the like). The segmentation information includes the number of packs (or the number of LBs) of EVOBU (ESOBU), the end address of I-picture data from the head of EVOBU (ESOBU), the playback time of EVOBU (ESOBU), and the like.

In the flow of signals upon recording, TS packet data received by the STB unit (or terrestrial digital tuner) are converted into packet groups by the formatter unit, and are saved in the work RAM. When data saved in the work RAM reach a predetermined size (when they are saved for one or an integer multiple of CDA size), they are recorded on the disc.

In the flow of signals upon playback, data are read out from the disc by the disc drive unit, undergo error correction by the D-PRO unit, and are then input to the decode unit. The MPU unit determines the type of input data (i.e., VR or SR data) (based on cell type), and sets that type in the decoder unit before playback. In case of SR data, the MPU unit determines the PID to be played back based on cell information CI to be played back, determines the PIDs of items (video, audio, and the like) to be played back based on a PMT, and sets them in the decoder unit. In the decoder unit, the demultiplexer sends TS packets to the respective decode units based on the PIDs. Furthermore, the TS packets are sent to the TS packet transfer unit, and are transmitted to the STB unit (1394 I/F) in the form of TS packets in accordance with the arrival time. The respective decode units execute decoding, and decoded data are converted into an analog signal by the D/A unit, thus displaying data on the TV. In case of VR data, the demultiplexer sends data to the respective decode units according to the fixed IDs. The respective decode units execute decoding, and decoded data are converted into an analog signal by the D/A unit, thus displaying data on the TV.

Upon playback, pack data read out from the disc are interpreted by the demultiplexer. Packs that store TS packets are sent to the TS packet transfer unit, and are then sent to the decoders, thus playing back data. When pack data are transferred to the STB unit (or are transmitted to an external apparatus such as a digital TV or the like), the TS packet transfer unit transfers only TS packets at the same time intervals as they arrived. The STB unit decodes the TS packets to generate an AV signal, which is displayed on the TV via the video encoder unit in the streamer.

An MPEG-TS scheme as a basic format common to broadcast schemes which broadcast (distribute) compressed moving picture data such as digital TV broadcasts, broadcasts that uses a wired network such as the Internet or the like, and so on is divided into a packet management data field and payload. The payload includes data to be played back in a scrambled state. According to ARIB, a PAT (Program Association Table), PMT (Program Map Table), and SI (Service Information) are not scrambled. Also, various kinds of management information can be generated using the PMT and SI (SDT: Service Description Table, EIT: Event Information Table, BAT: Bouquet Association Table).

The contents to be played back include MPEG video data, Dolby AC3(R) audio data, MPEG audio data, data broadcast data, and the like. Also, the contents include information (program information and the like) such as PAT, PMT, SI, and the like required upon playback although they are not directly related to the contents to be played back. The PAT includes the PID (Packet Identification) of the PMT for each program, and the PMT records the PIDs of video data and audio data.

A normal playback sequence of the STB (Set Top Box) is as follows. That is, when the user determines a program based on EPG information, the PAT is loaded at the start time of the target program. The PID of a PMT, which belongs to the desired program, is determined on the basis of that data, and the target PMT is read out in accordance with that PID. Then, the PIDs of video and audio packets to be played back, which are included in the PMT, are determined. Video and audio attributes are read out based on the PMT and SI and are set in respective decoders. The video and audio data are extracted and played back in accordance with their PIDs. Note that the PAT, PMT, SI, and the like are transmitted at intervals of several 100 ms since they are also used during playback.

In the flow of signals upon recording, TS packet data received by the STB unit (or terrestrial digital tuner) are converted into packet groups by the formatter unit, and are saved in the work RAM. When data saved in the work RAM reach a predetermined size, they are recorded on the disc. As the operations at that time, upon reception of TS packets, a group is formed every 170 packets, and a packet group header is generated.

An analog signal input from the terrestrial tuner or line input is converted into a digital signal by the A/D unit. That digital signal is input to respective encoder units. That is, a video signal is input to the video encode unit, an audio signal is input to the audio encode unit, and text data of, e.g., teletext broadcasting is input to an SP encode unit. The video signal is compressed by MPEG, the audio signal is compressed by AC3 or MPEG audio, and the text data is compressed by runlength coding.

Each encoder unit (for VR) packs compressed data to form 2048-byte packets and inputs them to the formatter unit. The formatter unit packs and multiplexes the packets, and sends them to the D-PRO unit.

The D-PRO unit forms ECC blocks for every 16 or 32 packs, appends error correction data to them, and records the ECC packets on the disc via the disc drive unit. When the disc drive unit is busy due to seek, track jump, and the like, data are stored in an HDD buffer unit until the disc drive unit is ready.

Furthermore, the formatter unit generates segmentation information during video recording, and periodically sends it to the MPU unit (GOP head interrupt or the like). The segmentation information includes the number of packs of EVOBU (ESOBU), the end address of I-picture data from the head of EVOBU (ESOBU), the playback time of EVOBU (ESOBU), and the like.

In the flow of signals upon playback, data are read out from the disc by the disc drive unit, undergo error correction by the D-PRO unit, and are then input to the decode unit. The MPU unit determines the type of input data (i.e., VR or SR data) (based on Cell TYPE), and sets that type in the decoder unit before playback. In case of SR data, the MPU unit determines the PID to be played back based on CELLI to be played back, determines the PIDs of items (video, audio, and the like) to be played back based on a PMT, and sets them in the decoder unit. In the decoder unit, the demultiplexer sends TS packets to the respective decode units based on the PIDs. Furthermore, the TS packets are sent to the TS packet transfer unit, and are transmitted to the STB unit (1394 I/F unit) in the form of TS packets in accordance with the arrival time. The respective decode units execute decoding, and decoded data are converted into an analog signal by the D/A unit, thus displaying data on the TV. In case of VR data, the demultiplexer sends data to the respective decode units according to the fixed IDs. The respective decode units execute decoding, and decoded data are converted into an analog signal by the D/A unit, thus displaying data on the TV.

In order to display contents on the TV, data is sent to the decoder unit simultaneously with the D-PRO unit, and is played back. In this case, the MPU unit makes settings upon playback in the decoder unit, which then automatically executes a playback process. The D-PRO unit forms ECC groups by combining every 16 packs, appends ECC data to each group, and sends them to the disc drive unit. When the disc drive unit is not ready to record on the disc, the D-PRO unit transfers the ECC groups to the temporary storage unit and waits until the disc drive unit is ready to record data. When the disc drive unit is ready, the D-PRO unit starts recording. As the temporary storage unit, a large-capacity memory is assumed since it must hold recording data for several minutes or longer by high-speed access. Also, a microcomputer can make high-speed read/write access to the D-PRO unit via a dedicated microcomputer bus, so as to read/write the file management area and the like.

Upon playback, pack data read out from the disc are interpreted by the demultiplexer. Packs that store TS packets are sent to the TS packet transfer unit, and are then sent to the decoders, thus playing back data. When pack data are transferred to the STB unit (or are transmitted to an external apparatus: a digital TV or the like), the TS packet transfer unit transfers only TS packets at the same time intervals as they arrived.

The STB unit makes decoding to generate an AV signal, which is displayed on the TV via the video encoder unit in the streamer.

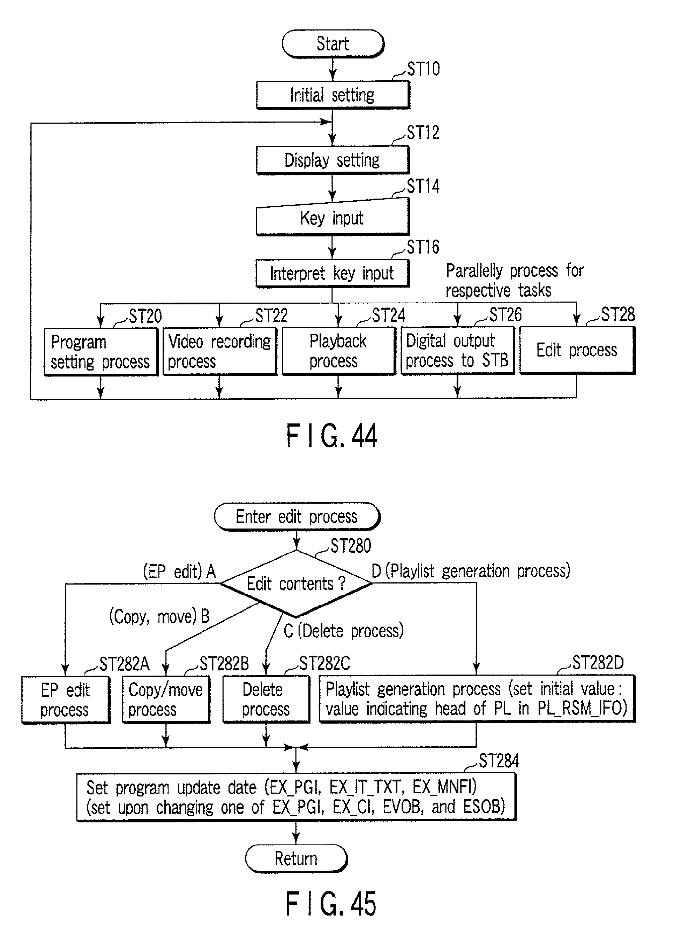

FIG. 44 is a flowchart (overall operation process flow) for explaining an example of the overall operation of the apparatus shown in FIG. 43. In this case, data processes include five different processes, i.e., a video recording process, playback process, data transfer process (a digital output process to the STB or the like), program setting process, and edit process, as shown in FIG. 44.

For example, when the power switch of the apparatus in FIG. 43 is turned on, MPU unit 80 makes initial settings (upon factory shipment or after user's settings) (step ST10). MPU unit 80 also makes display settings (step ST12) and waits for a user's operation. If the user has made a key input from key input unit 103 or remote controller 103a (step ST14), MPU unit 80 interprets the contents of that key input (step ST16). The following five data processes are executed as needed in accordance with this input key interpretation result.

That is, if the key input is, for example, a key operation made to set timer program recording, a program setting process starts (step ST20). If the key input is a key operation made to start video recording, a video recording process starts (step ST22). If the key input is a key operation made to start playback, a playback process starts (step ST24). If the key input is a key input made to output digital data to the STB, a digital output process starts (step ST26). If the key input is a key operation of an edit process, the edit process starts (step ST28).

The processes in steps ST20 to ST28 are parallelly executed as needed for respective tasks. For example, the process for outputting digital data to the STB (ST26) is parallelly executed during the playback process (ST24). Or a new program setting process (ST20) can be parallelly executed during the video recording process (ST22) which is not timer program recording. Or by utilizing the feature of disc recording that allows high-speed access, the playback process (ST24) and digital output process (ST26) can be parallelly executed during the video recording process (ST22). Also, the disc edit process (step ST28) can be executed during video recording on the HDD.

FIG. 45 is a flowchart (edit operation process flow) for explaining an example of the edit process (ST28). When the control enters the edit process, the flow branches to one of four processes (one of A to D) (step ST280) in accordance with the edit contents. Upon completion of one of an entry point edit process (step ST282A), copy/move process (step ST282B), delete process (step ST282C), and playlist generation process (step ST282D), the program update date by this edit process is set in respective pieces of management information (EX_PGI, EX_IT_TXT, EX_MNFI) (step ST284).

When one of the program information EX_PGI, cell information EX_CI, or EVOB/ESOB has been changed, this program update date (FIG. 32) may be set. When EVOBI and/or ESOBI have/has been changed, the edit times/time (EDIT_TIME) of the EVOBI and/or ESOBI can be set in ESOB_EDIT_TIME (not shown) or the like. Alternatively, this program update date (FIG. 32) may be set.

In this connection, in the process in step ST284, the manufacturer ID of the apparatus that has made the operation in one of steps ST282A to ST282D may be set in editor ID (LAST_MNF_ID) 13326 in FIG. 32. Every time one of the PGI, CI, and ESOB (or EVOB) has been changed, this editor ID can be set (or updated) to the ID information of the apparatus used at that time.

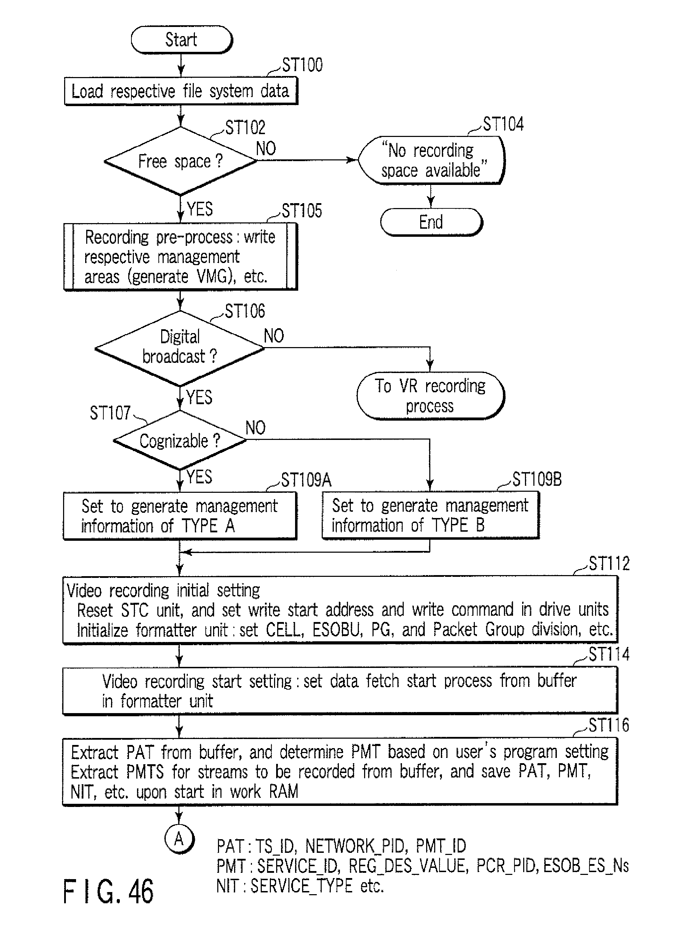

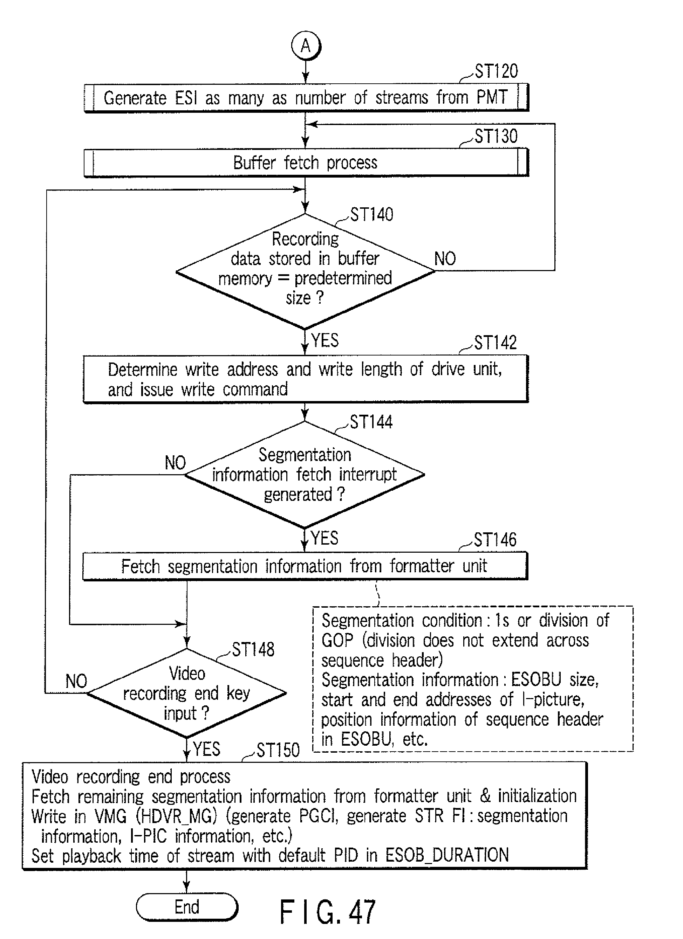

FIGS. 46 and 47 are flowcharts for explaining an example of the video recording operation of the apparatus in FIG. 43. Data processes upon stream recording are as follows.

d1) A program to be recorded is determined using EPG (Electronic Program Guide) in the program setting process, reception of that program starts, and the determined program is recorded.

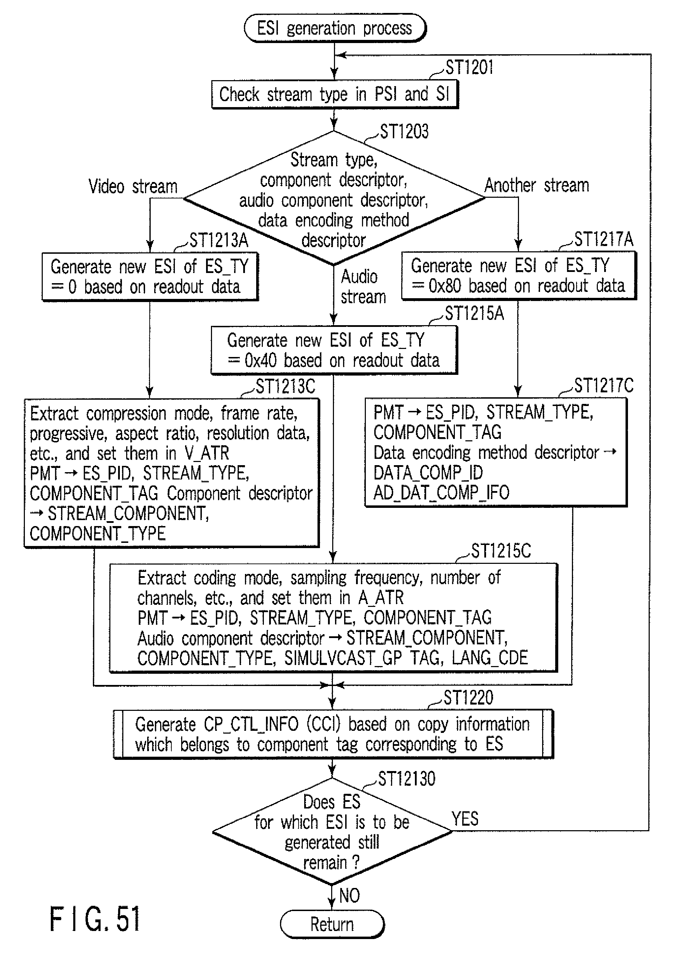

d2) Upon reception of a recording command from the key input unit, the MPU unit loads management data from the disc drive unit and determines a write area. At this time, the MPU unit checks the file system (step ST100) to determine whether or not recording can be proceeded (step ST102). If recording can be proceeded, the MPU unit determines a recording position (step ST105; see FIG. 51); otherwise, the MPU unit displays a message that advises accordingly (step ST104), thus aborting the process.

d3) If data to be recorded is digital broadcast data (step ST106) and if no error is found (step ST111), contents of the management area are set to write data in the determined area, and the write start address of video data is set in the disc drive unit, thus preparing for data recording (step ST112).

d4) The time of the STC unit is reset. Note that the STC unit is a system timer, and recording/playback is done with reference to the count value of this timer.

d5) The PAT of a program to be recorded is loaded to determine the PID required to fetch the PMT of the target program. Then, the target PMT is loaded to determine the PIDs of data (video, audio) to be decoded (to be recorded). At this time, the PAT and PMT are saved in the work RAM unit of the MPU unit, and they are written in the management information. At this time, VMG file data is written in the file system, and required information is written in VMGI.

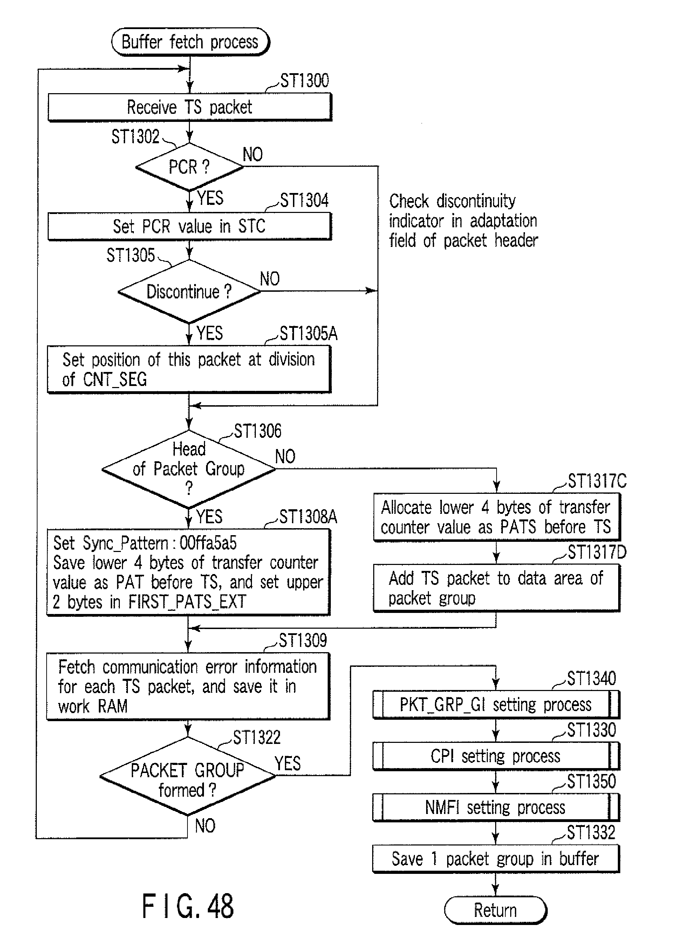

d6) Video recording settings are made in respective units (step ST114). At this time, a segmentation setting of data and a reception setting of TS packets are made in the formatter unit. Also, the PID of data to be recorded is set to record only a target video stream. Furthermore, the buffer is set to start holding of TS packets (step ST116). Then, the formatter unit starts its operation, as shown in FIG. 48.

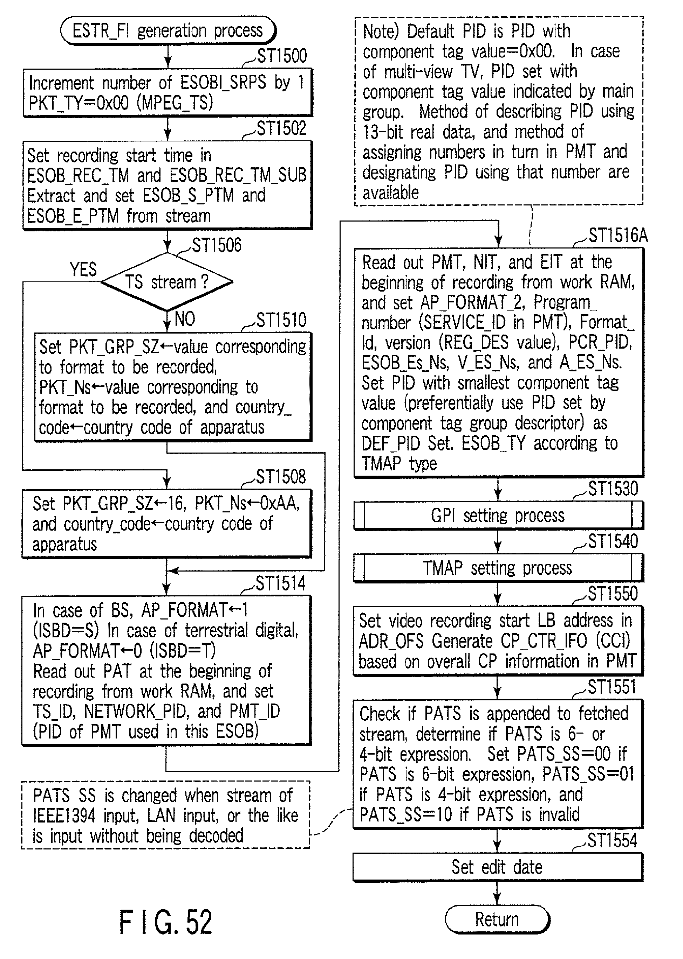

d7) ESOB_ESI is generated based on the PMT (step ST120; see FIG. 52).

d8) If data stored in the buffer reaches a predetermined size, an ECC process is done via the D-PRO unit, thus recording the data on the disc (step ST130).

d9) During video recording, segmentation information is saved in the work RAM of the MPU unit periodically (before the buffer RAM of the formatter unit becomes full of data). The segmentation information to be saved is ESOBU segmentation information, which includes the ESOBU start address, ESOBU pack length, I-Pic end address, the ESOBU arrival time (PATS), or the like.

d10) It is checked if video recording is to end (if the user has pressed a video recording end key or if no recordable space remains). If video recording is to end, remaining segmentation information is fetched from the formatter unit, and is added to the work RAM. These data are recorded in management data (VMGI), and the remaining information is recorded in the file system.

d11) If video recording is not to end, the control returns to d7) to continue the data fetch and playback processes.

In the flow of signals upon recording, MPEG-TS packet data received by the STB unit (or terrestrial digital tuner) are converted into packet groups by the formatter unit, and the packet groups are saved in the work RAM. When data stored in the work RAM reach a predetermined size (for one or an integer multiple of CDA size), they are recorded on the disc.

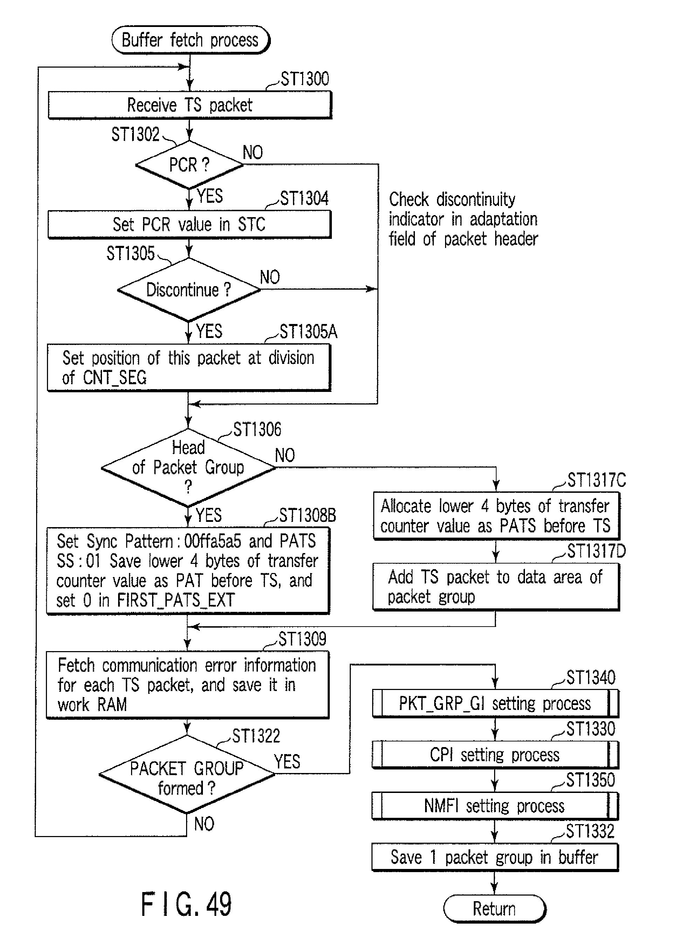

As the operations at that time (FIGS. 48 and 49), upon reception of TS packets, a group is formed every 170 packets, and a packet group header is generated. More specifically, this operation is executed as follows.

1) A TS packet is received.

2) If the fetched TS packet includes a PCR, the STC unit is corrected.

3) If the packet of interest corresponds to the head of a packet group, Sync_Pattern: 00ffa5a5a is set; otherwise, the control advances to 6).

4) PAT data is used as the arrival time of the TS packet, the lower 4 bytes of the PAT data are allocated before that TS packet, and the upper 2 bytes of the first PATS data are set in the packet group header as FTRST_PATS_EXT.

5) Zero is set in PATS_SS, and the control advances to 7).

6) In the TS packet fetched in the TS packet data area, the lower 4 bytes of the PATS data are appended before that TS packet, and the TS packet is set in a packet group data area.

7) It is checked if a packet group is formed (if 170 TS packets are grouped). If a packet group is not formed yet, the flow returns to 1). If the packet group is formed, a PKT_GRP_GI setting process, CCI process, and MNFI process are executed, and group data are temporarily saved in the buffer RAM. In this case, if the PATS accuracy is 4 bytes, FIRST_PATS_EXT in the processes 4) and 5) are omitted (or zero is set), and the PATS_SS is set to be 01.

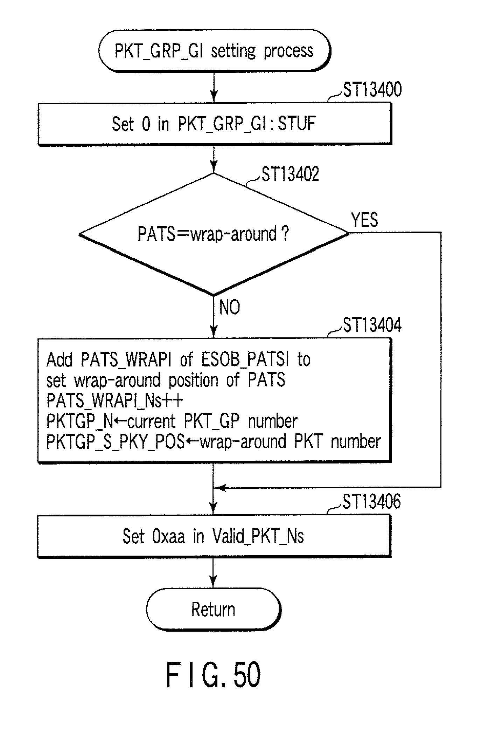

FIG. 50 is a flowchart (PKT_GRP_GI setting process) for explaining an example of the packet group general information setting process (ST1340) shown in FIG. 49. The PKT_GRP_GI setting process will be described below with reference to FIG. 50.

1) The packet type is checked. If the packet type indicates an MPEG-TS packet, 1 is set; otherwise, a value suited to that type is set in Packet Type.

2) A value corresponding to the BOOK version of the standard of interest is set in VERSION.

3) It is checked if the PATS has reached an end (wrap-around) in the packet group of interest. If the PATS has reached an end, that address information is set in the PATS_WRAPI in the ESOB_PATSI.

The data processes upon video recording are as follows (see FIGS. 46, 47, and 51).

1) A program to be recorded is determined using EPG (Electronic Program Guide) in the program setting process, reception of that program starts, and the determined program is recorded.

2) Upon reception of a recording command from the key input unit, the MPU unit loads management data from the disc drive unit and determines a write area. At this time, the MPU unit checks the file system to determine whether or not recording can be proceeded. If recording can be proceeded, the MPU unit determines a recording position; otherwise, the MPU unit displays a message that advises accordingly, thus aborting the process.

3) The contents of the management area are set to write data in the determined area, and the write start address of video data is set in the disc drive unit, thus preparing for data recording.

4) The time of the STC unit is reset. Note that the STC unit 102a is a system timer, and recording/playback is done with reference to the count value of this timer.

5) The PAT of a program to be recorded is loaded to determine the PID required to fetch the PMT of the target program. Then, the target PMT is loaded to determine the PIDs of data (video, audio) to be decoded (to be recorded). At this time, the PAT and PMT are saved in the work RAM unit of the MPU unit, and they are written in the management information. At this time, VMG file data is written in the file system, and required information is written in VMGI.

6) Video recording settings are made in respective units. At this time, a segmentation setting of data and a reception setting of TS packets are made in the formatter unit. Also, the PID of data to be recorded is set to record only a target video stream. Furthermore, the buffer is set to start holding of TS packets. Then, the formatter unit starts its operation, as shown in FIG. 48.

7) ESOB_ESI is generated based on the PMT (see FIG. 51).

8) If data stored in the buffer reaches a predetermined size, an ECC process is done via the D-PRO unit, thus recording the data on the disc.

9) During video recording, segmentation information is saved in the work RAM of the MPU unit periodically (before the buffer RAM of the formatter unit becomes full of data). The segmentation information to be saved is ESOBU segmentation information, which includes the ESOBU start address, ESOBU pack length, I-Pic end address, playback time, the ESOBU arrival time (PATS), the presence/absence of sequence header information, or the like.

10) It is checked if video recording is to end (if the user has pressed a video recording end key or if no recordable space remains). If video recording is to end, remaining segmentation information is fetched from the formatter unit, and is added to the work RAM. These data are recorded in management data (VMGI), the average recording rate upon video recording is recorded, and the remaining information is recorded in the file system.

11) If video recording is not to end, the control returns to d7) to continue the data fetch and playback processes.

In order to display on the TV, data is sent to the decoder unit simultaneously with the D-PRO unit, and is played back. In this case, the MPU unit makes settings upon playback in the decoder unit, which then automatically executes a playback process. The D-PRO unit forms ECC groups by combining every 16 packs, appends ECC data to each group, and sends them to the disc drive unit. When the disc drive unit is not ready to record on the disc, the D-PRO unit transfers the ECC groups to the temporary storage unit and waits until the disc drive unit is ready to record. When the disc drive unit is ready, the D-PRO unit starts recording. As the temporary storage unit, a large-capacity memory is assumed since it must hold recording data for several minutes or longer by high-speed access. Note that a microcomputer can make read/write access to the D-PRO unit via a dedicated microcomputer bus, so as to read/write the file management area and the like.

FIG. 51 shows the ESOB_ESI setting process.

1) PSI and SI are examined to check the number of set streams.

2) 4) and 5) are repeated in correspondence with the number of set streams.

3) A stream type is checked based on PSI and SI to determine if the stream of interest is a video/audio stream or another type of stream to branch the control to the next stream check processes.

4) The stream type is categorized to MPEG1 video, MPEG2 video, MPEG1 audio, MPEG2 audio,..., and internal data are checked depending on the determined type to read out respective kinds of attribute information.

5) In case of a video stream, ES_TY = 0, and respective kinds of attribute information are set (especially, resolution data, aspect information, and the like are extracted) to generate V_ATR. The control then advances to 8).

6) In case of an audio stream, ES_TY = 0x40, and respective kinds of attribute information are set (especially, the sampling frequency, the number of channels, and the like are extracted) to generate A_ATR. The control then advances to 8).

7) In case of another kind of stream, ES_TY = 0x80, and respective kinds of attribute information are set. The control then advances to 8).

8) Copy information is extracted to generate CP_CTL_INFOR.

9) New ESI is set based on the attribute information, and the control returns to check the next stream.

Furthermore, FIGS. 52 to 55 shows the STR_FI process.

1) The number of search pointers (SRP) is increased by one to add another ESOBI, an area is assured, and 0: MPEG_TS is set in PKT_TY.

2) The video recording time is set in ESOB_REC_TM. Note that the internal clock of the apparatus is set and corrected based on a TDT (Time Data Table), so that an accurate time can always be obtained.

3) Start and end PTMs are set.

4) If the stream type is a TS stream (ARIB, DVB), "188" is set in AP_PKT_SZ and "16" is set in PKT_GRP_SZ; otherwise, a value corresponding to the broadcast scheme is set in AP_PKT_SZ.

5) MPEG_TS is set in PKT_TY.

6) TS_ID, NETWORK_PID, and PMT_ID (the PID of PMT data used by the ESOB of interest: there are two description methods of the PID: a method of describing the PID using 13-bit real data, and a method of describing the order in the PMT) are set based on PAT data.

7) Program_Number (SERVICE_ID in PMT) and PCR_PID are set based on PMT data. Furthermore, as for FORMAT_ID and VERSION, default values in the apparatus (in case of the built-in tuner) or Registration_Descriptor values sent via a digital input (in case of an external digital input) are set.

8) Moreover, the number of recorded ESs is set. (The PMT is set with information: the number of all broadcasted ESs, but since not all ESs are always recorded upon video recording, the number of recorded ESs is set.)

9) The video recording start LB address is set in ADR_OFS, and a default PID is set. Note that the default video PID corresponds to that with a component tag value "00" or that of a stream corresponding to a component tag described in a main component group in case of multi-view TV.

10) A GPI setting process (to be described later), and the like are executed, and TMAPI is generated for each stream on the basis of each segmentation information.

11) PATS_SS is set according to the PATS accuracy (the same value as that in the packet group header).

12) An edit date is set.

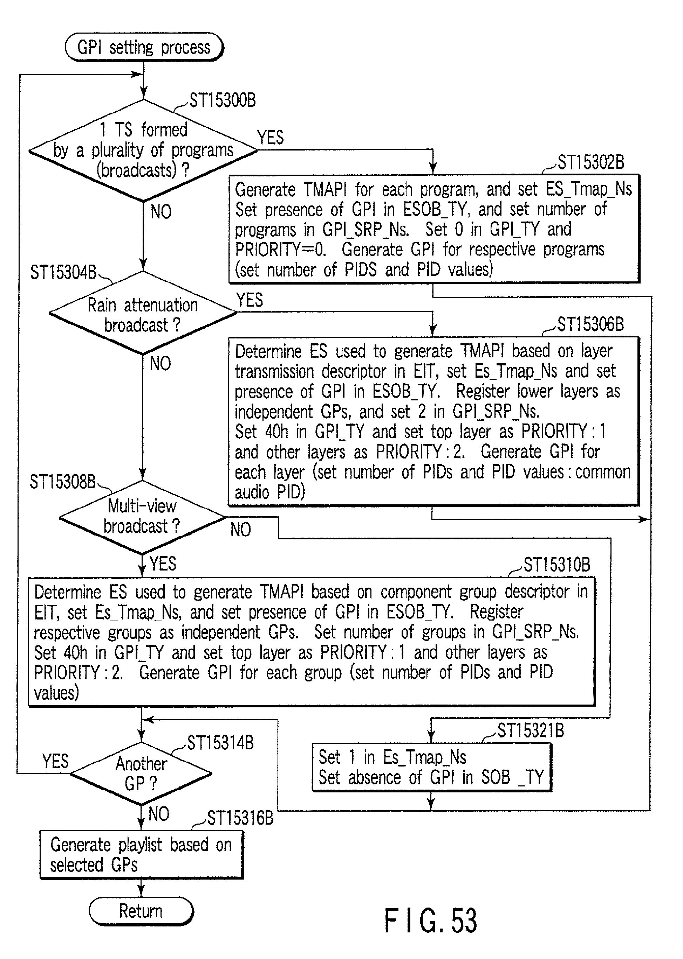

The GPI setting process is as shown in FIG. 53, and it will be described below.

1) A stream type is checked.

2) If a plurality of programs form one stream, information indicating the presence of GPI is set in ESOB_TY, GPI_TY = 0, PRIORITY = 0 for all programs, one GPI is generated per program, and the number of groups is set. The flow then advances to 5).

3) In case of a rain attenuated broadcast, information indicating the presence of GPI is set in ESOB_TY, GPI_TY = 40h, the top layer is set to be PRIORITY: 1, and other layers are set to be PRIORITY: 2. One GPI is generated per layer, and the number of groups is set. The flow then advances to 5).

4) In case of a multi-view broadcast, information indicating the presence of GPI is set in ESOB_TY, GPI_TY = 40h, the top layer is set to be PRIORITY: 1, other layers are set to be PRIORITY: 2, and one GPI is generated per view. It is checked if ESs to form another GP still remain. If such ESs still remain, the control returns to 1); otherwise, the number of groups is set, and the control advances to 5).

5) It is checked if another group remains. If such group remains, the control returns to 2); otherwise, a playlist is generated and registered based on the PID of the currently selected group, thus ending this process.

6) If no GP is available, information indicating the absence of GPI is set in ESOB_TY, and this process ends. In this way, if playback is made using the currently selected group, the playlist automatically generated (ST15316B) can be played back.

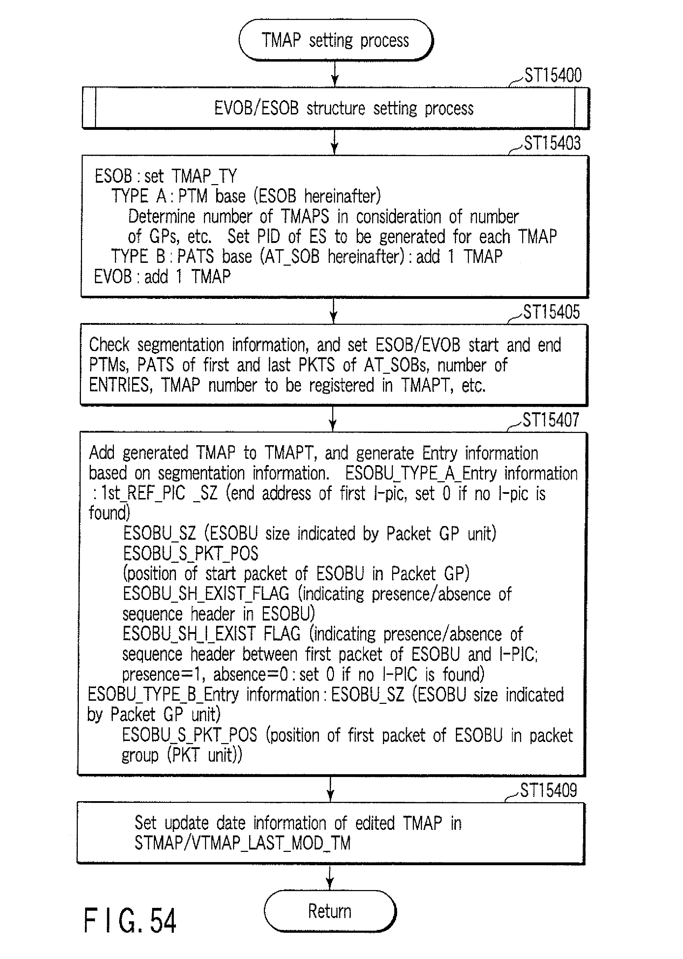

Furthermore, the TMAP setting process will be described below with reference to FIG. 54.

1) The ESOB/EVOB structure is determined.

2) In case of the ESOB, TMAP_TY is determined. If this ESOB is on the PTM base, ESs used to generate an STMAP are determined in consideration of the number of GPs, the number of ESs (the number of video ESs) is set as the number of TMAPs, and ES_PID to be generated is set for each TMAP. (However, one TMAP need not always be assigned to one GP. If no TMAP is available, another TMAP of the MAIN_GP or a GP with the identical GP_NUM is used to implement playback, search, special playback, and the like.) On the other hand, in case of an ESOB on the PATS base or EVOB, one TMAP is added.

3) The ESOB (PTM base)/EVOB start and end times, the start and end times for each TMAP, the number of entries, the arrival time of the first packet of the ESOB (PATS base), the arrival time of the last packet of the ESOB, and the like are set based on segmentation information.

4) A TMAPT is added, and the following entry information is set based on segmentation information. That is, in case of the ESOBU of TYPE A, 1st_REF_PIC_SZ (the end address of the first I-Pic; 0 is set if no I-Pic is available), ESOBU_SZ (indicating the ESOBU size by a packet GP unit), ESOBU_S_PKT_POS (the position of the first packet in a packet group), ESOBU_SB_EXIST_FLAG (indicating the presence of a sequence header in the ESOBU; present = 1, none = 0), ESOBU_SH_I_EXIST_FLAG (indicating the presence/absence of a sequence header from the head of the ESOBU to I-PIC; present = 1, none = 0: 0 is set if no I-Pic is available), and the like are set. In case of the ESOBU of TYPE B, ESOBU_SZ (indicating the ESOBU size by a packet GP unit) and ESOBU_S_PKT_POS (the position of the first packet in a packet group (PKT unit)) are set (ST15407).

5) ESOBU_SZ and ESOBU_PB_TM are generated. Note that the TMAPT information is stored as an independent file or is added to the end of the IFO file.

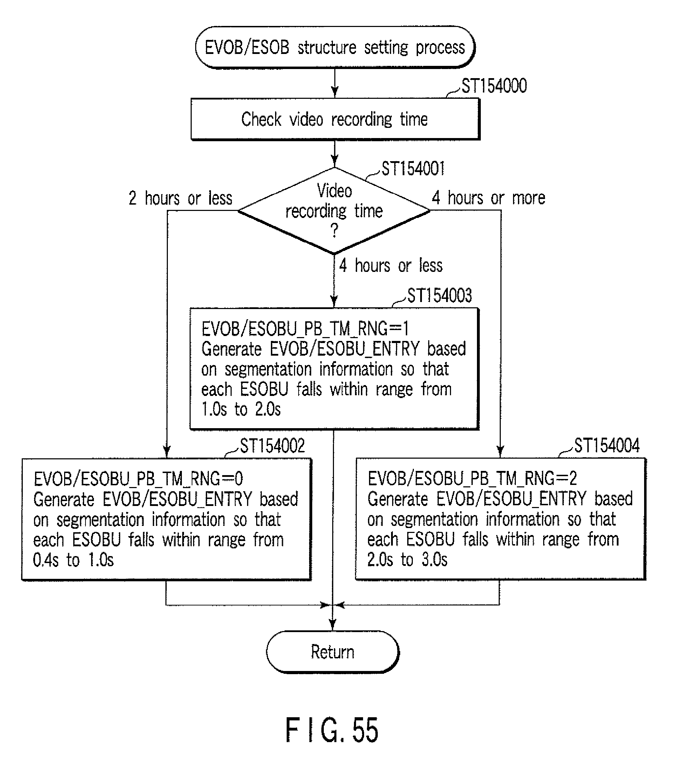

The EVOB/ESOB structure setting process will be described below with reference to FIG. 55.

1) The recorded time is checked. If the recorded time is equal to or shorter than two hours, the control advances to 2); if it falls within the range from two to four hours, the control advances to 3); or if it is equal to or longer than four hours, the control advances to 4).

2) "0" is set in EVOBU/ESOBU_PB_TM_RNG, and EVOBU/ESOBU_ENT data are generated based on segmentation information (information of 0.4s to 1s) so that each ESOBU has a time range of 0.4s to 1s. The control then advances to 5).

3) "1" is set in EVOBU/ESOBU_PB_TM_RNG, and EVOBU/ESOBU_ENT data are generated based on segmentation information (information of 0.4s to 1.0s) so that each ESOBU has a time range of 1s to 2s. The control then advances to 5).

4) "2" is set in EVOBU/ESOBU PB TM RNG, and EVOBU/ESOBU_ENT data are generated based on segmentation information (information of 0.4s to 1.0s) so that each ESOBU has a time range of 2s to 3s. The control then advances to 5).

5) This process ends.

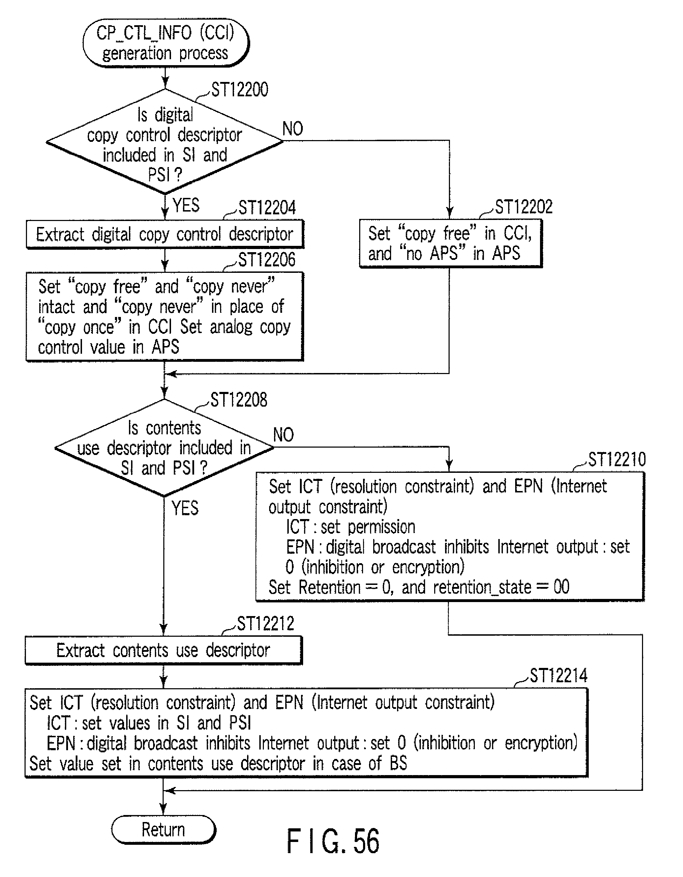

The CP_CTL_IFO setting process will be described below with reference to FIG. 56.

1) It is checked if the latest PMT and EIT include copy information. If copy information is included, copy information is formed and set based on that information. The control then advances to 3).

2) If no copy information is included, "copy free" is set.

3) It is checked if the latest PMT and EIT include contents-use descriptors. If the contents-use descriptors are included, ICT and EPN are set based on that information.

4) If the received TS packet does not include any copy information, ICT and EPN are formed as "copy free".

The CCI setting process will be described below.

1) It is checked if the latest PMT and EIT include copy information. If copy information is included, copy information is formed and set based on that information. The control then advances to 3).

2) If the received TS packet does not include any copy information, the same information as that in the previous pack is formed as copy information.

3) It is checked if the latest PMT and EIT include contents-use descriptors. If the contents-use descriptors are included, the following process is made. That is, if the values of the contents-use descriptors have changed in the middle of a packet group, dummy data is inserted in the previous packet group to form a new packet group after the changed position, and CCI is set based on that information. At this time, 1 is set in PKT_GRP_GI: STUF, and the number of valid packets is set in PKT_GRP_GI: VALID_PKT_Ns.

4) If the received TS packet does not include any copy information, CCI is formed as "copy free".

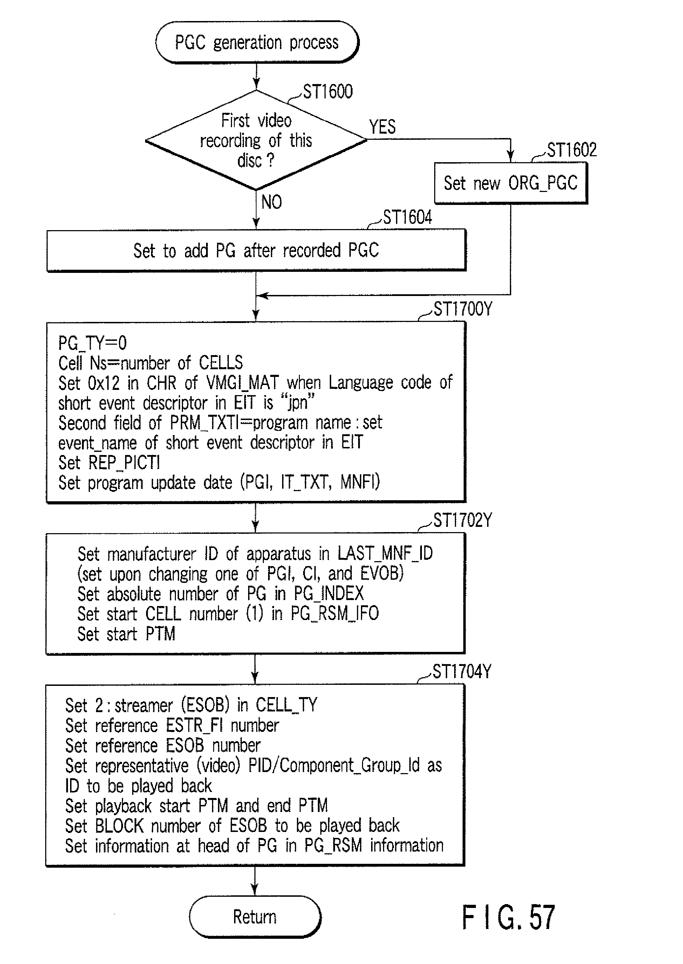

The PGC generation process will be described below with reference to FIG. 57.

1) It is checked if a disc of interest undergoes the first video recording. If the disc of interest undergoes the first video recording, new ORG_PGC is generated; otherwise, a setting is made to add PG after the ORG_PGC.

2) Erase permission: 0 is set in PG_TY, and the number of cells is set in Cell_Ns.

3) In case of ARIB, if language_code in a short event descriptor in an EIT is "jpn", "0x12" is set in CHR in VMG_MAT, EVENT_NAME is set in the second field of PRM_TXTI, and representative picture information is set in REP_PICTI.

4) The manufacturer ID of this apparatus is set in LAST_MNF_ID. As for this value, when PGI, CI, or EVOB has been changed, the manufacturer ID of the apparatus used to change such information is set to identify the manufacturer of the last apparatus used to execute edit and record processes. With this manufacturer ID, when an apparatus of another manufacturer is used to change the recorded contents of a disc, a suitable countermeasure can be easily taken.

5) The absolute number of PG is set in PG_INDEX to allow another application software or the like to refer to each PG. Furthermore, this PG update date information is recorded. At this time, if MNFI and/or IT_TXT (with the same manufacturer code) supported by this apparatus are/is found, the update date information of corresponding data is also set.

6) Information unique to each manufacturer is set in MNFI.

7) Information indicating a streamer is set in CELL_TY (CELLI).

8) The reference ESOB number is set, the representative (video) PID or Component_Group_Id is set as the ID to be played back, and the number of pieces of EPI, playback start and end PTMs, and EPs are set.

9) Start information is set in PG_RSM_INF so that playback can start from the head of the program. The factors of automatic EP assignment in the video and time relationships are a constant time and a video mode change (an aspect ratio, and large motion vectors), and the first packet (Unit Start Indicator) of a video frame and that (the first packet of a sequence header, the first packet of I-PIC) of a GOP are combined with these conditions. Furthermore, the factors of automatic EP assignment in the audio relationship are a change in audio (a change in audio volume or the like)/audio mode (ST/MONO), and the first packet (Unit Start Indicator, frame header) of an audio frame is combined with these conditions.

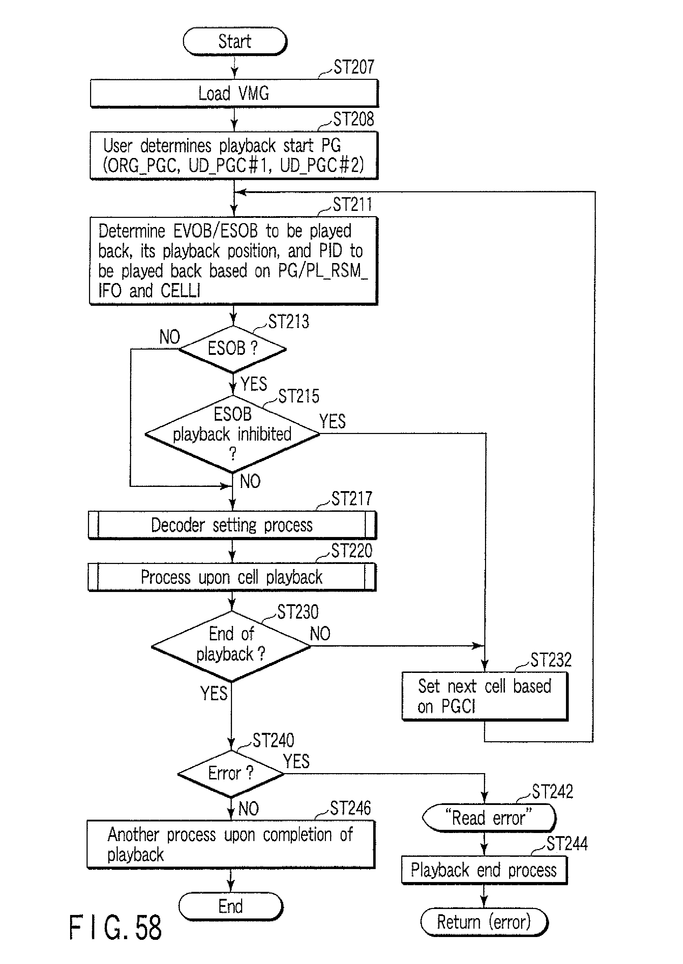

The data processes upon playback are executed as follows (see FIGS. 58 to 64).

1) A disc check process is made first to check if the disc of interest is a rewritable disc (R, RW, RAM). If the disc of interest is not a rewritable disc, a message that advises accordingly is returned, and the process ends.
2) The file system of the disc is read out to check if data has already been recorded. If no data is recorded, a message "no data is recorded" is displayed, thus ending the process.
3) The VMG file is loaded, and programs and cells to be played back are determined (selected by the user). In this case, if a playback process in the recorded order is selected, playback is made according to ORG_PGCI; if a playback process for each program is to be made, playback is made according to UD_PGC with a number corresponding to the program to be played back.
4) The value of PKT_TY is read out to check if the broadcast scheme is supported. If the broadcast scheme is unsupported, a message that advises accordingly is displayed, and the process ends (or the control advances to process the next cell).
5) The ESOB/EVOB to be played back, playback start PTM, and the like are determined based on title information, resume information (PL_RSM_IFO, PG_RSM_IFO) to be played back, and the like, and a playback start file pointer (logical address) is determined based on the playback start PTM. Furthermore, respective decoder units are set based on STI and ESI values to prepare for playback. Also, APS settings (e.g., APS = ON/OFF, APS type, and the like) are set in the video decoder based on CCI in the packet group header at the head position, and CGMSA settings are made in the video decoder based on digital copy control. Moreover, if a digital output (IEEE1394, Internet, or the like) is available, 0: scramble ON or output inhibition or 1: direct output is set in the output IC based on the EPN value. If ICT = 0, the image resolution is constrained, i.e., HD is converted into SD; if ICT = 1, "direct output" is set in the output IC. At this time, if the playback start frame is not I-picture data, decoding starts from immediately preceding I-picture, and display starts when the target frame is decoded, thus starting normal playback.
6) A process upon playback start is executed.
7) Respective decoders are set.
8) A cell playback process is executed, and it is then checked if playback is to end. If playback is to end, an error check process is executed. If any error is found, a message that advises accordingly is displayed; otherwise, a playback end process is executed, thus ending this operation.
9) The next cell is determined based on PGCI, and it is checked if the settings of the decoder have been changed. If the settings of the decoder have been changed, changed attributes are set in the decoder so as to change decoder settings in response to the next sequence end code.
10) It is checked if playback is complete. If playback is not complete yet, the control returns to 6).

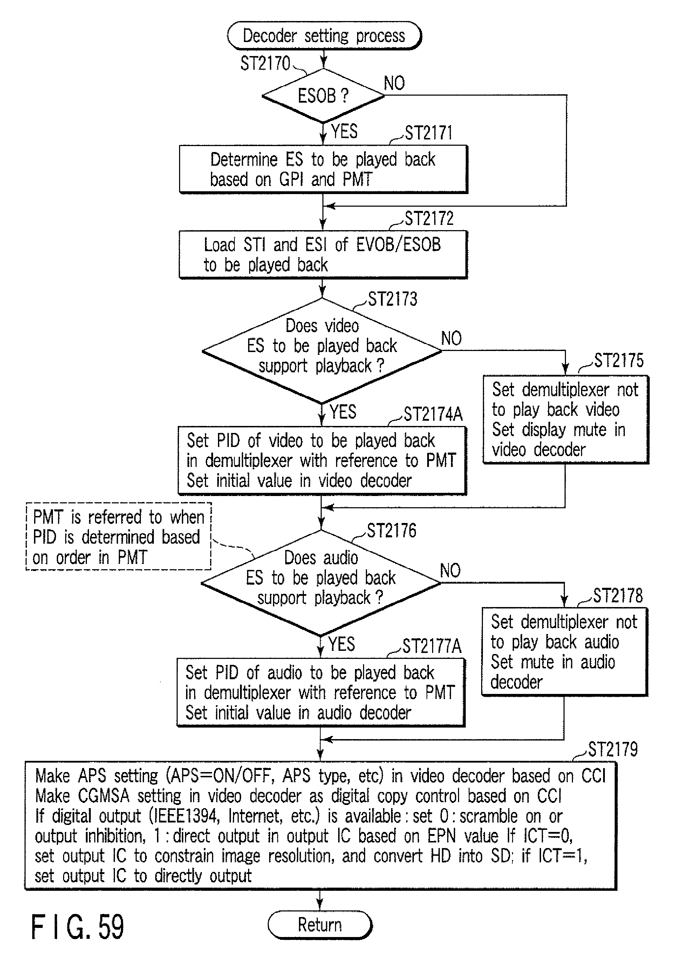

The decoder setting process will be described below with reference to FIG. 59.

1) A group to be played back is determined, and ESs to be played back are determined in accordance with GPI.
2) Attribute information (STI, ESI) is loaded.
3) It is checked if a format is supported by the recorder. If the format is supported, corresponding settings are made; otherwise, mute is set.
4) It is checked if video data to be played back can be played back. If video data can be played back, playback preparation is made; otherwise, mute is set. In this case, the PID can be used intact if the 13-bit PID is set. However, the PID is determined with reference to PMT data if it is set based on the order in the PMT data.
5) It is checked if audio data to be played back can be played back. If the audio data can be played back, playback preparation is made; otherwise, mute is set. In this case, the PID can be used intact if the 13-bit PID is set. However, the PID is determined with reference to PMT data if it is set based on the order in the PMT data.
6) A copy control process is executed based on CCI information.

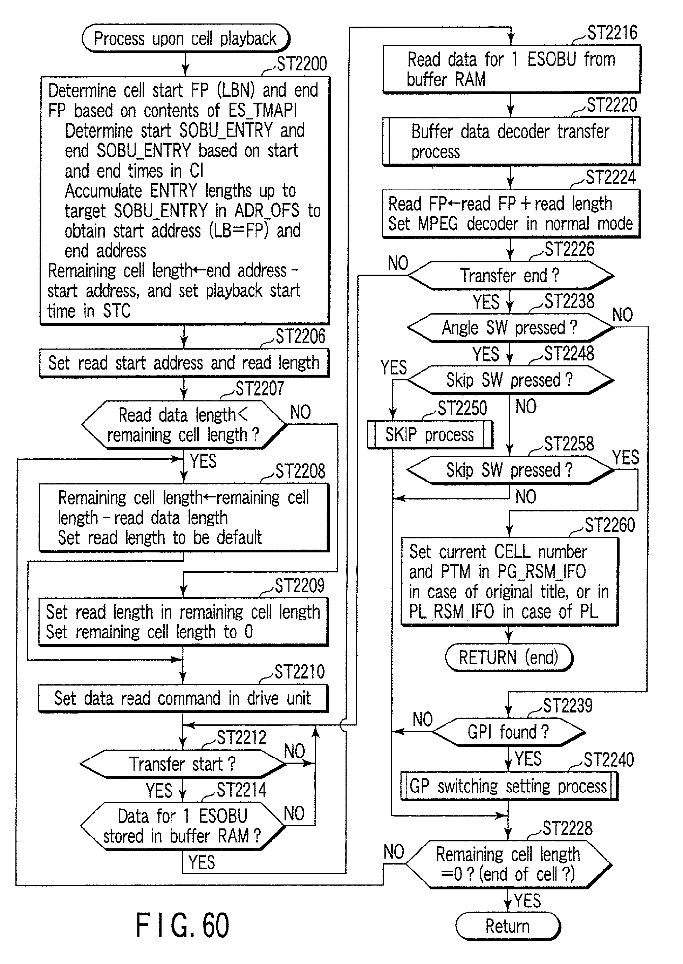

The cell playback process is executed as follows (see FIG. 60).

1) Cell start FP (LBN) and end FP are determined on the basis of the contents of TMAPI. Furthermore, start ESOBU_ENTRY and end ESOBU_ENTRY are determined based on the start and end times in CELLI, and the data lengths of entries until target ESOBU_ENTRY are accumulated in ADR_OFS, thus obtaining a start address (LB = FP) and end address. The remaining CELL length is calculated by subtracting the start address from the end address, and the playback start time is set in the STC. The PID to be played back is determined and is set in the decoder (STB, digital tuner). In this case, the PID can be used intact if the 13-bit PID is set. However, the PID is determined with reference to PMT data if it is set based on the order in the PMT data.

2) A read process during playback is executed to determine the read address and read size based on the start file pointer.

3) The read unit size to be read out is compared with the remaining cell length. If the remaining cell length is larger than the read unit size, a value obtained by subtracting the read unit size to be read out from the remaining cell length is set as the remaining cell length. If the remaining cell length is smaller than the read unit size, the read unit size is set to be the remaining cell length, and the remaining cell length is set to be zero.

4) The read length is set to be a read unit length, and the read address, read length, and read command are set in the disc drive unit.

5) The control waits until data for one ESOBU are stored. If data for one ESOBU are stored, a buffer decoder transfer process is executed, and the control advances to the next process.

6) It is checked if transfer is complete. If transfer is complete, the control advances to the next process.

7) It is checked if an angle key or the like has been pressed. If the angle key has been pressed, it is checked if GPI is available. If GPI is available, a GP switching process is executed; otherwise, the control advances to the next process without any process.

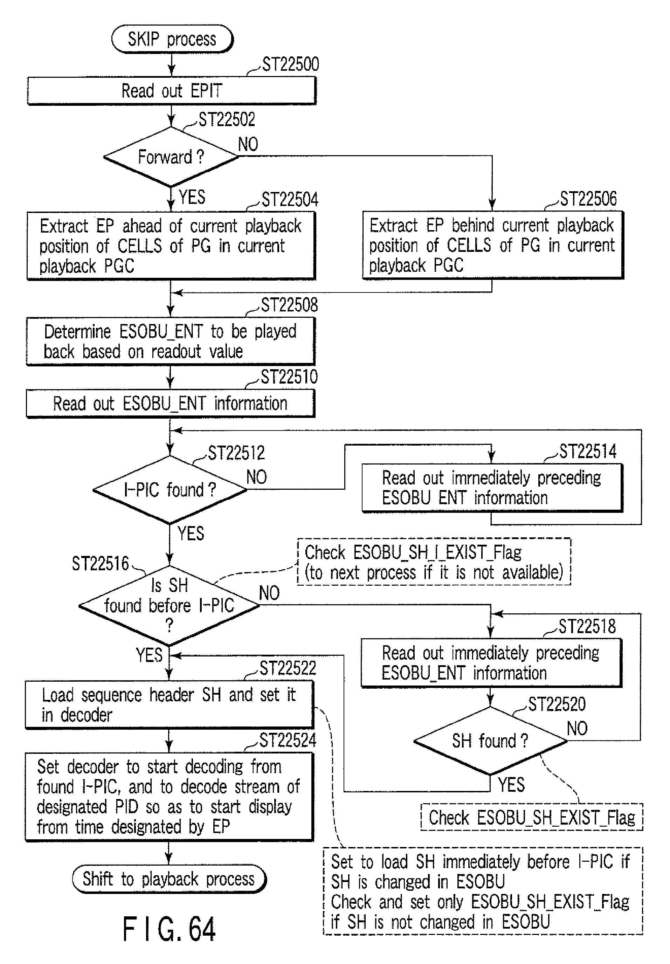

8) It is checked if a Skip SW has been pressed. If the Skip SW has been pressed, a SKIP process (FIG. 64) is executed.

9) It is checked if a STOP SW has been pressed. If the STOP SW has been pressed, resume information (RSM_IFO) is saved in PG_RSM_IFO in case of title playback or in PL_RSM_IFO in case of playlist playback, and an end process is executed.

10) The remaining cell length is checked. If the remaining cell length is not "00", the control returns to 2); if it is "00", this process ends.

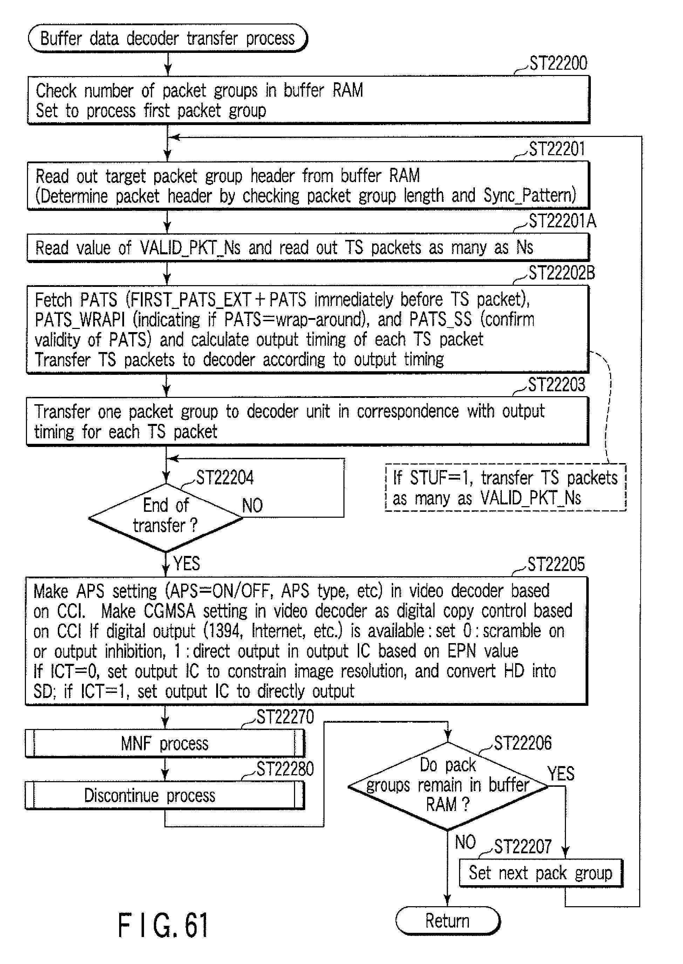

The buffer data decoder transfer process will be described below with reference to FIG. 61.

1) The number of packet groups in the buffer RAM is checked. If no packet group is found, the control skips the process. If one or more packet groups are stored in the buffer RAM, a setting is made to process the first packet group.

2) A target packet group is read out from the buffer RAM. The head of the packet group is detected based on the packet group length and Sync_Pattern.

3) The STUF bit of the packet group header is checked. If "1" is set, valid packets are extracted in accordance with the value of VALID_PKT_Ns. If "1" is not set, it is determined that 170 packets are valid ones.

4) The PATS accuracy is detected based on PATS_SS, and a transfer time of each TS packet is calculated from the PATS data (4 bytes), FIRST_PATS_EXT, and PATS_WRAPI on the basis of that accuracy information, and each TS packet is sent to the decoder unit (STB unit) at that time.

In case of 6-byte accuracy: A calculation is made using FIRST_PATS_EXT as the upper 2 bytes of PATS data of the first packet of the packet group, and the lower 4 bytes of the immediately preceding PATS data from there.

In case of 4-byte accuracy: PATS data is calculated from the immediately preceding PATS data and PATS_WRAPI in consideration of a carry.

In case of no accuracy: After packet data is extracted, a TS packet is output as soon as a request is received.

5) It is checked if MNF is available. If MNF is available, it is checked if its ID matches that of the manufacturer of the apparatus of interest. If the two IDs match, that data is loaded to execute a predetermined process (process unique to each company).

6) A CCI process is executed.

7) A discontinue process is executed.

8) The control waits for completion of transfer, and it is checked if packet groups still remain in the buffer RAM. If no packet group remains in the buffer RAM, this process ends.

9) A setting is made to process the next packet group, and the control returns to 2).

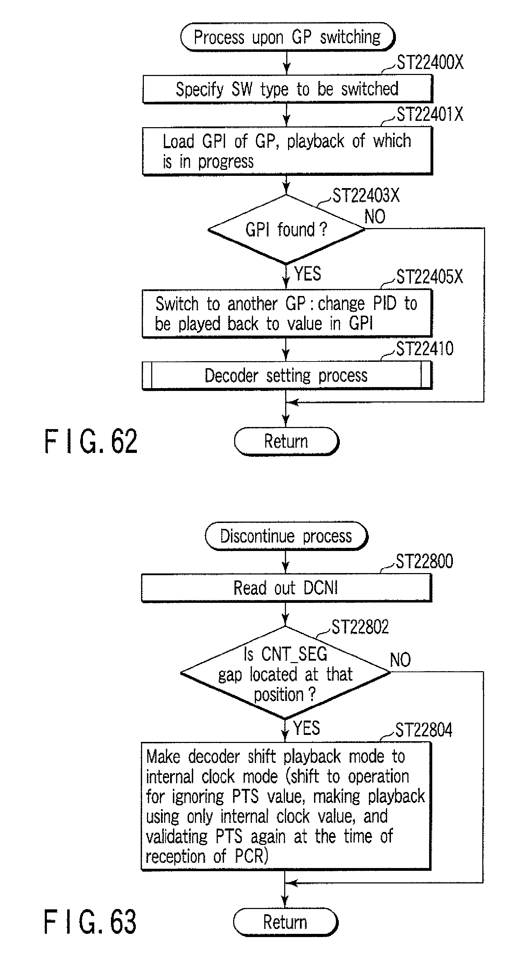

The GP switching process is executed, as shown in FIG. 62.

1) The type of selector SW is checked.

2) GPI of the GP whose playback is currently in progress is loaded.

3) It is checked if the GPI is stored. If no GPI is stored, this process ends.

4) The GPI information is loaded to switch another GP, and a decoder setting process is executed.

The discontinue process will be described below with reference to FIG. 63.

1) DCNI is checked. If a CNT_SEG gap is found at the playback position, the playback mode of the decoder is shifted to an internal clock mode (an operation mode that ignores the PTS value, makes playback using only internal clock values, and enables PTS data upon reception of PCR data: external sync mode), thus ending this process.
2) If no CNT_SEG gap is found, this process ends without any process.

FIG. 64 is a flowchart for explaining the SKIP operation. The skip process can be executed as follows.

1) An EPIT is loaded.
2) The SKIP direction (determined by the type of SKIP key) is checked. If the SKIP direction is a forward direction, an EP which is located ahead of the current playback position and has the same PID as the current playback PID is searched for, and its information is loaded. On the other hand, if the SKIP direction is a backward direction, an EP which is located before the current playback position and has the same PID as the current playback PID is searched for, and its information is loaded.
3) An ESOBU_ENT to be played back is determined based on the detected EPI.
4) ESOBU_ENT information is loaded to determine the playback start time (STC).
5) It is checked if the target ESOBU_ENT includes I-PIC (1ST_REF_SZ = 0). If the target ESOBU_ENT includes no I-PIC, the immediately preceding ESOBU_ENT information of the identical group is loaded to repeat 5).
6) It is checked if a sequence header exists before I-PIC in the ESOBU_ENT (ESOBU_SH_I_EXIST_Flag). If the sequence header exists, the control advances to 8). (If only ESOBU_SH_EXIST_Flag is found, this process is also done based on ESOBU_SH_EXIST_Flag.)
7) The immediately preceding ESOBU_ENT information of the identical group is loaded, and it is checked if a sequence header exists in the ESOBU_ENT (ESOBU_SH_EXIST_Flag). If no sequence header exists, the control repeats 7).
8) The SH is loaded and is set in the decoder. Then, the I-PIC found previously is read out, and the decoder is set to start decoding from that position, and to start display from the playback time designated by the EP, thus shifting to a normal playback process.

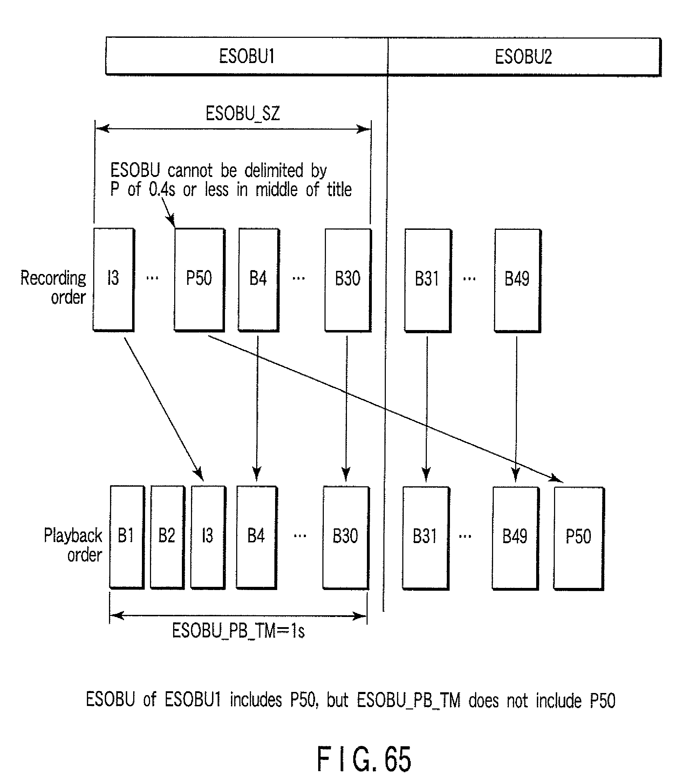

FIG. 65 is a view for explaining the contents of an ESOBU (type A). The ESOBU of type A can be defined, for example, as follows.

<Definition of ESOBU of Type A>

(1) An ESOBU is defined as a short sequence stream which starts from a sequence header followed by I-PIC, and has a playback time from 0.4s to 1s.
(2) If the next sequence header followed by I-PIC cannot be found within a playback time of 1s, this ESOBU ends within 1s, and 0 is set in 1STREF_SZ.
(3) Even "in case of (2)", it is recommended that the ESOBU ends before reference picture (i.e., I-PIC or P-PIC) as far as possible.
(4) If a reference picture cannot be found for a long period of time, and if no point that meets the above conditions "(1) to (3)" is found, the ESOBU may end before non-reference picture (B-PTC).
In this case, picture (P50) obtained by decoding the last reference picture of this ESOBU is not included in a count of ESOBU_PB_TM, but is included in that of ESOBU_SZ (see FIG. 65).
(5) The ESOBU playback time (ESOBU_PB_TM) is measured in the playback order (order upon displaying respective pictures), and the ESOBU size (ESOBU_SZ) is measured in the recording order (order upon recording on a disc).
(6) In all cases, the ESOBU boundary lines align at picture boundaries (immediately before the sequence header or picture header).
(7) An ESOBU except for the following case has a playback time from 0.4s to 1s. The last ESOBU of an ESOB may have a playback time shorter than 0.4s. In case of an ESOBU which does not start from a sequence header followed by I-PIC, a playback time shorter than 0.4s may be set.

Note that an ESOBU of type B can be defined as follows.

<Definition of ESOBU of Type B>

An ESOBU is defined as a set of packets which have arrived within a predetermined time period as arrival times (PATS).

As described above, detailed control operations compatible to digital broadcast can be implemented.

Note that the present invention is not limited to the aforementioned embodiments, and various modifications may be made on the basis of techniques available at that time without departing from the scope of the invention when it is practiced at present or in the future. The respective embodiments may be combined as needed as much as possible, and combined effects can be obtained in such case. Furthermore, the embodiments include inventions of various stages, and various inventions can be extracted by appropriately combining a plurality of required constituent elements disclosed in this application. For example, even when some required constituent elements are omitted from all the required constituent elements disclosed in the embodiments, if the problems to be solved can be solved, and the effects of the present invention can be obtained, an arrangement from which those required constituent elements are omitted can be extracted as an invention.

**Claims**

1. An information storage medium configured to record a predetermined digital stream signal, **characterized in that**
   the information storage medium has a management area and a data area,
   the data area is configured to separately record data of the digital stream signal as a plurality of objects, and
   the management area is configured to record predetermined management information, which includes a flag bit (PATS_SS) indicating validity/invalidity of information (PATS) associated with a reception time of the digital stream signal.

2. An information storage medium according to claim 1, **characterized in that**
   the predetermined management information further includes information (ESOB_DCNI) indicating discontinuity of the digital stream signal.

3. An information storage medium according to claim 1 or 2, **characterized in that**
   the predetermined management information further includes information (SOBU_SH_EXIST_Flag) associated with the sequence header.

4. A recording method using the information storage medium of claim 1, 2, or 3, **characterized in that**
   the predetermined digital stream signal is recorded on the data area.

5. A playback method using the information storage medium of claim 1, 2, or 3, **characterized in that**
   the predetermined digital stream signal is played back from the data area.

6. A recording apparatus using the information storage medium of claim 1, 2, or 3, **characterized by** comprising:

   an arrangement for recording the predetermined digital stream signal on the data area.

7. A playback apparatus using the information storage medium of claim 1, 2, or 3, **characterized by** comprising:

   an arrangement for playing back the predetermined digital stream signal from the data area.

(a)

Disc-shaped information storage medium 100

(b)

| /110 | /111 | /112 | /113 |
|---|---|---|---|
| Lead-in area | Volume/file structure information area | Data area | Lead-out area |

(c)

| /120 | /121 | /122 |
|---|---|---|
| General computer information recording area | AV data recording area | General computer information recording area |

(d)

| /130 | /131 | /132 | /133 |
|---|---|---|---|
| AV data management information recording area | ROM Video object group recording area | VR object group recording area | Stream object group recording area |

(e)

| /140 | | /140 | /141 | | /141 |
|---|---|---|---|---|---|
| EVideo· Object | ... | EVideo· Object | EStream· Object | ... | EStream· Object |

(f)

| /142 | | 142＼ | /143 | | 143＼ |
|---|---|---|---|---|---|
| EVOBU | ... | EVOBU | ESOBU | ... | ESOBU |

(g)

| /144 | /145 | 146＼ | | /147 | | 147＼ |
|---|---|---|---|---|---|---|
| CTL_Pack | V_Pack | A_Pack | ... | Packet_Group | ... | Packet_Group |

Packet_Group length=16 logical blocks

(h)

| /161 | /162 | /163 | /162 | | 163＼ |
|---|---|---|---|---|---|
| Packet_Group Header | PATS | MPEG-TS packet | PATS | ... | MPEG-TS packet |

F I G. 1

EP 1 632 948 A1

Playback management information layer 10

| Program chain (PGC) | | | | | | 11 |
|---|---|---|---|---|---|---|
| Program | | | Program | ....... | Program | 12 |
| 13 | 13 | 13   12 | 13   12 | | 13 | |
| Cell | Cell | Cell | Cell | ....... | Cell | Cell | 13 |

Playback time : designate playback location of CELL by PTS

Stream object management information layer 20

EVOB management information layer 23

| 21 | |
|---|---|
| ESOBI | ESOBI | .... |
| ESOBUI | ... | ESOBUI | ESOBUI | ....... | 21 |

| EVOBI | | 24 |
|---|---|---|
| EVOBU | ... | EVOBU | 25 |

25

141

Global information 22

Stream object layer 30

| ESOB | ESOB | ... | 141 |
|---|---|---|---|

| ESOBU | ESOBU | ESOBU | ... | ESOBU | ... |
|---|---|---|---|---|---|

143   143

147   32768 Bytes   147

| Packet_Group | Packet_Group | ..... | For constant playback time | Packet_Group |
|---|---|---|---|---|

147

152 Bytes 161   4 Bytes 162   188 Bytes 163   163

| Packet_Group Header | PATS | TS Packet_1 | ... | TS Packet_170 |
|---|---|---|---|---|

EVOB layer 35

| EVOB | ... | 140 |
|---|---|---|
| EVOBU | ... | 142 |
| Pack | Pack | ... |

F I G. 2

Root

DVD_HDVR

| | |
|---|---|
| HR_MANGER.IFO | HDVMG File |
| HR_VTMAP.IFO | VOB TMAP File |
| HR_STMAPx.IFO | SOB TMAP File |
| HR_SFIx.IFO | SOB STR_FI File |
| HR_MOVIEO.VRO | VR Object File |
| HR_STRxx.SRO | SR Object File |
| HR_STILL.VRO | Still Video Object file |
| HR_AUDIO.VRO | Audio object file |
| HR_VTMAP.BUP | VOB TMAP Backup File |
| HR_STMPx.BUP | SOB TMAP Backup File |
| HR_SFIx.BUP | SOB STR_FI Backup File |
| HR_MANGER.BUP | HDVMG Backup File |

FIG. 3

25

Disc management identification information (VMG_ID)

HR_MANGR_EA

HDVR_MGI_EA

...

Version information

DISC_RSM_MRKI

EX_DISC_REP_PICI

...

Stream object management information start address (STR_FIT_SA)

...

Original PG information start address (ORG_PGCI_SA)

UD_PGC information start address (UD_PGCIT_SA)

HDVR_MG

HDVR_MGI

MGI_MAT

EX_PL_SRPT

...

ESTR_FIT

EX_ORG_PGC information

EX_UD_PGC information

EX_TXTD_MG

EX_MNFIT

HR_MANGR_EA : Address from head of file to last of MNFIT
HDVR_MGI_EA : Address from head of file to last of HDVR_MGI

F I G. 4

| DISC_RSM_MRKI | | PGCN : Target PGC number : 0=ORG_PGC |
| --- | --- | --- |
| | | PGN : Target PG number : 0=UD_PGN |
| | | CN : Target CELL number |
| | | MRK_PT : PTM/PATS/S_EVOB_ENT number on target EVOB |
| | | ES_PID : Target video (default) PID (in case of ESOB/AT_SOB) |
| | | MRK_TM : Update date |

F I G. 5

| EX_DISC_REP_PICI | | PGCN : Target PGC number : 0=ORG_PGC |
| --- | --- | --- |
| | | PGN : Target PG number : 0=UD_PGN |
| | | CN : Target CELL number |
| | | MRK_PT : PTM/PATS/S_EVOB_ENT number on target EVOB |
| | | ES_PID : Target video (default) PID (in case of ESOB/AT_SOB) |
| | | Playback time/playback end time |
| | | PIC_CL_TM : Update date |

F I G. 6

HDVR_MG

HDVR_MGI
- MGI_MAT
- EX_PL_SRPT
- ...
- ESTR_FIT
- EX_ORG_PGC information
- EX_UD_PGC information
- EX_TXTD_MG
- EX_MNFIT
- EPIT

| EX_PL_SRPTI | EX_PL_SRP_Ns : Number of EX_PLS |
| | EX_PL_SRPT_EA : End address of this table |
| EX_PL_SRP #1 | |
| ... | |
| EX_PL_SRP #n | |

| | PGC_N : PGC number |
| | CRE_TM : Date of creation |
| | PRM_TEXT information |
| | IT_TEXT_SRPN |
| PL_REP_PICTI | CN : Target CELL number |
| | PIC_PT : PTM/PATS/S_EVOB_ENT number on target EVOB |
| | ES_PID : Target video (default) PID (in case of ESOB/AT_SOB) |
| | Playback time/playback end time |
| | PIC_CL_TM : Update date |
| PL_RSM_MRKI | CN |
| | PICT_PT |
| | ES_PID : Target video (default) PID (in case of ESOB/AT_SOB) |
| | MRK_TM |
| PL_INDEX | |
| PL_LAST_MOD_TM | |

PL_REP_PICTI : Representative picture information
PL_RSM_MRKI : Position information where playback of each PL is interrupted (start information used when playback is resumed next time)
PICT_PT : Playback interrupted PTM/PATS (in case of PATS base)
MRK_TM : Date of marking
PL_INDEX : PL absolute number
PL_LAST_MOD_TM : Describe update date of PL to prevent inconsistency in case of PL

F I G. 7

28

```
                    ┌─────────────────────┐
                    │      HDVR_MG        │
                    └─────────────────────┘

              ┌───────────────────────────────┐
              │           HDVR_MGI            │
              ├───────────────────────────────┤
              │             ...               │
              ├───────────────────────────────┤
              │          EX_M_AVFIT           │
              ├───────────────────────────────┤
              │             ...               │
              ├───────────────────────────────┤
              │           ESTR_FIT            │
              ├───────────────────────────────┤
              │             ...               │
              └───────────────────────────────┘
```

```
┌─────────────────────────────────────────────┐
│ EX_M_AVFIT                                   │
│   ┌───────────────────────────────────────┐ │
│   │       VTMAP_LAST_MOD_TM               │ │
│   └───────────────────────────────────────┘ │
├─────────────────────────────────────────────┤
│ EX_M_VOB_STI#1-#n                            │
├─────────────────────────────────────────────┤
│ EX_M_AVFI                                    │
│   ┌───────────────────────────────────────┐ │
│   │         EX_AVFI_GI                     │ │
│   ├───────────────────────────────────────┤ │
│   │         M_VOBI #n                      │ │
│   │   ┌───────────────────────────────┐   │ │
│   │   │       EVOB_TMAPI              │   │ │
│   │   └───────────────────────────────┘   │ │
│   ├───────────────────────────────────────┤ │
│   │           ...                         │ │
│   └───────────────────────────────────────┘ │
└─────────────────────────────────────────────┘
```

VTMAP_LAST_MOD_TM : Update date of VTMAP file
(confirm if this value is the same as that described in VTMAP file)

FIG. 8

EVOB_TMAPI

EVOB_TMAP_GI

EVOBU_ENT_Ns
TM_OFS
ADR_OFS
EVOBU_PB_TM_RNG
EX_VTMAP_N
EVOB_SZ

ADR_OFS
    (LB address) from head of file to head of EVOB
EVOBU_PB_TM_RNG
    EVOBU playback time range
    1=0.4s~1.2s, 2=1s~2s, 3=2s~3s

EX_VMAP_N : VTMAP number : VTMAP number from head in VTMAP file (VTMAP)
this number may be omitted when recording order of VTMAP.IFO is determined
EVOB_SZ : EVOB size (number of LBs)

F I G. 9

| HDVR_MG |
| --- |

| HDVR_MGI |
| --- |
| ... |
| EX_M_AVFIT |
| ... |
| ESTR_FIT |
| ... |

| ESTR_FI_SRPTI |
| --- |
| ESTR_FI_SRP_Ns : Number of ESTR_SRPs |
| ESTR_FI_SRPT_EA : End address of this table |

| ESTR_FI_SRP #1 |
| --- |
| ESTR_FI_FN : ESTR_FI file name |
| ESTR_FI_LAST_MOD_TM |
| ESTR_FI_SZ : size of STR_FI file |
| AP_FORMAT_1 : Broadcast scheme |
| Count_code : Country code |
| PKT_TY : Packet type |
| ESOBI_Ns : Number of pieces of ESOBI |

... 

| ESTR_FI_SRP #n |
| --- |

| ESTR_FI is independent file |
| --- |

| STMAP is independent file |
| --- |

ESTR_FI_SRP_Ns : Number of ESTR_SRP : $0 \leqq ESTR\_FI\_SRP\_Ns \leqq 7$
ESTR_FI_LAST_MOD_TM : Update date of ESTR_FI file
(confirm if this value is the same as that described in ESTR_FI)
ESTR_FI_SZ : ESTR_FI file size
SOBI_Ns : Number of SOBI : $0 \leqq SOBI\_Ns \leqq 999$
ESTR_FI_FN : ESTR_FI file name : HR_SFInn.IFO
This "nn" part is reflected in File Name : HR_STMnn.IFO of
STMAP to determine file name of STMAP

F I G. 10

EP 1 632 948 A1

| HR_SFIxx.IFO |
|---|

SFI_ID : Stream file information ID
  "DVD HR SFI00"=(HR_SFI00.IFO)
                    (HR_STM00.IFO)
  SFI of Type B (when recording is done without cognizance)
  "DVD HR SFInn"=(HR_SFInn.IFO)
                    (HR_STMnn.IFO)
  SFI of Type A (when recording is done after cognizance)
STR_FI_LAST_MOD_TM : Update date of STR_FI file
  (used to synchronize files by confirming if this value is the
  same as update date information described in STR_FI_SRP)
STMAP_LAST_MOD_TM : Update date of STMAP file
  (used to synchronize files by confirming if this value is the
  same as update date information described in STMAP file)
STMAP_SZ : STMAP file size
ESOBI_SRP : ESOBI_SA
PATS_SS : PATS_SS : 00=both PATS and FIRST_PATS_EXT are
valid, 01=only PATS is valid, 10=both PATS and
FIRST_PATS_EXT are invalid

| ESTR_FI_GI |
|---|
| SFI_ID |
| ESTR_FI_EA : End address of ESTR_FI |
| VERN : Version number |
| STR_FI_LAST_MOD_TM |
| PKT_TY : Packet type |
| PKT_SZ : Packet size |
| PKT_GRP_SZ : Packet group size |
| PKT_Ns : Number of packets in packet group |
| ESOB_SRP_Ns : Number of SRPs |
| STMAP_LAST_MOD_TM |
| STMAP_SZ : size_of_STMAP |
| PATS_SS |
| ESOBI_SRP #1 |
| ... |
| ESOBI_SRP #K |
| ESOBI #1 |
| ... |
| ESOBI #K |

F I G. 11

| | |
|---|---|
| 132231 | ESOBI_GI |
| 132232 | ESOB_ESI#1 |
| | ... |
| 132232 | ESOB_ESI#m |
| 132233 | ESOB_DCNI |
| 132234 | ESOB_PATSI |
| 132235 | ESOB_SMLI |
| 132236 | ESOB_GPI |
| 132237 | ESOB_TMAPI |

In case of Type B, ESOB_ESI, ESOB_DCNI, ESOB_SMLI, and ESOB_GPI are not present

| |
|---|
| ESOB_REC_Mode |
| ESOB_TY |
| AP_FORMAT_2 |
| NETWORK_ID |
| TS_ID |
| SERCICE_ID |
| Format_ID |
| ESOB_REC_TM |
| ESOB_REC_TM_SUB |
| LOCAL_TM_ZONE |
| ESOB_DURATION |
| ESOB_S_PTM |
| ESOB_E_PTM |
| SERVICE_TYPE |
| CP_CTRL_INFO |
| Video recording rate |
| Reserved |
| PMT_PID |
| PCR_PID |
| ESOB_DEF_PID |
| ESOB_ES_Ns |
| ESOB_V_ES_Ns |
| ESOB_A_ES_Ns |

F I G. 12

| |
|---|
| ESOB_REC_Mode |
| ESOB_TY |
| AP_FORMAT_2 |
| NETWORK_ID |
| TS_ID |
| SERCICE_ID |
| Format_ID |
| ESOB_REC_TM |
| ESOB_REC_TM_SUB |
| LOCAL_TM_ZONE |
| ESOB_DURATION |
| ESOB_S_PTM |
| ESOB_E_PTM |
| SERVICE_TYPE |
| CP_CTRL_INFO |
| Video recording rate |
| Reserved |
| PMT_PID |
| PCR_PID |
| ESOB_DEF_PID |
| ESOB_ES_Ns |
| ESOB_V_ES_Ns |
| ESOB_A_ES_Ns |

ESOB_REC_MODE…01h : Type A Recording mode
　　　　　　　　　02h : Type B Recording mode
ESOB_TY : bl5=0 : normal ESOB, bl5=1 : temporarily erased ESOB
　　　　　b14=0 : absence of ESOB Discon information,
　　　　　b14=1 : presence of ESOB Discon information
　　　　　b13=0 : absence of GPI, b12=1 : presence of GPI
　　　　　b7-b0=SMLI_FLG
AP_FORMAT : 2=ISDB-S、ISDB-T、ATSC_1…
Information of recorded PSI and SI
　PROGRAM_NUMBER(SERVICE_ID)、SERVICE_TYPE、
　PMT_ID、NETWORK_ID、TS_ID、FORMAT_ID、SOB_DEF_PID etc.
　Default PID : PID with small component tag value in case of ARIB
　(note that component group descriptor value is preferentially used)
ESOB_DURATION
　TYPE A : ESOB playback time (number of fields, total of
　　　　　　ESOBU_ENTS to which default PID belongs)
　TYPE B : ESOB PATS period : time from PATS of first Packet to
　　　　　　PATS of last Packet
ESOB_ES_Ns : Number of ESs
ESOB_V_ES_Ns : (Number of pieces of ESOB_V_ESI) : number of video ESs
ESOB_A_Es_Ns : Number of audio ESs (number of pieces of ESOB_A_ESI)
　　ESOB_ES_Ns≧ SOB_V_ES_Ns+SOB_A_ES_Ns
　　ESOB_V_ES_Ns+SOB_A_Es_Ns≧ ES_TMAP_Ns
CP_CTL_INFO : To be described later
ESOB_S_PTM/PATS : TYPE A : ESOB playback start time
　　　　　　　　　TYPE B : PATS of first Packet of ESOB
　　　　　　　　　When PATS_SS=10, number of Packets from head of file
ESOB_E_PTM/PATS : TYPE A : ESOB playback end time
　　　　　　　　　TYPE B : PATS of last Packet of ESOB
　　　　　　　　　When PATS_SS=10, number of Packets from head of file
Video recording rate : ESOB average recording rate

PMT_PID to ESOB_A_ES Ns are not available in Type B

# F I G. 13

EP 1 632 948 A1

| | |
|---|---|
| 132231 | ESOBI_GI |
| 132232 | ESOB_ESI#1 |
| | ... |
| 132232 | ESOB_ESI#m |
| 132233 | ESOB_DCNI |
| 132234 | ESOB_PATSI |
| 132235 | ESOB_SMLI |
| 132236 | ESOB_GPI |
| 132237 | ESOB_TMAPI |

ESOB_V_ESI

ESOB_A_ESI

ESOB_OTHER_ESI

There are three types of ESOB_ESI : V_ESI, A_ESI, and OTHER_ESI

F I G. 14

EP 1 632 948 A1

| ESOB_V_ESI |
|---|

| ES_TY |
|---|
| ES_PID |
| STREAM_TYPE |
| COMPONENT_TAG |
| STREAM_CONTENT |
| COMPONENT_TYPE |
| V_ATTR |
| CP_CTL_INFO |

ES_TY : Type of ES, 00=Video ES
ES_PID : PID of ES
STREAM_TYPE : STREAM type indicated in PMT
COMPONENT_TAG
  COMPONENT_TAG value indicated by component descriptor
STREAM_CONTENT
  STREAM_CONTENT value indicated by component descriptor
COMPONENT_TYPE
  COMPONENT_TYPE value indicated by component descriptor
V_ATTR : Attributes of Video

| b31 | b28 | b27 | b24 | b22 | b23 | b22 | b19 | b15 | b11 | b7 | b5 |
|---|---|---|---|---|---|---|---|---|---|---|---|
| Video compression mode | | Frame rate | | Progressive | | Aspect Ratio | | Video resolution | | Display size flag | |

Video compression mode : 0=MPEG1  1=MPEG2  2=H264···
Frame rate : 1=24/1.001, 2=24, 3=25, 4=30/1.001, 5=30, 6=50, 7=60/1.001, 8=60, 0xf=not available
Progressive : 0=Interlaced, 1=Progressive, 3=not available
Aspect Ratio : 2=4 : 3  3=16 : 9  4=2.21 : 1  7=not available
Video resolution : 0=1920×1080, 1=1440×1080, 2=1280×720, 3=720×480(576), 04=704×480(576),
        5=640×480(576), 6=544×480(576), 7=480×480(576), 8=352×240(288), 0s1f=not available
Display size mode : 01=display_horizontal_size exists and has smaller value than horizontal_size
        02=display_vertical_size exists and has smaller value than vertical_size

F I G. 15

EP 1 632 948 A1

# FIG. 16

| ESOB_A_ESI |
|---|

| |
|---|
| ES_TY |
| ES_PID |
| STREAM_TYPE |
| COMPONENT_TAG |
| STREAM_CONTENT |
| COMPONENT_TYPE |
| SIMULCAST_GP_TAG |
| AUDIO_ATTR |
| LANG_CODE |
| LANG_CODE2 |
| CP_CTL_INFO |

ES_TY : 0x40=AUDIO ES
SIMULCAST_GP_TAG
    Gap value of audio frame at
    the beginning of multi-view broadcast
LANG_CODE : First audio language code
LANG_CODE2 : Second audio language code
AUDIO_ATTR : AUDIO attribute value

| b31    b28 | b23        b20 | b15    b12 | b7       b0 |
|---|---|---|---|
| Audio_Coding_Mode | fs | Audio channel number | Bit rate |

Audio Coding Mode : 0=AC3, 1=MPEG1  2=MPEG2  BC, 3=MPEG2  AAC, 4=L-PCM,
        0xf=not available
fs : 001=16KHz, 010=22.05KHz, 011=24KHz, 101=32KHz, 111=48KHz
Audio channel number : 0=Mono, 1=Stereo, 2=3ch, 3=4ch, 4=5ch, 5=6ch, 6=7ch, 7=8ch,
        9=Dual Mono, 0xf=not available
Bit rate : 1=64kbps, 2=80kbps, 3=96kbps, 4=112kbps, 5=128kbps, ···0xff=not available

| ESOB_OTHER_ESI | ES_TY |
| --- | --- |
| | ES_PID |
| | STREAM_TYPE |
| | COMPONENT_TAG |
| | DAT_COMP_ID |
| | AD_DAT_COMP_IFO |
| | CP_CTL_INFO |

ES_TY : 0x80=Other ES
DAT_COMP_ID : Data encoding identifier
AD_DAT_COMP_IFO : Additional information of identifier

F I G. 17

| CP_CTL_INFO |
| --- |

| CGMS (2 bits) | APS (2 bits) | EPN (1 bit) | ICT (1 bit) | Reserved (2 bits) |
| --- | --- | --- | --- | --- |

CGMS : =inhibition, 1=unlimited permission
APS : 0=no APS, 1=append APS type 1, 2=append APS type 2, 3=append APS type 3
EPN : 0=contents.protection (IE output protection), 1=no contents protection
ICT : 0=resolution constraint, 1=no constraint

F I G. 18

| 132231 | ESOBI_GI |
| 132232 | ESOB_ESI#1 |
| | ... |
| 132232 | ESOB_ESI#m |
| 132233 | ESOB_DCNI |
| 132234 | ESOB_PATSI |
| 132235 | ESOB_SMLI |
| 132236 | ESOB_GPI |
| 132237 | ESOB_TMAPI |

ESOB_DCNI_GI

CNT_SEGI_Ns : Number of pieces of CNT_SEGI

CNT_SEGI #1

CNT_SEG_SZ

CNT_SEG_S_PKT_POS

...

CNT_SEGI #K

ESOB_DCNI : Discontinued position information of SCR
CNT_SEG_SZ : CNT_SEG size (Packet GP number from previously discontinued position to current position)
CNTSEG_S_PKT_POS : Position in first packet GP, Packet number

SOB

| CNT_SEG#1 | CNT_SEG#2 | CNT_SEG#3 | ... | CNT_SEG#n |

| CNT_SEG _SZ#1 | CNT_SEG _SZ#2 | CNT_SEG _SZ#3 | | CNT_SEG _SZ#n |

| ... | PKT_GP | ... |

PKT_POS

F I G. 19

| | |
|---|---|
| 132231 | ESOBI_GI |
| 132232 | ESOB_ESI#1 |
| | ... |
| 132232 | ESOB_ESI#m |
| 132233 | ESOB_DCNI |
| 132234 | ESOB_PATSI |
| 132235 | ESOB_SMLI |
| 132236 | ESOB_GPI |
| 132237 | ESOB_TMAPI |

| ESOB_PATSI_GI |
|---|
| PATS_WRAPI_Ns : Number of pieces of PATS_WRAPI |

| PATS_WRAPI #1 |
|---|
| PKTGP_N |
| PKTGP_S_PKT_POS |
| ... |
| CNT_SEGI #K |

PKTGP_N : Packet GP number from head of ESOB to current Wraparound position of PATS
PKTGP_S_PKT_POS : Position in first packet GP, Packet number

F I G. 20

GPI structure

| ESOBI_GI |
| --- |
| ESOB_ESI#1 |
| ... |
| ESOB_ESI#m |
| ESOB_DCNI |
| ESOB_PATSI |
| ESOB_SMLI |
| ESOB_GPI |
| ESOB_TMAPI |

| ESOB_GPI_GI |
| --- |
| GPI_SRP#1 |
| ... |
| GPI_SRP#m |
| GPI#1 |
| ... |
| GPI#m |

F I G. 21

| ESOB_GPI_GI |
| GPI_SRP#1 |
| ... |
| GPI_SRP#m |
| GPI#1 |
| ... |
| GPI#m |

| GPI_TY |
| GPI_SRP_Ns |

(Number of GPI_SRPs : 1≦GPI_SRP_Ns≦8)

| GPI_SA : GPI start address |

| PRIORITY |
| ES_PID_Ns |

| GPI_GI |
| ES_PID#1 |
| ... |
| ES_PID#n |

GPI_TY : GPI_TYPE(2bits), rescrved(6bits)
GPI_TYPE : 00=not set in stream. Created by recorder
01=set in stream
PRIORITY : Priority (not defined when=00)
One video PID is set per group

F I G. 22

TMAP of TYPE A (PTM base)

| ESOB_TMAPI |
| --- |
| |
| ESOB_TMAPI_GI |
| ES_TMAPI_GI#1 |
| ... |
| ES_TMAPI_GI#m |

| ESOB_ADR_OFS |
| --- |
| ESOB_SZ |
| ESOB_S_PKT_POS |
| ESOB_E_PKT_POS |
| ESOBU_PB_TM_RNG |
| ES_TMAP_GI_Ns |

| ES_PID |
| --- |
| ES_S_PTM |
| ES_E_PTM |
| ES_S_ADR_OFS |
| ES_LAST_SOBU_E_PKT_POS |
| ES_SOBU_ENT_Ns |
| ES_E_ADR_OFS |

ESOB_ADR_OFS : Number of packet groups from head
            of file to head of ESOB
ESOB_SZ : Number of packet groups of ESOB
ESOBU_PB_TM_RNG : ESOBU playback time range
            1=0.4s~1.2s, 2=1s~2s, 3=2s~3s
ESOB_S_PKT_POS : 1≦SOB_S_PKT_POS≦PKT_Ns
            Start of first packet of ESOB in packet group
ESOB_E_PKT_POS : 1≦SOB_E_PKT_POS≦PKT_Ns
            End of first packet of ESOB in packet group
ES_TMAP_GI_Ns : Number of pieces of ES_TMAP_GI

ES_PID : ES PID corresponding to this TMAP
ES_S_ADR_OFS : Number of packet groups from head of ESOB to head of this ES
ES_E_ADR_OFS : Number of packet groups from last of this ES to last of ESOB
ES_S_PTM : Start PTM of this ES
ES_E_PTM : End PTM of this ES
ES_LAST_SOBU_E_PKT_POS
TS packet number of last packet of last ESOBU in packet group

F I G. 23

EP 1 632 948 A1

TMAP of TYPE B (PATS base)

| ESOB_TMAP |
| --- |

| ESOB_TMAP_GI |
| --- |

| ESOB_ADR_OFS |
| --- |
| ESOB_SZ |
| ESOB_S_PKT_POS |
| ESOB_E_PKT_POS |
| AT_SOBU_TM |
| AT_SOBU_ENT_Ns |

ESOB_ADR_OFS : Number of packet groups from head of file to head of ESOB
ESOB_SZ : Number of packet groups of ESOB
AT_SOBU_TM : Time Range of AT_SOBU 0=1.0s 1=2sec
AT_SOBU_ENT_Ns : Number of AT_SOBU_ENTs in STMAPI

F I G. 24

EP 1 632 948 A1

| HR_VTMAP.IFO |
| HR_STMPX.IFO |

| EX_VTMAPTI |
| EX_VTMAP_SRP #1 |
| ... |
| EX_VTMAP_SRP #q |
| EX_VTMAPI |
| ... |
| EX_VTMAPI |

| STMAPTI |
| STMAP_SRP #1 |
| ... |
| STMAP_SRP #q |
| STMAPI |
| ... |
| STMAPI |

Note) STMAP_SRPs do not always point to STMAPI in ascending order
Garbage data may be included among STMAPI

F I G. 25



## FIG. 26

| EX_VTMAPTI |
|---|
| EX_VTMAP_SRP #1 |
| ... |
| EX_VTMAP_SRP #q |
| EX_VTMAPI |
| ... |
| EX_VTMAPI |

| VTM_ID |
|---|
| EX_VTMAPT_EA |
| EX_VERN |
| EX_VTMAP_LAST_MOD_TM |
| EX_VTMAP_SRP_Ns |

| EX_VMAP_SA |
|---|
| EVOBU_ENT_Ns |

| EVOBU_ENT #1 |
|---|
| ... |
| EVOBU_ENT #q |

VTM_ID : V_TMAP identification information="DVD_HR_VTMAP"
EX_VTMAPT_EA : End address of this file (table)
EX_VERN : TMAP version information
EX_VTMAP_LAST_MOD_TM : Describe update date of VTMAPT (The same value as HR_MANGR.IFO)
EX_VMAP_SA : Start address of each VTMAP
EVOBU_ENT_Ns : Number of EVOBU_ENTs

In case of EVOBU_ENT

| EVOBU_ENT #1 |
| ... |
| EVOBU_ENT #q |

| 1STREF_SZ |
| EVOBU_PB_TM(Number of fields) |
| EVOBU_SZ |

F I G. 27

## FIG. 28

STMAPT of TYPE A

| STMAPTI |
| --- |
| STMAP_SRP #1 |
| ... |
| STMAP_SRP #q |
| STMAPI |
| ... |
| STMAPI |

| STMAPI_SA |
| --- |
| ETMAPI_Ns |

| STM_ID |
| --- |
| STMAPT_EA |
| VERN |
| STMAP_LAST_MOD_TM |
| STMAP_SRP_Ns |

| STMAP_SRP_GI |
| --- |
| ETMAPI_GI #1 |
| ... |
| ETMAPI_GI #q |

| ETMAPI #1 |
| --- |
| ... |
| ETMAPI #q |

STM_ID : STMAP identification information "DVD_HR_STRnn" TYPE A : nn is integer other than 0
STMAPT_EA : End address of this file
VERN : STMAP version information
STMAP_LAST_MOD_TM : Describe update date of STMAPT (The same value as HR_MANGR.IFO)
STMAPI_SA : Start address of each STMAPI
ETMAPI_Ns : In case of PTM base : number of pieces of ETMAPI, in case of PATS base : set 1

STMAPT OF TYPE B

| STMAPTI |
| --- |
| STMAP_SRP #1 |
| ... |
| STMAP_SRP #q |
| STMAPI |
| ... |
| STMAPI |

| STM_ID |
| --- |
| STMAPT_EA |
| VERN |
| STMAP_LAST_MOD_TM |
| STMAP_SRP_Ns |

| STMAP_SA : Start address of STMAPI |
| --- |
| AT_SOBU_ENT_Ns : Number of AT_SOBU_ENTs |

| AT_SOBU_SZ : AT_ESOBU size |
| --- |
| AT_SOBU_S_PKT_POS |

| AT_SOBU_ENT#1 |
| --- |
| ... |
| AT_SOBU_ENT#q |

STM_ID : STMAP identification information "DVD_HR_STR00"
STMAPT_EA : End address of this file
VERN : STMAP version information
STMAP_LAST_MOD_TM : Describe update date of STMAPT (The same value as HR_MANGR.IFO)
STMAP_SA : Start address of each STMAPI
AT_SOBU_ENT_Ns : number of AT_SOBU_ENTs
AT_SOBU_S_PKT_POS : Head position of AT_ESOBU in Packet Group (number of packets)
PKT_POS may be omitted in case of packet group unit

F I G. 29

EP 1 632 948 A1

# F I G. 30

| STMAP_SRP_GI |
| --- |
| ETMAPI_GI #1 |
| ... |
| ETMAPI_GI #q |

| ESOBU_ENT_Ns |
| --- |

| ETMAPI #1 |
| --- |
| ... |
| ETMAPI #q |

| ESOBU_ENT #1 |
| --- |
| ... |
| ESOBU_ENT #q |

ES_S_ADR_OFS : Number of packet groups from head of ESOB to head of this ES
ES_E_ADR_OFS : Number of packet groups from last of this ES to last of ESOB
ES_S_PTM : Start PTM of this ES
ES_E_PTM : End PTM of this ES
ES_LAST_SOBU_E_PKT_POS
TS packet number of last packet of last ESOBU in packet group
T_MAP_N : TMAP number : number from head in TMAP file (T_MAP_T)

Configuration example 1 of ESOBU_ENT of TYPE A (PTM base)

| ESOBU_ENT #1 |
|---|
| ... |
| ESOBU_ENT #q |

| 1st_Ref_PIC_SZ |
|---|
| ESOBU_PB_TM(Number of fields) |
| ESOBU_SZ_(Number of Packet GPs) |
| ESOBU_S_PKT_POS |
| ESOBU_SH_EXIST_Flag |

ESOBU : <1> delimited at randomly accessible positions
         (when sequence header SH is found, ESOBU is delimited at head of SH. I-PIC comes after SH)
    <2> delimited by minimum EVOBU/ESOBU_PB_TM_RNG=0 : 0.4s,=1 : 1s,=2 : 2s or more except for last ESOBU
    <3> delimited by maximum EVOBU/ESOBU_PB_TM_RNG=0 : ls,= : 2s,=2 : 3s or less
ESOBU_SZ : number of packet groups belonging to ESOBU (count head fractions, and drop rear fractions)
ESOBU_S_PKT_POS : head packet number (1 – 85) of start ESOBU in packet group

Example     78th_Packet             SOBU_SZ=3, SOBU_START=78

SOBU n         1st REF PIC SZ=3(In case of PKT GP unit),
                           267(In case of PKT unit)

| ...... | PKTGP | PKTGP | PKTGP | PKTGP | ...... |

I_PIC

5Packet

1st_Ref_PIC_SZ : number of packet groups (or number of packets) from head of ESOBU to end of Ref_PIC
When 1st_Ref_PIC_SZ=0x000000, no Ref_PIC is included in ESOBU.
In this case, ESOBU playback time can be shorter than 0.4s (set in frame or field unit)
ESOBU_SH_EXIST Flag : 1 when sequence header is included in ESOBU, 0 when no sequence header is included

F I G. 31

EP 1 632 948 A1

Configuration example 1 of ESOBU_ENT of TYPE A (PTM base)

| ESOBU_ENT #1 |
| --- |
| ... |
| ESOBU_ENT #q |

| 1st_Ref_PIC_SZ |
| --- |
| ESOBU_PB_TM(Number of fields) |
| ESOBU_SZ_(Number of Packet GPs) |
| ESOBU_S_PKT_POS |
| ESOBU_SH_I_EXIST_Flag |
| ESOBU_SH_EXIST_Flag |

ESOBU : <1> delimited at randomly accessible positions
          (when sequence header SH is found, ESOBU is delimited at head of SH. I-PIC comes after SH)
      <2> delimited by minimum EVOBU/ESOBU_PB_TM_RNG=0 : 0.4s,=1 : 1s,=2 : 2s or more except for last ESOBU
      <3> delimited by maximum EVOBU/ESOBU_PB_TM_RNG=0 : ls,= : 2s,=2 : 3s or less
ESOBU_SZ : number of packet groups belonging to ESOBU (count head fractions, and drop rear fractions)
ESOBU_S_PKT_POS : head packet number (1 - 85) of start ESOBU in packet group

Example          78th Packet                                    SOBU_SZ=3、SOBU_START=78

                     |← SOBU n →|                1st REF PIC SZ=3(In case of PKT GP unit),
                                                                         267(In case of PKT unit)

| ...... | PKTGP | PKTGP | PKTGP | PKTGP | ...... |

                |←  I_PIC  →|←→|
                                5Packet

1st_Ref_PIC_SZ : number of packet groups (or number of packets) from head of ESOBU to
end of Ref_PIC when 1st_Ref_PIC_SZ=0x000000, no Ref_PIC is included in ESOBU.
In this case, ESOBU playback time can be shorter than 0.4s (set in frame or field unit)
ESOBU_SH_I_EXIST_Flag : 1 when sequence header exists from head of ESOBU to first I-PIC,
      0 when no sequence header exists
ESOBU_SH_EXIST_Flag : 1 when SH exists in ESOBU, 0 when no SH exists
(or 1 when SH exists from first I-PIC to last of ESOBU, 0 when no SH exists)

F I G. 32

EP 1 632 948 A1

In case of ESOBU of TYPE B (PTM base)

Example 1) in case of packet unit

| AT_SOBU_ENT #1 |
|---|
| ... |
| AT_SOBU_ENT #q |

| AT_SOBU_SZ_(Number of Packet GPs) |
|---|
| AT_SOBU_S_PKT_POS_(Number of Packets) |

AT_SOBU : delimited by constant time of minimum ESOBU_PATS_TM_RNG=0 : 0.5s,=1 : 1s,=2 : 2s except for last ESOBU
Last ESOBU may be constant time or less
AT_SOBU_SZ : number of packet groups belonging to ESOBU
AT_SOBU_S_PKT_POS : number of packets (1 to 170) fram head of packet group to start of ESOBU

In case of ESOBU of TYPE B (PTM base)

Example 2) in case of packet group unit

| AT_SOBU_ENT #1 |
|---|
| ... |
| AT_SOBU_ENT #q |

| AT_SOBU_SZ(Number of Packet GPs) |
|---|

F I G. 33

EP 1 632 948 A1

```
                    ┌─────────────────────────┐
                    │        HDVR_MG          │
                    └─────────────────────────┘
```

```
                                              ┌──────────────────────────────────────┐
                                              │       ORG_EX_PGC information          │
                                              └──────────────────────────────────────┘
```

```
        ┌─────────────────────────┐
        │        HDVR_VMGI         │
        ├─────────────────────────┤
        │           ...            │
        ├─────────────────────────┤
        │         ESTR_FIT         │
        ├─────────────────────────┤          ┌──────────────────────────────────────┐
        │   EX_ORG_PGC information  │          │       UD_EX_PGCT information          │
        ├─────────────────────────┤          ├──────────────────────────────────────┤
        │   EX_UD_PGC information   │          │    UD_EX_PGC search pointer #1        │
        ├─────────────────────────┤          ├──────────────────────────────────────┤
        │        EX_TXTD_MG         │          │               ...                    │
        ├─────────────────────────┤          ├──────────────────────────────────────┤
        │         EX_MNFIT         │          │    UD_EX_PGC search pointer #r        │
        ├─────────────────────────┤          ├──────────────────────────────────────┤
        │          EPIT           │          │    UD_EX_PGC information #1           │
        └─────────────────────────┘          ├──────────────────────────────────────┤
                                              │               ...                    │
                                              ├──────────────────────────────────────┤
                                              │    UD_EX_PGC information #s           │
                                              └──────────────────────────────────────┘
```

F I G. 34

EX_PGC information

| EX_PGC_GI |
|---|
| EX_PGI #1 |
| ... |
| EX_PGI #p |
| EX_CELL_SRP #1 |
| ... |
| EX_CELL_SRP #q |
| EX_CI #1 |
| ... |
| EX_CI #q |

| Number of programs : 0=UD_PGC |
|---|
| Number of CELL_SRPs |

| Program type | |
|---|---|
| Number of cells in program | |
| PRIM_TXT information | |
| IT_TXT_SRP number | |
| PG_REP _PICTI | CN : Target CELL number |
| | PIC_PT : PTM/PATS/S_EVOB_ENT number on target EVOB |
| | ES_PID : Target video (default) PID (in case of ESOB/ASOB) |
| | Playback time/playback end time |
| | PIC_CL_TM : Update date |
| PG_RSM _IFO | CN : Target CELL number |
| | MRK_PT : PTM/PATS/S_EVOB_ENT number on target EVOB |
| | ES_PID : Target audio (default) PID (in case of ESOB/ASOB) |
| Program index number (PG absolute number) | |
| Program update date | |

Program update date
Save date upon updating program management information
PG_RSM_IFO : Playback position information upon interrupting playback (start position information when playback is resumed next time)
MRK_PT, PIC_PT
M_CELL, In case of M_CELL and STR_TYPE_A_CELL : PTM
STR_TYPE_B_CELL : PATS of playback start packet (may be approximate value) (in case of PATS base)
In case of S_CELL : EVOB_ENT number
MRK_TM : Date of creation of this marker
PG_REP_PICTI : Representative picture (for thumbnail)

F I G. 35

EP 1 632 948 A1

# F I G. 36

EX_PGC information

| EX_PGC_GI |
|---|
| EX_PGI #1 |
| ... |
| EX_PGI #p |
| EX_CELL_SRP #1 |
| ... |
| EX_CELL_SRP #q |
| EX_CI #1 |
| ... |
| EX_CI #q |

| Cell type |
|---|
| STR_FILE number |
| Corresponding ESOBI_SRP number |
| C_EPI_Ns |
| Cell start PTS/PATS |
| Cell end PTS/PATS |
| Default PID |
| C_EPI |

Cell start PTS/PATS, cell end PTS/PATS
     M_CELL, In case of M_CELL and STR_TYPE_A_CELL : PTM
     STR_TYPE_B_CELL : PATS of playback start packet
         (may be approximate value) (in case of PATS base)
           Number of packets from head of file when PATS_SS=10
     In case of S_CELL : EVOB_ENT number
Default PID : PID as default : none in case of TYPE B
     Example 1 : set using 13-bit PID value, example 2 :
     numbers are assigned in order defined in PMT, and
     PID is set using number, or group number may be used

# FIG.37

**C_EPI**

| EPI#1 |
|---|
| ... |
| EPI#m |

**M_CELL_EPI_TY_A**

| EPI_TY |
|---|
| EP_PTM |

**STR_A_CELL_EPI_TY_A**

| EPI_TY |
|---|
| EP_PTM |
| PID/GP_N |

**STR_B_CELL_EPI_TY_B**

| EPI_TY |
|---|
| EP_PATS |
| PID/GP_N |
| PRM_TXTI |
| REP_PIC_PATS |

**M_CELL_EPI_TY_B**

| EPI_TY |
|---|
| EP_PTM |
| PRM_TXTI |
| REP_PIC_PTM |

**STR_A_CELL_EPI_TY_B**

| EPI_TY |
|---|
| EP_PTM |
| PID/GP_N |
| PRM_TXTI |
| REP_PIC_PTM |

**STR_B_CELL_EPI_TY_A**

| EPI_TY |
|---|
| EP_PATS |
| PID/GP_N |

**S_CELL_EPI_TY_A**

| EPI_TY |
|---|
| S_VOB_ENTN |

**S_CELL_EPI_TY_B**

| EPI_TY |
|---|
| S_VOB_ENTN |
| PRM_TXTI |

```
EPI_TY : 0=MCELL_EPI_TYPE_A
         10h=MCELL_EPI_TPE_B,
         01h=SCELL_EPI_TYPE_A
         11h=SCELL_EPI_TYPE_B
         02h=STR_A_CELL_EPI_TYPE_A
         12h=STR_A_CELL_EPI_TYPE_B
         03h=STR_B_CELL_EPI_TYPE_A
         13h=STR_B_CELL_EPI_TYPE_B
PG_N : PG number
C_N : Cell number
In case of STR_B_CELL_EPI
    When PATS_SS=10, PATS is the
    number of packets from head of file
```

143 — | ESOBU |   ESOBU : data of 1 Gop or more or 1s or more

16 logical blocks

147 — | Packet_Group | Packet_Group | ...... | Packet_Group |

~161    162~    163~

| Packet_Group_Header | PATS | MPEG-TS 1 packet | ...... | PATS | MPEG-TS 170 packet | ~163

128Bytes    4B    188B    162

| Hearder_ID : 00FFA5A5 |
| PKT_GRP_GI |
| CCI |
| First_PATS_EXT |
| MNI |

PAT : 4 bytes

| PAT (22-0 bits) | ~162

(PATS : Lower 4 bytes of base value of PATS)

*) permit that Packet_Group includes maximum of two ESOBs together (not aligned by ESOB)

F I G. 38

| Hearder_ID : 00FFA5A5 |
| --- |
| PKT_GRP_GI |
| CCI |
| First_PATS_EXT |
| MNI |

| PKT_GRP_TY : type of Packet group |
| --- |
| VERSION : Version of Packet group |
| Reserved |
| PKT_GRP_SS : status of Packet group |
| Reserved |
| VALID_PKT_Ns |
| Reserved |

PKT_GRP_TY : 01=Packet Group for MPEG-TS Packet  Other than 01=other
VERSION : Version number  10=Ver.1  11=Ver.1.1
PKT_GRP_SS : Status of this packet group

| STUF(1 bit) | PATS_SS(2 bits) | Reserved (5 bits) |
| --- | --- | --- |

STUF : "1" is set in this bit when packet group does not fully store packets and ends halfway, and
    remaining area is stuffed
PATS_SS : 00=PATS and FIRST_PATS_EXT are valid, 01=only PATS is valid, 10=both PATS and
    FIRST_PATS_EXT are invalid

Valid_Packet_Ns : number of valid packets (assumes value other than 0xAA when STUF=1)

F I G. 39

| Hearder_ID : 00FFA5A5 |
|---|
| PKT_GRP_GI |
| CCI |
| First_PATS_EXT |
| MNI |

| CCI |
|---|

| CGMS (2 bits) | APS (2 bits) | EPN (1 bit) | ICT (1 bit) | Reserved (2 bits) |
|---|---|---|---|---|

F I G. 40

| Hearder_ID : 00FFA5A5 |
|---|
| PKT_GRP_GI |
| CCI |
| First_PATS_EXT |
| MNI |

| PATS [47 : 32] |
|---|

Arrival time : PATS (Packet Arrival Time Stamp) is on 27-MHz base,
its lower 4 bytes are described before each TS packet,
and its upper 2 bytes are described in this area
Describe upper 2 bytes of PATS of first packet of packet group

F I G. 41

| Hearder_ID : 00FFA5A5 |
|---|
| PKT_GRP_GI |
| CCI |
| First_PATS_EXT |
| MNI |

| MNF_ID |
|---|
| MNF_DATA |

MNF_ID
32-byte ID determined for each corporation

MNF_DATA : User data area (32 bytes) freely used by each corporation

FIG. 42

EP 1 632 948 A1

FIG. 43

F I G. 44

F I G. 45

Start

ST100
Load respective file system data

ST102
Free space ?
NO ——→ ST104
"No recording space available"
↓
End

YES ↓ ST105
Recording pre-process : write respective management areas (generate VMG), etc.

↓ ST106
Digital broadcast ?
NO ——→
To VR recording process

YES ↓
ST107
Cognizable ?
NO ——→

YES ↓ ST109A
Set to generate management information of TYPE A

ST109B
Set to generate management information of TYPE B

↓ ST112
Video recording initial setting
  Reset STC unit, and set write start address and write command in drive units
  Initialize formatter unit : set CELL, ESOBU, PG, and Packet Group division, etc.

↓ ST114
Video recording start setting : set data fetch start process from buffer in formatter unit

↓ ST116
Extract PAT from buffer, and determine PMT based on user's program setting
Extract PMTS for streams to be recorded from buffer, and save PAT, PMT, NIT, etc. upon start in work RAM

↓
(A)

PAT : TS_ID, NETWORK_PID, PMT_ID
PMT : SERVICE_ID, REG_DES_VALUE, PCR_PID, ESOB_ES_Ns
NIT : SERVICE_TYPE etc.

F I G. 46

Ⓐ

ST120
Generate ESI as many as number of streams from PMT

ST130
Buffer fetch process

ST140
Recording data stored in buffer memory = predetermined size ?　　NO

YES　　ST142
Determine write address and write length of drive unit, and issue write command

ST144
Segmentation information fetch interrupt generated ?　　NO

YES　　ST146
Fetch segmentation information from formatter unit

Segmentation condition : 1s or division of GOP (division does not extend across sequence header)
Segmentation information : ESOBU size, start and end addresses of I-picture, position information of sequence header in ESOBU, etc.

ST148
Video recording end key input ?　　NO

YES　　ST150
Video recording end process
Fetch remaining segmentation information from formatter unit & initialization
Write in VMG (HDVR_MG) (generate PGCI, generate STR FI : segmentation information, I-PIC information, etc.)
Set playback time of stream with default PID in ESOB_DURATION

End　　　F I G. 47

Buffer fetch process

ST1300
Receive TS packet

ST1302
PCR ? — NO

YES ST1304
Set PCR value in STC

Check discontinuity indicator in adaptation field of packet header

ST1305
Discontinue ? — NO

YES ST1305A
Set position of this packet at division of CNT_SEG

ST1306
Head of Packet Group ? — NO

ST1317C
Allocate lower 4 bytes of transfer counter value as PATS before TS

YES ST1308A
Set Sync_Pattern : 00ffa5a5
Save lower 4 bytes of transfer counter value as PAT before TS, and set upper 2 bytes in FIRST_PATS_EXT

ST1317D
Add TS packet to data area of packet group

ST1309
Fetch communication error information for each TS packet, and save it in work RAM

ST1322
PACKET GROUP formed ? — YES

NO

ST1340
PKT_GRP_GI setting process

ST1330
CPI setting process

ST1350
NMFI setting process

ST1332
Save 1 packet group in buffer

Return

F I G. 48

Buffer fetch process

ST1300
Receive TS packet

ST1302
PCR ? — NO

YES

ST1304
Set PCR value in STC

Check discontinuity indicator in adaptation field of packet header

ST1305
Discontinue ? — NO

YES

ST1305A
Set position of this packet at division of CNT_SEG

ST1306
Head of Packet Group ? — NO

YES

ST1308B
Set Sync Pattern : 00ffa5a5 and PATS SS : 01 Save lower 4 bytes of transfer counter value as PAT before TS, and set 0 in FIRST_PATS_EXT

ST1317C
Allocate lower 4 bytes of transfer counter value as PATS before TS

ST1317D
Add TS packet to data area of packet group

ST1309
Fetch communication error information for each TS packet, and save it in work RAM

ST1322
PACKET GROUP formed ? — YES

NO

ST1340
PKT_GRP_GI setting process

ST1330
CPI setting process

ST1350
NMFI setting process

ST1332
Save 1 packet group in buffer

Return

F I G. 49

PKT_GRP_GI setting process

ST13400

Set 0 in PKT_GRP_GI : STUF

ST13402

PATS=wrap-around ?

YES

NO

ST13404

Add PATS_WRAPI of ESOB_PATSI to
set wrap-around position of PATS
PATS_WRAPI_Ns++
PKTGP_N←current PKT_GP number
PKTGP_S_PKY_POS←wrap-around PKT number

ST13406

Set 0xaa in Valid_PKT_Ns

Return

F I G. 50

ESI generation process

ST1201
Check stream type in PSI and SI

ST1203
Stream type,
component descriptor,
audio component descriptor,
data encoding method
descriptor

Video stream

Another stream

Audio
stream

ST1213A
Generate new ESI of ES_TY = 0 based on readout data

ST1217A
Generate new ESI of ES_TY = 0x80 based on readout data

ST1215A
Generate new ESI of ES_TY = 0x40 based on readout data

ST1213C
Extract compression mode, frame rate, progressive, aspect ratio, resolution data, etc., and set them in V_ATR
PMT → ES_PID, STREAM_TYPE, COMPONENT_TAG Component descriptor → STREAM_COMPONENT, COMPONENT_TYPE

ST1217C
PMT → ES_PID, STREAM_TYPE, COMPONENT_TAG
Data encoding method descriptor → DATA_COMP_ID
AD_DAT_COMP_IFO

ST1215C
Extract coding mode, sampling frequency, number of channels, etc., and set them in A_ATR
PMT → ES_PID, STREAM_TYPE, COMPONENT_TAG
Audio component descriptor → STREAM_COMPONENT, COMPONENT_TYPE, SIMULVCAST_GP TAG, LANG_CDE

ST1220
Generate CP_CTL_INFO (CCI) based on copy information which belongs to component tag corresponding to ES

ST12130
Does ES for which ESI is to be generated still remain ?

YES

NO

Return

F I G. 51

**ESTR_FI generation process**

ST1500
Increment number of ESOBI_SRPS by 1
PKT_TY=0x00 (MPEG_TS)

ST1502
Set recording start time in
ESOB_REC_TM and ESOB_REC_TM_SUB
Extract and set ESOB_S_PTM and
ESOB_E_PTM from stream

ST1506
TS stream ?

YES

NO

ST1510
Set PKT_GRP_SZ←value corresponding
to format to be recorded,
PKT_Ns←value corresponding to
format to be recorded, and country_
code←country code of apparatus

ST1508
Set PKT_GRP_SZ←16, PKT_Ns←0xAA,
and country_code←country code of
apparatus

ST1514
In case of BS, AP_FORMAT←1
(ISBD=S) In case of terrestrial digital,
AP_FORMAT←0 (ISBD=T)
Read out PAT at the beginning of
recording from work RAM, and set
TS_ID, NETWORK_PID, and PMT_ID
(PID of PMT used in this ESOB)

PATS SS is changed when stream of
IEEE1394 input, LAN input, or the like
is input without being decoded

Note) Default PID is PID with
component tag value=0x00. In case
of multi-view TV, PID set with
component tag value indicated by main
group. Method of describing PID using
13-bit real data, and method of
assigning numbers in turn in PMT and
designating PID using that number are
available

ST1516A
Read out PMT, NIT, and EIT at the
beginning of recording from work RAM,
and set AP_FORMAT_2, Program_
number (SERVICE_ID in PMT), Format_
Id, version (REG_DES value), PCR_PID,
ESOB_Es_Ns, V_ES_Ns, and A_ES_Ns.
Set PID with smallest component tag
value (preferentially use PID set by
component tag group descriptor) as
DEF_PID Set. ESOB_TY according to
TMAP type

ST1530
GPI setting process

ST1540
TMAP setting process

ST1550
Set video recording start LB address in
ADR_OFS Generate CP_CTR_IFO (CCI)
based on overall CP information in PMT

ST1551
Check if PATS is appended to fetched
stream, determine if PATS is 6- or
4-bit expression. Set PATS_SS=00 if
PATS is 6-bit expression, PATS_SS=01
if PATS is 4-bit expression, and
PATS_SS=10 if PATS is invalid

ST1554
Set edit date

**Return**

F I G. 52

( GPI setting process )

ST15300B

1 TS formed by a plurality of programs (broadcasts) ?  **YES** → ST15302B

Generate TMAPI for each program, and set ES_Tmap_Ns Set presence of GPI in ESOB_TY, and set number of programs in GPI_SRP_Ns. Set 0 in GPI_TY and PRIORITY=0. Generate GPI for respective programs (set number of PIDS and PID values)

**NO**

ST15304B

Rain attenuation broadcast ?  **YES** → ST15306B

Determine ES used to generate TMAPI based on layer transmission descriptor in EIT, set Es_Tmap_Ns and set presence of GPI in ESOB_TY. Register lower layers as independent GPs, and set 2 in GPI_SRP_Ns. Set 40h in GPI_TY and set top layer as PRIORITY:1 and other layers as PRIORITY:2. Generate GPI for each layer (set number of PIDs and PID values: common audio PID)

**NO**

ST15308B

Multi-view broadcast ?  **NO**

**YES** → ST15310B

Determine ES used to generate TMAPI based on component group descriptor in EIT, set Es_Tmap_Ns, and set presence of GPI in ESOB_TY. Register respective groups as independent GPs. Set number of groups in GPI_SRP_Ns. Set 40h in GPI_TY and set top layer as PRIORITY:1 and other layers as PRIORITY:2. Generate GPI for each group (set number of PIDs and PID values)

ST15314B

**YES** — Another GP ?

ST15321B

Set 1 in Es_Tmap_Ns
Set absence of GPI in SOB _TY

**NO** ST15316B

Generate playlist based on selected GPs

( Return )

**F I G. 53**

TMAP setting process

ST15400

EVOB/ESOB structure setting process

ST15403

ESOB : set TMAP_TY
   TYPE A : PTM base (ESOB hereinafter)
      Determine number of TMAPS in consideration of number
      of GPs, etc.  Set PID of ES to be generated for each TMAP
   TYPE B : PATS base (AT_SOB hereinafter) : add 1 TMAP
EVOB : add 1 TMAP

ST15405

Check segmentation information, and set ESOB/EVOB start and end
PTMs, PATS of first and last PKTS of AT_SOBs, number of
ENTRIES, TMAP number to be registered in TMAPT, etc.

ST15407

Add generated TMAP to TMAPT, and generate Entry information
based on segmentation information.  ESOBU_TYPE_A_Entry information
: 1st_REF_PIC _SZ (end address of first I-pic, set 0 if no I-pic is
found)
      ESOBU_SZ (ESOBU size indicated by Packet GP unit)
      ESOBU_S_PKT_POS
      (position of start packet of ESOBU in Packet GP)
      ESOBU_SH_EXIST_FLAG (indicating presence/absence of
      sequence header in ESOBU)
      ESOBU_SH_I_EXIST FLAG (indicating presence/absence of
      sequence header between first packet of ESOBU and I-PIC;
      presence=1, absence=0 : set 0 if no I-PIC is found)
ESOBU_TYPE_B_Entry information : ESOBU_SZ (ESOBU size indicated
by Packet GP unit)
      ESOBU_S_PKT_POS (position of first packet of ESOBU in packet
      group (PKT unit))

ST15409

Set update date information of edited TMAP in
STMAP/VTMAP_LAST_MOD_TM

Return

F I G. 54

EVOB/ESOB structure setting process

ST154000

Check video recording time

ST154001

Video recording time ?

2 hours or less    4 hours or more

4 hours or less

ST154003

EVOB/ESOBU_PB_TM_RNG=1
Generate EVOB/ESOBU_ENTRY based
on segmentation information so that
each ESOBU falls within range from
1.0s to 2.0s

ST154002

EVOB/ESOBU_PB_TM_RNG=0
Generate EVOB/ESOBU_ENTRY based
on segmentation information so that
each ESOBU falls within range from
0.4s to 1.0s

ST154004

EVOB/ESOBU_PB_TM_RNG=2
Generate EVOB/ESOBU_ENTRY based
on segmentation information so that
each ESOBU falls within range from
2.0s to 3.0s

Return

F I G. 55

CP_CTL_INFO (CCI)
generation process

ST12200

Is digital
copy control descriptor
included in SI and
PSI ?

NO

YES ST12204

Extract digital copy control descriptor

ST12202

Set "copy free" in CCI,
and "no APS" in APS

ST12206

Set "copy free" and "copy never"
intact and "copy never" in place of
"copy once" in CCI Set analog copy
control value in APS

ST12208

Is contents
use descriptor included in
SI and PSI ?

NO

ST12210

Set ICT (resolution constraint) and EPN (Internet
output constraint)
 ICT : set permission
 EPN : digital broadcast inhibits Internet output : set
 0 (inhibition or encryption)
Set Retention = 0, and retention_state = 00

YES

ST12212

Extract contents use descriptor

ST12214

Set ICT (resolution constraint) and EPN (Internet output constraint)
 ICT : set values in SI and PSI
 EPN : digital broadcast inhibits Internet output : set 0 (inhibition or encryption)
Set value set in contents use descriptor in case of BS

Return

F I G. 56

FIG.57

Start

ST207
Load VMG

ST208
User determines playback start PG
(ORG_PGC, UD_PGC#1, UD_PGC#2)

ST211
Determine EVOB/ESOB to be played
back, its playback position, and PID to
be played back based on PG/PL_RSM_
IFO and CELLI

ST213
ESOB ? — NO

YES
ST215
ESOB
playback inhibited
? — YES

NO

ST217
Decoder setting process

ST220
Process upon cell playback

ST230
End of
playback ? — NO

ST232
Set next cell based
on PGCI

YES

ST240
Error ? — YES

NO
ST246
Another process upon completion of
playback

ST242
"Read error"

ST244
Playback end process

End

Return (error)

F I G. 58

76

```
        ( Decoder setting process )
ST2170
              < ESOB ? >  NO ──────────────────┐
                 │ YES        ST2171            │
          ┌──────────────────────────────┐     │
          │ Determine ES to be played back│     │
          │ based on GPI and PMT          │     │
          └──────────────────────────────┘     │
                 │           ST2172            │
          ┌──────────────────────────────┐◄────┘
          │ Load STI and ESI of EVOB/ESOB │
          │ to be played back             │
          └──────────────────────────────┘
                 │           ST2173
          < Does video
            ES to be played back >  NO ──────────────┐
              support playback ?                      │ ST2175
                 │ YES        ST2174A        ┌──────────────────────┐
          ┌──────────────────────────────┐  │ Set demultiplexer not│
          │ Set PID of video to be played │  │ to play back video   │
          │ back in demultiplexer with    │  │ Set display mute in  │
          │ reference to PMT              │  │ video decoder        │
          │ Set initial value in video    │  └──────────────────────┘
          │ decoder                       │           │
          └──────────────────────────────┘           │
  ┌─────────────────────┐    │           ST2176      │
  │ PMT is referred to  │◄───┤◄──────────────────────┘
  │ when PID is         │    │
  │ determined based    │  < Does audio
  │ on order in PMT     │    ES to be played back >  NO ──────────┐
  └─────────────────────┘    support playback ?                   │ ST2178
                 │ YES        ST2177A             ┌──────────────────────┐
          ┌──────────────────────────────┐       │ Set demultiplexer not│
          │ Set PID of audio to be played │       │ to play back audio   │
          │ back in demultiplexer with    │       │ Set mute in audio    │
          │ reference to PMT              │       │ decoder              │
          │ Set initial value in audio    │       └──────────────────────┘
          │ decoder                       │              │
          └──────────────────────────────┘              │
                 │                        ST2179         │
          ┌──────────────────────────────────────────────────────────────┐
          │ Make APS setting (APS=ON/OFF, APS type, etc) in video decoder │
          │ based on CCI                                                   │
          │ Make CGMSA setting in video decoder as digital copy control   │
          │ based on CCI                                                   │
          │ If digital output (IEEE1394, Internet, etc.) is available :    │
          │ set 0 : scramble on or output inhibition, 1 : direct output in │
          │ output IC based on EPN value If ICT=0, set output IC to        │
          │ constrain image resolution, and convert HD into SD; if ICT=1,  │
          │ set output IC to directly output                               │
          └──────────────────────────────────────────────────────────────┘
                                    │
                            ( Return )
```

F I G. 59

**Process upon cell playback**

ST2200
Determine cell start FP (LBN) and end
FP based on contents of ES_TMAPI
  Determine start SOBU_ENTRY and
  end SOBU_ENTRY based on start
  and end times in CI
  Accumulate ENTRY lengths up to
  target SOBU_ENTRY in ADR_OFS to
  obtain start address (LB=FP) and
  end address
Remaining cell length←end address –
start address, and set playback start
time in STC

ST2206
Set read start address and read length

ST2207
Read data length<
remaining cell length ?  NO

YES
ST2208
Remaining cell length←remaining cell
length – read data length
Set read length to be default

ST2209
Set read length in remaining cell length
Set remaining cell length to 0

ST2210
Set data read command in drive unit

ST2212
Transfer start ?  NO

YES
ST2214
Data for 1 ESOBU
stored in buffer RAM ?  NO

YES

ST2216
Read data for 1 ESOBU from
buffer RAM

ST2220
Buffer data decoder transfer
process

ST2224
Read FP←read FP + read length
Set MPEG decoder in normal mode

ST2226
Transfer end ?  NO

YES
ST2238
Angle SW pressed ?  NO

YES
ST2248
Skip SW pressed ?

YES
ST2250
SKIP process

NO
ST2258
Skip SW pressed ?  YES

NO
ST2260
Set current CELL number
and PTM in PG_RSM_IFO
in case of original title, or in
PL_RSM_IFO in case of PL

**RETURN (end)**

ST2239
GPI found ?  NO

YES
ST2240
GP switching setting process

ST2228
Remaining cell length
=0 ? (end of cell ?)  NO

YES
**Return**

F I G. 60

Buffer data decoder transfer process

ST22200

Check number of packet groups in buffer RAM
Set to process first packet group

ST22201

Read out target packet group header from buffer RAM
(Determine packet header by checking packet group length and Sync_Pattern)

ST22201A

Read value of VALID_PKT_Ns and read out TS packets as many as Ns

ST22202B

Fetch PATS (FIRST_PATS_EXT + PATS immediately before TS packet),
PATS_WRAPI (indicating if PATS=wrap-around), and PATS_SS (confirm
validity of PATS) and calculate output timing of each TS packet
Transfer TS packets to decoder according to output timing

ST22203

Transfer one packet group to decoder unit in correspondence with output
timing for each TS packet

ST22204

End of
transfer ?    NO

If STUF=1, transfer TS packets
as many as VALID_PKT_Ns

YES    ST22205

Make APS setting (APS=ON/OFF, APS type, etc) in video decoder based
on CCI. Make CGMSA setting in video decoder as digital copy control based
on CCI If digital output (1394, Internet, etc.) is available : set 0 : scramble on
or output inhibition, 1 : direct output in output IC based on EPN value
If ICT=0, set output IC to constrain image resolution, and convert HD into
SD; if ICT=1, set output IC to directly output

ST22270

MNF process

ST22280

Discontinue process

ST22206

Do pack
groups remain in buffer    YES
RAM ?

NO    ST22207

Set next pack group

F I G. 61

Return

Process upon GP switching

ST22400X
Specify SW type to be switched

ST22401X
Load GPI of GP, playback of which is in progress

ST22403X
GPI found ?
NO

YES
ST22405X
Switch to another GP : change PID to be played back to value in GPI

ST22410
Decoder setting process

Return

# F I G. 62

Discontinue process

ST22800
Read out DCNI

ST22802
Is CNT_SEG gap located at that position ?
NO

YES
ST22804
Make decoder shift playback mode to internal clock mode (shift to operation for ignoring PTS value, making playback using only internal clock value, and validating PTS again at the time of reception of PCR)

Return

# F I G. 63

SKIP process

↓ ST22500

Read out EPIT

↓ ST22502

Forward ? — NO

YES ↓ ST22504

Extract EP ahead of current playback position of CELLS of PG in current playback PGC

ST22506

Extract EP behind current playback position of CELLS of PG in current playback PGC

↓ ST22508

Determine ESOBU_ENT to be played back based on readout value

↓ ST22510

Read out ESOBU_ENT information

↓ ST22512

I-PIC found ? — NO

ST22514

Read out immediately preceding ESOBU ENT information

YES ↓

ST22516

Is SH found before I-PIC ? — NO

Check ESOBU_SH_I_EXIST_Flag (to next process if it is not available)

ST22518

Read out immediately preceding ESOBU_ENT information

YES ↓ ST22522

Load sequence header SH and set it in decoder

↓ ST22524

Set decoder to start decoding from found I-PIC, and to decode stream of designated PID so as to start display from time designated by EP

↓

Shift to playback process

ST22520

SH found ? — NO

YES

Check ESOBU_SH_EXIST_Flag

Set to load SH immediately before I-PIC if SH is changed in ESOBU
Check and set only ESOBU_SH_EXIST_Flag if SH is not changed in ESOBU

FIG. 64

81

| ESOBU1 | ESOBU2 |
|---|---|

ESOBU_SZ

ESOBU cannot be delimited by
P of 0.4s or less in middle of title

Recording order: I3 ··· P50 B4 ··· B30 | B31 ··· B49

Playback order: B1 B2 I3 B4 ··· B30 | B31 ··· B49 P50

ESOBU_PB_TM=1s

ESOBU of ESOBU1 includes P50, but ESOBU_PB_TM does not include P50

FIG. 65

**European Patent**
**Office**

## PARTIAL EUROPEAN SEARCH REPORT

which under Rule 45 of the European Patent Convention
shall be considered, for the purposes of subsequent
proceedings, as the European search report

**Application Number**

EP 05 10 7726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 150 504 A (SONY CORPORATION) 31 October 2001 (2001-10-31) * abstract * * paragraphs [0133], [0134] * * paragraphs [0153] - [0167] * ----- | 1-7 | G11B27/10 G11B27/30 |
| D,A | PATENT ABSTRACTS OF JAPAN vol. 2002, no. 07, 3 July 2002 (2002-07-03) & JP 2002 084479 A (MATSUSHITA ELECTRIC IND CO LTD), 22 March 2002 (2002-03-22) * abstract * ----- | 1-7 | |
| P,A | EP 1 553 768 A (KABUSHIKI KAISHA TOSHIBA) 13 July 2005 (2005-07-13) * the whole document * ----- | 1-7 | |
| P,A | EP 1 486 980 A (KABUSHIKI KAISHA TOSHIBA) 15 December 2004 (2004-12-15) * the whole document * ----- | 1-7 | |

| | |
|---|---|
| | TECHNICAL FIELDS SEARCHED (IPC) |
| | G11B |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 9 December 2005 | Valencia, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

European Patent
Office

INCOMPLETE SEARCH
SHEET C

Application Number

EP 05 10 7726

Claim(s) searched incompletely:
     1-7

Reason for the limitation of the search:

The application claims a storage medium, a playback method, a recording apparatus and a playback apparatus. The embodiments provided in the description of the present application to support the claims are not sufficiently disclosed to carry out a meaningful complete search, Rule 27(1e) and Article 83 EPC.
The embodiments introduce a structure, called "DVD_HDVR" (see page 12 lines 23-25 and figures 3,4,7, 8, 10, 11, 25, 34) by reference to a DVD structure ("DVD-RAM, page 1 line 25, "DVD recorder" page 11 line 18, "DVD format" page 11 line 34, "DVD disc" page 12 line 4 and figure 1, "in correspondence with formats (e.g. VIDEO-TS for DVD-VIDEO (ROM Video) and DVD-RTAV for DVD-RTR (recordable/reproducible DVD)" page 12 lines 19-22).
The contribution of the present application is entirely based on previous DVD formats (page 12 lines 20-24) and the claimed substructures  for "indicating the validity/invalidity of information associated with a reception time of the digital stream" (claim 1) are only defined within the application with reference to structures of a DVD system (ESOB, not sufficiently disclosed but merely illustrated see figures 1,2, containing ESOBU, including the PKT_ structures, see page 13 lines 2-29, themselves depending on the "DVD BOOK", see page 14 line 28).
The DVD specifications for VIDEO-TS for DVD-VIDEO (ROM Video) and DVD-RTAV for DVD-RTR (recordable/reproducible DVD) are therefore necessary to carry out the implementation of the claimed medium, method and apparatus. These specifications are sold under a Non Disclosure Agreement and are therfore not part of the prior art in the sense of Article 54(2) and (2) EPC. The description is therefore not sufficiently disclosed to perform a complete meaningful search, because these standards are at least very relevant prior art if not the closest prior art, and they cannot be searched and cited in the search report.

## ANNEX TO THE EUROPEAN SEARCH REPORT
## ON EUROPEAN PATENT APPLICATION NO.

EP 05 10 7726

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2005

| Patent document cited in search report | | Publication date | Patent family member(s) | | Publication date |
|---|---|---|---|---|---|
| EP 1150504 | A | 31-10-2001 | CN<br>US | 1323139 A<br>2002003948 A1 | 21-11-2001<br>10-01-2002 |
| JP 2002084479 | A | 22-03-2002 | NONE | | |
| EP 1553768 | A | 13-07-2005 | CN<br>JP<br>US | 1664945 A<br>2005196893 A<br>2005152256 A1 | 07-09-2005<br>21-07-2005<br>14-07-2005 |
| EP 1486980 | A | 15-12-2004 | CN<br>JP<br>US | 1625243 A<br>2004364056 A<br>2005019016 A1 | 08-06-2005<br>24-12-2004<br>27-01-2005 |

EPO FORM P0459

For more details about this annex : see Official Journal of the European Patent Office, No. 12/82